# EUROPEAN PATENT APPLICATION

(11) **EP 4 823 085 A2**
(43) Date of publication of application: **14.10.2026**
(21) Application number: 26194546.3
(22) Date of filing: 08.08.2024
(51) Int. Cl.: H04N 1/409

(54) **IMAGE PROCESSING APPARATUS, METHOD, PROGRAM, AND NON-TRANSITORY COMPUTER-READABLE STORAGE MEDIUM STORING PROGRAM**

(30) Priority: 10.08.2023 JP 2023131465
(62) Document number(s) of the earlier application(s) in accordance with Art. 76 EPC: 24193542.8 / 4 507 288
(71) Applicant: Canon Kabushiki Kaisha, Tokyo 146-8501 (JP)
(72) Inventor: KOBAYASHI, Daisuke, Tokyo 146-8501 (JP); TANAKA, Hirokazu, Tokyo 146-8501 (JP); DOI, Tsukasa, Tokyo 146-8501 (JP); YAMAGATA, Mayuko, Tokyo 146-8501 (JP); KOMAMIYA, Eiji, Tokyo 146-8501 (JP); MIZOGUCHI, Yoshinori, Tokyo 146-8501 (JP); YAMADA, Akitoshi, Tokyo 146-8501 (JP)
(74) Representative: TBK

(57) **Abstract**

The print means includes first print means configured to be able to print a dot in a first region of each pixel of the object, and second print means configured to be able to print a dot in a second region of each pixel of the object. As a result of the processing by the dot arrangement means, in first edge pixels in a first edge portion of the object, a ratio of arranging dots in the second regions is lower than a ratio of arranging dots in the first regions, and in second edge pixels in a second edge portion different from the first edge portion of the object, a ratio of arranging dots in the first regions is lower than a ratio of arranging dots in the second regions.

## Description

### BACKGROUND OF THE INVENTION

### Field of the Invention

The present invention relates to an image processing apparatus, a method, a program, and a non-transitory computer-readable storage medium storing a program.

### Description of the Related Art

There is generally known a technique (to be referred to as edge processing hereinafter) of changing print processing by detecting the edges of an image to improve the sharpness of a printed character or line in a printing apparatus for printing a color material on a print medium. Japanese Patent Laid-Open No. 2020-52872 discloses a technique of changing print dots inside edge pixels to reduce a deterioration in image quality caused by bleeding of printed ink on a print medium in an inkjet printing apparatus.

### SUMMARY OF THE INVENTION

It is necessary to further improve image quality in edge portions of an object.

The present invention provides an image processing apparatus for further improving image quality in edge portions of an object, a method, a program, and a non-transitory computer-readable storage medium storing a program.

The present invention in its first aspect provides an image processing apparatus as specified in claims 1 to 34.

The present invention in its second aspect provides a method as specified in claim 35.

The present invention in its third aspect provides a program as specified in claim 36.

The present invention in its fourth aspect provides a non-transitory computer-readable storage medium as specified in claim 37.

The present invention in its fifth aspect provides an image processing apparatus as specified in claim 38.

According to the present invention, it is possible to further improve image quality in edge portions of an object.

Further features of the present invention will become apparent from the following description of exemplary embodiments with reference to the attached drawings.

### BRIEF DESCRIPTION OF THE DRAWINGS

Fig. 1 is a view showing the configuration of a printing apparatus;
Figs. 2A and 2B are a view and a block diagram showing a configuration including an image processing apparatus;
Figs. 3A and 3B are flowcharts illustrating processing of an image processing unit;
Figs. 4A to 4C are views for explaining edge pattern detection;
Fig. 5 is a view for explaining pattern matching;
Fig. 6 is a flowchart illustrating processing of the image processing unit;
Figs. 7A to 7C are a flowchart, a table, and a graph showing processing of the image processing unit;
Figs. 8A to 8D are views for explaining index expansion processing;
Figs. 9A to 9C are views showing the configuration of a printhead;
Figs. 10A to 10G are views for explaining data having undergone each process of the image processing unit;
Figs. 11A to 11E are views for explaining data having undergone each process of the image processing unit;
Figs. 12A to 12D are flowcharts and views showing processing of the image processing unit;
Figs. 13A to 13E are views for explaining data having undergone each process of an image processing unit;
Figs. 14A to 14H are views for explaining data having undergone each process of an image processing unit;
Figs. 15A to 15G are views for explaining data having undergone each process of an image processing unit;
Figs. 16A to 16C are flowcharts and a view showing processing of the image processing unit;
Figs. 17A and 17B are flowcharts illustrating processing of an image processing unit;
Figs. 18A to 18C are a graph and views for explaining data having undergone each process of the image processing unit;
Figs. 19A to 19F are views for explaining data having undergone each process of the image processing unit;
Figs. 20A to 20C are a graph and views for explaining data having undergone each process of the image processing unit;
Figs. 21A to 21D are views for explaining index expansion processing;
Figs. 22A and 22B are views for explaining the index expansion processing;
Figs. 23A to 23D are views for explaining index expansion processing;
Figs. 24A to 24F are views for explaining data having undergone each process of an image processing unit;
Figs. 25A to 25C are views for explaining index expansion processing;
Figs. 26A and 26B are flowcharts illustrating processing of the image processing unit;
Figs. 27A to 27F are views for explaining data having undergone each process of the image processing unit;
Figs. 28A to 28D are views for explaining data having undergone each process of the image processing unit;
Figs. 29A and 29B are flowcharts illustrating processing of an image processing unit;
Figs. 30A to 30C are views for explaining data having undergone each process of the image processing unit;
Figs. 31A and 31B are flowcharts illustrating processing of the image processing unit;
Figs. 32A to 32D are views for explaining data having undergone each process of the image processing unit;
Figs. 33A to 33C are block diagrams and a table showing a configuration including an image processing apparatus;
Figs. 34A to 34C are a flowchart and tables showing processing of an image processing unit;
Figs. 35A to 35D are views for explaining the configuration of the image processing unit;
Figs. 36A to 36C are tables and a view for explaining the configuration of the image processing unit;
Figs. 37A to 37D are views for explaining the configuration of the image processing unit; and
Figs. 38A and 38B are views showing end pixel groups.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### [First Embodiment]

### <Structure of Printing Apparatus>

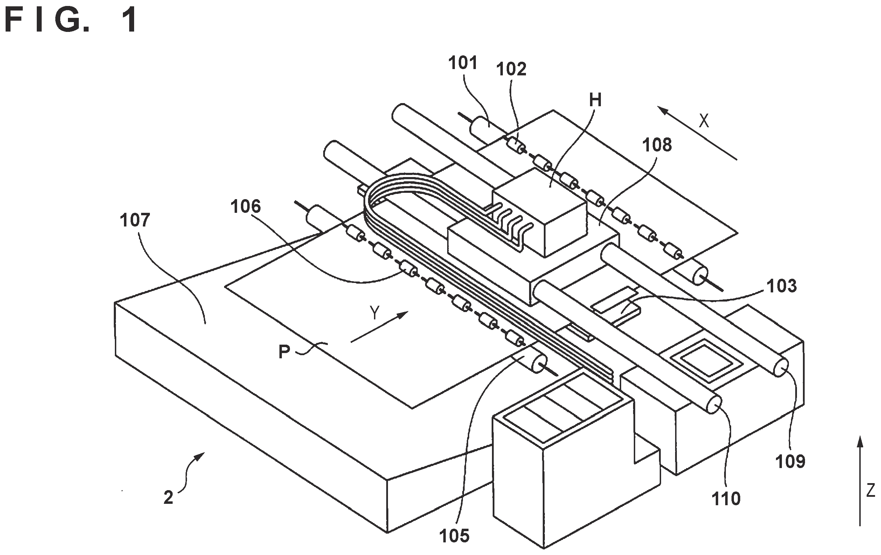

The structure of a printing apparatus according to this embodiment will be described below with reference to Fig. 1. Fig. 1 is a perspective view showing an overview of a print unit in a printing apparatus 2 (to be also simply referred to as a printing apparatus or a printer hereinafter). A print medium P (to be also simply referred to as a print medium hereinafter) fed to the print unit is conveyed in the -Y direction (sub-scanning direction) by a nip portion between a conveyance roller 101 arranged on a conveyance path and a pinch roller 102 driven by the conveyance roller 101 along with the rotation of the conveyance roller 101. A platen 103 is provided at a print position facing a surface (nozzle surface) on which nozzles of a printhead H adopting an inkjet printing method are formed, and maintains the distance between the front surface of the print medium P and the nozzle surface of the printhead H constant by supporting the back surface of the print medium P from below. The print medium P whose region is printed on the platen 103 is conveyed in the -Y direction along with the rotation of the discharge roller 105 while being nipped by a discharge roller 105 and a spur 106 driven by the discharge roller 105, and is then discharged to a discharge tray 107.

The printhead H is detachably mounted on a carriage 108 in a posture that the nozzle surface faces the platen 103 or the print medium. The carriage 108 is moved reciprocally in the X direction as the main scanning direction along two guide rails 109 and 110 by the driving force of a carriage motor (not shown). In the process of the movement, the printhead H executes a discharge operation according to a discharge signal. The ±X direction in which the carriage 108 moves is a direction orthogonal to the -Y direction in which the print medium is conveyed, and is called the main scanning direction. To the contrary, the -Y direction of conveyance of the print medium is called the sub-scanning direction. By alternately repeating main scanning (movement with a discharge operation) of the carriage 108 and the printhead H and conveyance (sub-scanning) of the print medium, an image is formed stepwise on the print medium P. The contents of the structure of the printing apparatus according to this embodiment have been described.

### <Structure of Printhead>

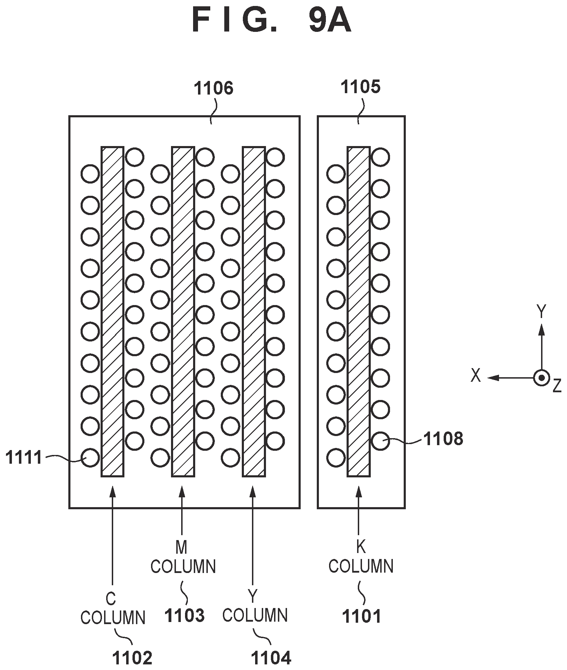

The structure of the printhead according to this embodiment will be described below with reference to Figs. 9A to 9C. Figs. 9A to 9C are schematic views of the printhead H used in this embodiment when viewed from the upper surface of the printing apparatus. The printhead H includes print chips 1105 and 1106, and each print chip receives a print signal from the main body of the printing apparatus via a contact pad (not shown), and is supplied with power necessary to drive the printhead. As shown in Fig. 9A, on the print chip 1105, a nozzle array 1101 (to be also referred to as a black nozzle array hereinafter) in which a plurality of nozzles for discharging black ink are arrayed in the Y direction is arranged. Similarly, on the print chip 1106, a nozzle array 1102 for discharging cyan ink, a nozzle array 1103 for discharging magenta ink, and a nozzle array 1104 for discharging yellow ink are arranged.

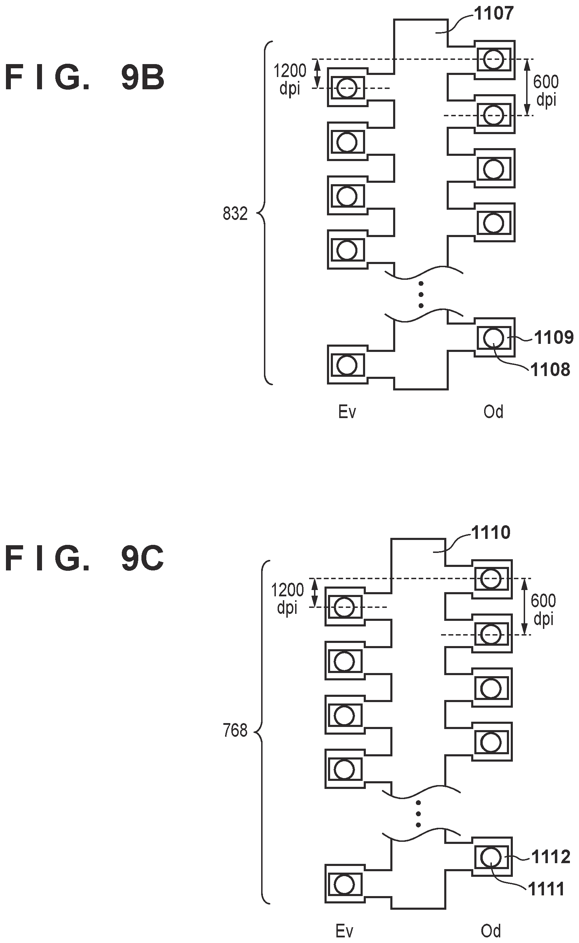

Fig. 9B is an enlarged view of the black nozzle array 1101. Fig. 9C is an enlarged view of one nozzle array among the nozzle arrays 1102, 1103, and 1104, that is, three nozzle arrays of cyan, magenta, and yellow in total. This enlarged view is common to color inks. Nozzles 1108 or 1111 for discharging ink are arranged on two sides of an ink liquid chamber 1107 or 1110. A discharge heater 1109 or 1112 is arranged immediately below each nozzle (on the +Z direction side). When the heater 1109 or 1112 is applied with a voltage, it generates heat to generate a bubble, thereby causing the corresponding nozzle to discharge ink. There are arranged 832 nozzles 1108 and 768 nozzles 1111. Each nozzle 1108 discharges black ink, and an Ev column and an Od column each formed by arraying the nozzles 1108 at a pitch of 600 dpi in the Y direction are arranged. The Ev column is arranged by being shifted by a half pitch in the -Y direction with respect to the Od column. By performing print scanning using the black nozzle array 1101 having the above configuration, the print medium can be printed with a print density of 1,200 dpi. Each of the cyan nozzle array 1102, the magenta nozzle array 1103, and the yellow nozzle array 1104 has the same configuration as that of the black nozzle array 1101.

Note that the printhead H of this embodiment has a configuration including the print chip with the black nozzle array and the print chip with the cyan nozzle array, the magenta nozzle array, and the yellow nozzle array but the present invention is not limited to this configuration. More specifically, all the black nozzle array, the cyan nozzle array, the magenta nozzle array, and the yellow nozzle array may be mounted on one chip. Alternatively, a printhead on which a print chip with a black nozzle array is mounted may be separated from a printhead on which a print chip with a cyan nozzle array, a magenta nozzle array, and a yellow nozzle array is mounted. Alternatively, a black nozzle array, a cyan nozzle array, a magenta nozzle array, and a yellow nozzle array may be mounted on different printheads, respectively. Furthermore, the printhead H of this embodiment adopts a so-called bubble jet method of discharging ink by applying a voltage to a heater to generate heat but the present invention is not limited to this. More specifically, a configuration of discharging ink using electrostatic actuators or piezoelectric elements may be used. The contents of the structure of the printhead according to this embodiment have been described above.

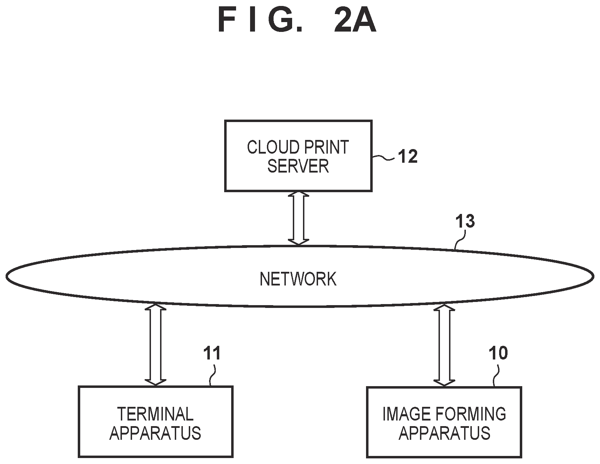

Fig. 2A is a view showing an example of the configuration of a printing system including an image forming apparatus 10 on which the printing apparatus 2 is mounted. As an example, Fig. 2A shows a cloud print system in which a terminal apparatus 11, a cloud print server 12, and the image forming apparatus 10 are connected via a network 13. The cloud print server 12 is a server apparatus that provides a cloud print service. That is, in the configuration shown in Fig. 2A, the image forming apparatus 10 is a printer supporting cloud printing. The network 13 is a wired network, a wireless network, or a network including both of them. As the network 13, for example, an Internet, WAN, or VPN environment is assumed. However, the printing system is not limited to the cloud print system. For example, the network 13 may be formed as an office LAN or the terminal apparatus 11 and the image forming apparatus 10 may directly be connected without intervention of the network 13. Fig. 2A shows one terminal apparatus 11 and one image forming apparatus 10 but a plurality of terminal apparatuses 11 and a plurality of image forming apparatuses 10 may be provided. The cloud print server 12 may be a server system formed by a plurality of information processing apparatuses. The printing system may be a cloud print system in which a plurality of cloud print services cooperate with each other.

The terminal apparatus 11 is an information processing apparatus such as a PC, a tablet, or a smartphone, and a cloud printer driver for a cloud print service is installed in the terminal apparatus 11. A user can execute arbitrary application software on the terminal apparatus 11. For example, a print job and print data are generated via the cloud printer driver based on image data generated on the print application. The print job and the print data are transmitted, via the cloud print server 12, to the image forming apparatus 10 registered in the cloud print service. The image forming apparatus 10 is a device that executes printing on a print medium such as a sheet, and prints an image on the print medium based on the received print data.

### <Configuration of Control System>

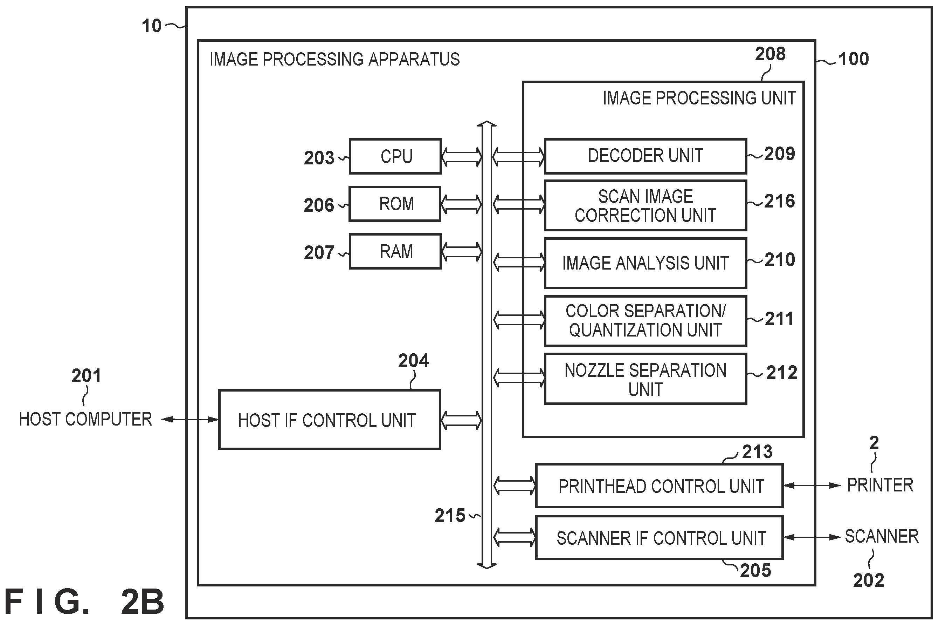

The configuration of a control system according to this embodiment will be described below with reference to Fig. 2B. Fig. 2B is a schematic block diagram of an image processing apparatus 100. This embodiment assumes that the image processing apparatus 100 is included in the image forming apparatus 10. However, the image processing apparatus 100 may be formed as an apparatus connected to the image forming apparatus 10 including the printer 2 and a scanner 202. For example, the image processing apparatus 100 may be formed in a host computer 201. In this case, the image processing apparatus 100 need not include a printhead control unit 213 or a scanner IF control unit 205.

The host computer 201 is an information processing apparatus that, for example, creates a print job formed from input image data and print condition information necessary for printing, and corresponds to, for example, the terminal apparatus 11 shown in Fig. 2A. Note that the print condition information is information concerning the type and size of a print sheet, print quality, and the like.

The scanner 202 is a scanner device connected to the image processing apparatus 100, and converts analog data, generated by optically reading a document placed on a scanner table, into digital data via an A/D converter. Reading by the scanner 202 is executed when the host computer 201 transmits a scan job to the image processing apparatus 100 but the present invention is not limited to this. A dedicated UI apparatus connected to the scanner 202 or the image processing apparatus 100 can substitute for the scanner 202.

A ROM 206 is a readable memory that stores a program for controlling the image processing apparatus 100. A CPU 203 controls the image processing apparatus 100 by executing the program stored in the ROM 206. A host IF control unit 204 communicates with the host computer 201, receives a print job or the like, and stores the print job in a RAM 207. The RAM 207 is a readable/writable memory used as a program execution area or a data storage area.

An image processing unit 208 generates printable nozzle data separated for each nozzle from input image data stored in the RAM 207 in accordance with a print condition included in a print job. The generated nozzle data is stored in the RAM 207. The image processing unit 208 includes a decoder unit 209, a scan image correction unit 216, an image analysis unit 210, a color separation/quantization unit 211, and a nozzle separation processing unit 212.

The printhead control unit 213 generates print data based on the nozzle data stored in the RAM 207, and controls the printhead H within the printer 2. A shared bus 215 is connected to each of the CPU 203, the host IF control unit 204, the scanner IF control unit 205, the ROM 206, the RAM 207, and the image processing unit 208. These connected units can communicate with each other via the shared bus 215. The contents of the configuration of the control system according to this embodiment have been described above.

### <Overall Procedure>

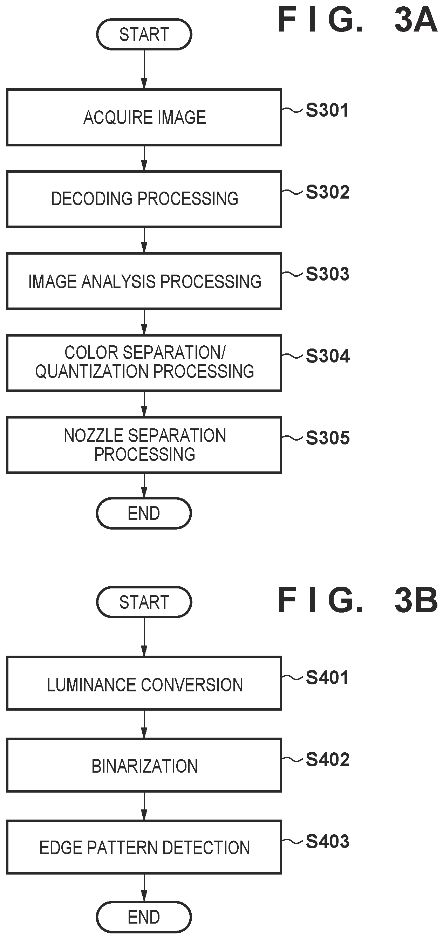

The procedure of edge processing according to this embodiment will be described below. Fig. 3A is flowchart illustrating processing executed by the image processing unit 208 according to this embodiment. In this embodiment, with the processing shown in Fig. 3A, input image data can be converted into nozzle data.

In step S301, the image processing unit 208 acquires input image data from the RAM 207. In step S302, the decoder unit 209 performs decoding processing of the acquired input image data. The saving format of the input image data varies, and a compression format such as JPEG is generally used to decrease a communication amount between the host computer 201 and the image processing apparatus 100. In a case where the saving format is JPEG, the decoder unit 209 decodes JPEG and converts it into a bitmap format (an information format that records an image as continuous pixel values). In a case where the host computer 201 communicates with the image processing apparatus 100 via a dedicated driver or the like, a dedicated saving format may be handled. In a case where a dedicated saving format convenient for both the driver and the image processing apparatus 100 is held, the decoder unit 209 can perform conversion into the dedicated saving format. In accordance with, for example, the characteristic of an inkjet printing apparatus, saving formats with different compression ratios can be applied to a region where information is desirably held at fine accuracy and other regions. If it is desirable to focus on image quality instead of decreasing the communication amount, the input image data may be in the bitmap format. In this case, the decoder unit 209 need only output the bitmap format intact as a conversion result.

In step S303, the image analysis unit 210 executes image analysis using the bitmap image as a decoding result. In this embodiment, by executing image analysis, it is estimated based on a feature in the image whether a target pixel is paper white or in an end portion with a pixel formed by ink different from the target pixel. In addition, an end portion, where the target pixel exists, in a specific direction among the upper, lower, left, and right directions in a shape formed by a pixel group is estimated.

Fig. 3B shows the internal processing procedure of the image analysis processing executed in step S303. In step S401, the image analysis unit 210 converts the bitmap image as a decoding result into luminance values. For example, if the bitmap image data is information of three channels of R, G, and B, the bitmap image data is converted into one channel of luminance Y. Note that if the image data transmitted from the user by the application is already represented by a luminance, step S401 need not be executed.

In step S402, the image analysis unit 210 converts data of the luminance Y into binary data for edge detection. In this embodiment, as an example, by using threshold data Th provided in advance in correspondence with a print mode of the printer, the image analysis unit 210 converts the data into binary data (Bin) by conditional expression (1) below. The binary data generation expression is merely an example, and the design of an inequality condition and the form of an expression are not limited to this.

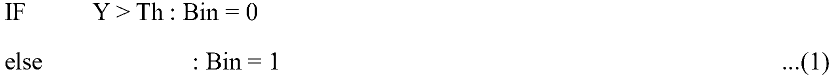

In this embodiment, image analysis is executed using an index of a luminance. In the inkjet printing apparatus, a tone at which black ink is used in color separation is limited. This is because the paper surface density of black ink largely changes for each drop with respect to paper white, and thus image quality readily deteriorates in terms of graininess by frequently using black ink from a low tone. Therefore, it is easy to determine the generation position of black ink based on the luminance information of the input image, as compared with other color inks. By setting the above threshold data Th to an appropriate value, it is possible to set, in the luminance information, a luminance value corresponding to a tone from which black ink is ejected by a predetermined amount or more after ink separation. In this embodiment, it is possible to control the number and arrangement of dots of black ink and the number and arrangement of dots of other color inks adjacent to black ink, and the use of the luminance value is under the control. However, this embodiment is not limited to this. For example, color separation may be executed in advance for the analysis processing and a pixel where black ink is generated as a predetermined color component may correctly be grasped. If color separation is executed in advance, pixels where cyan, magenta, and yellow inks are generated in addition to black ink and discharge amounts of the inks can be grasped, thereby making it possible to perform more detailed analysis. The input image data may be in the CMYK format or the like instead of the RGB format, and may include information effective for analysis when it is the input image data. If the discharge amounts of cyan, magenta, and yellow inks are known, when the discharge amounts are small, color may be considered equivalent to paper white, and determination such as analysis of black ink generated in a region corresponding to paper white on the paper surface may be executed. In this embodiment, the determination is expressed by the threshold data Th. The threshold data Th may appropriately be updated in accordance with the degree of consumption of each nozzle of the nozzle arrays 1101 to 1104 of the printhead in the printing apparatus.

In step S403, the image analysis unit 210 executes edge pattern detection using the binary data.

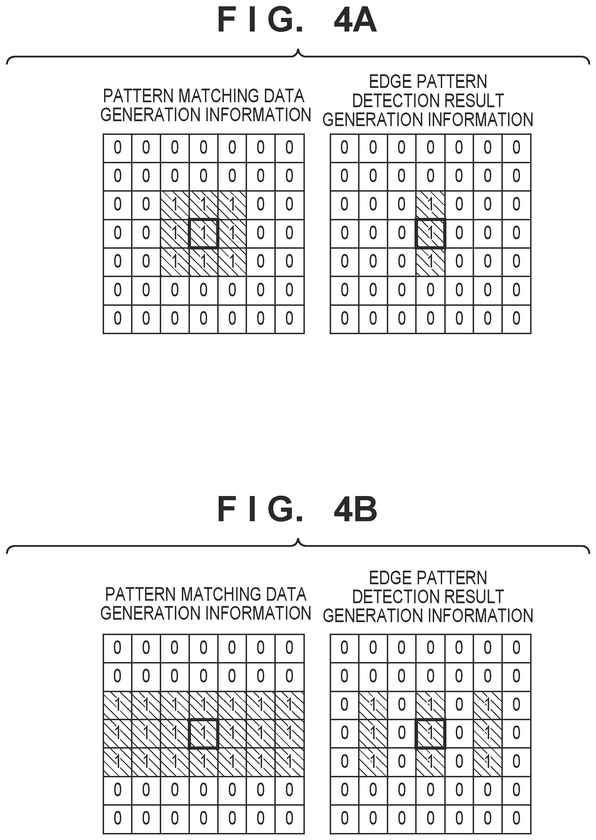

Figs. 4A and 4B each show an example of pattern information for edge pattern detection. The pattern information includes two types of information, that is, "pattern matching data generation information" and "edge pattern detection result generation information". The pattern matching data generation information is obtained by executing bit AND processing for each pixel in a rectangular region of the binary data obtained in step S402. Pattern matching data obtained as a result of the bit AND processing is obtained by extracting only information necessary to detect an edge pattern from the rectangular region. The edge pattern detection result generation information is information for executing pattern matching processing for the pattern matching data. If a complete match is obtained as a result of the pattern matching processing, the rectangular region is determined as a predetermined edge pattern. The determination result is linked with the central pixel in the rectangular region.

Fig. 4A shows pattern information for determining that a target pixel is "in a left/right end portion of a 1-dot vertical line". The pattern matching data generation information is set with values so as to perform edge pattern detection for 3 × 3 pixels including the target pixel. A pixel added with "0" in the pattern matching data generation information is regarded as a pixel that is not considered in pattern matching regardless of how the binary data is formed. Next, the edge pattern detection result generation information corresponds to the above-described predetermined edge pattern, and is, in this example, a pattern in which only three pixels in a central vertical column among the 3 × 3 pixels are set with 1. This information corresponds to determination of whether the three pixels in the central vertical column have low luminance and the remaining six pixels have high luminance. If pattern matching data completely matches this pattern, it is found that there exists a high-luminance characteristic = paper white or low-density color ink at least on the left and right sides and there exists a low-luminance characteristic = black ink in the target pixel and the upper and lower pixels thereof.

Fig. 4B shows pattern information for determining that the target pixel is not only "in the left/right end portion of a 1-dot vertical line" but also "in a part of 1 dot/1 space". "1 dot/1 space" indicates a pattern in which a plurality of 1-dot vertical lines are arranged at an interval of 1 dot. By widening the range of the pattern matching data generation information to 7 × 3 pixels, information concerning the periphery of the 1-dot line to which the target pixel belongs can be included for determination.

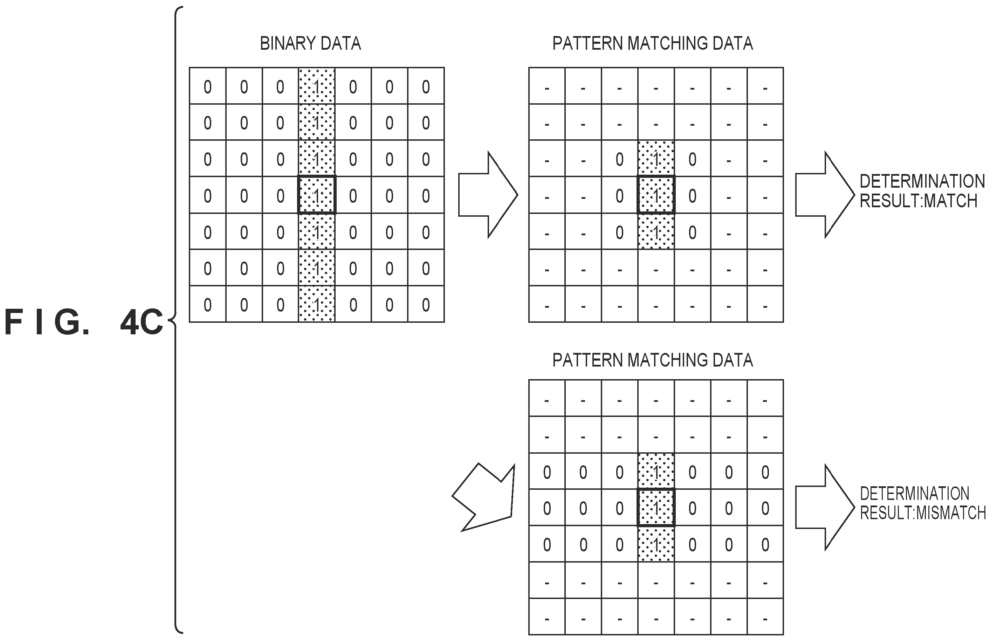

Fig. 4C shows a result of successively performing pattern matching for the binary data using Fig. 4A or 4B. When applying the pattern matching data generation information and the edge pattern detection result generation information shown in Fig. 4A to the target binary data, a determination result is determined as "match". When applying the pattern matching data generation information and the edge pattern detection result generation information shown in Fig. 4B to the target binary data, a determination result is determined as "mismatch". Based on the two pattern detection results, it is found that the binary data is "in the left/right end portion of a 1-dot vertical line" but "not in a part of 1 dot/1 space".

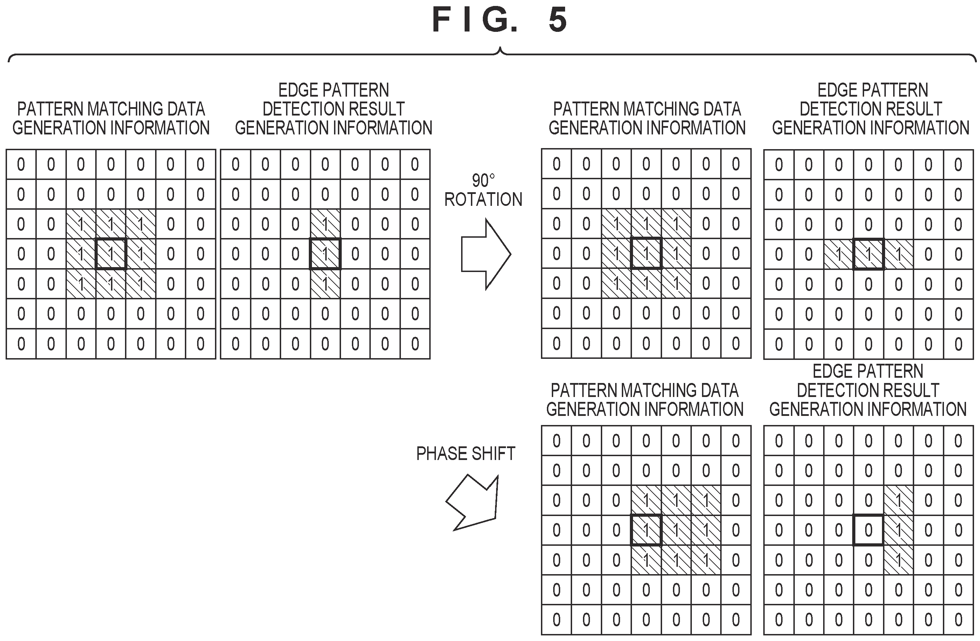

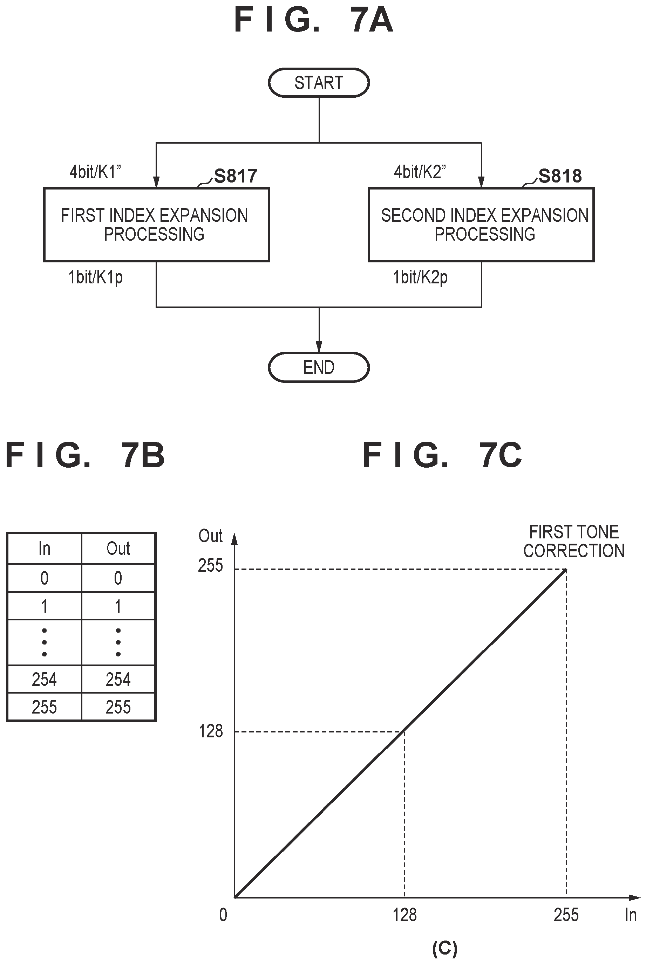

Based on the above-described method, it is possible to detect various edge patterns. In this embodiment, 7 × 7 pixels are set as the target of pattern matching, but this is merely an example. If, for example, it is only necessary to be able to detect the pattern shown in Fig. 4A or 4B, 7 × 3 pixels suffice as the target of pattern matching. On the other hand, if it is desirable to individually detect a line shape of a 4- or more-dot line, 7 × 7 pixels are insufficient and a wider region may be set as a target. By widening the target range, a work memory for holding binary data to be compared and a work memory for holding pattern matching information are required more. The work memory corresponds to the RAM 207. In a case where the image analysis unit 210 is implemented as a dedicated circuit, when it is desirable to process a plurality of pixels by performing pattern matching by a parallel clock, the numbers of processing registers and processing circuits increase. Furthermore, since it is necessary to hold in advance the pattern matching information in the ROM 206 of the image processing apparatus 100, the capacity of the ROM 206 is also required. If the edge pattern is finely and diversely confirmed, more pattern matching information needs to be held, and thus it is necessary to perform design in consideration of the memory capacity and an increase in analysis time caused by an increase in number of times of comparison. Making determination of "0" in the pattern matching data generation information = "not considered in pattern matching" contributes to a decrease in memory capacity and a decrease in number of times of comparison. As another configuration for decreasing the memory capacity, as shown in Fig. 5, it is also possible to perform pattern matching of another variation by processing such as rotation or phase shifting. On the upper side of Fig. 5, the pattern matching information shown in Fig. 4A is rotated by 90°, and it is possible to determine that the target pixel is "in the upper/lower end portion of a 1-dot horizontal line" using the processed pattern information. On the lower side of Fig. 5, the pattern information shown in Fig. 4A is horizontally shifted by 1 pixel, and it is possible to determine that the target pixel is "an adjacent pixel of a 1-dot vertical line" using the processed pattern matching information. In Fig. 5, variations are increased by processing the pattern matching information. However, variations can be increased by processing the binary data.

As shown in Fig. 4C, it is effective to narrow a determination result by successively applying a plurality of pieces of pattern matching information and to obtain information that is not known by individual pattern matching information. For example, when "match" with the pattern shown in Fig. 4A is determined in Fig. 4C, it may be unnecessary to perform determination with respect to a 2- or more-dot line prepared in advance. An effect of decreasing the number of times of comparison is obtained by applying only the pattern matching information for determining more detailed information of the 1-dot line, as shown in Fig. 4B. By applying Fig. 4A or 4B, it is found that the target binary data is "in the left-right end portion of a 1-dot vertical line" and "not in a part of 1 dot/1 space". Not by preparing obtainable individual pattern matching information but by deriving that information from the results of Figs. 4A and 4B, an effect of reducing the memory capacity is obtained.

As described above, in this embodiment, it is possible to determine whether the target pixel is a pixel to undergo special processing such as processing of thinning dots or processing of changing the arrangement of dots. This processing is merely an example, and an example in a case where there are more restrictions on the memory/speed of the image processing apparatus 100 will be described later in another embodiment.

The determination result of the image analysis processing in step S303 is output in an information format suitable for processing in a subsequent step. For example, the determination result can be expressed by 3-bit multi-valued data such as non-detection (non-appropriate for any detection pattern) = 0, upper end portion detection = 1, lower end portion detection = 2, left end portion detection = 3, right end portion detection = 4, and adjacent to one of end portions = 5. Alternatively, expression of assignment of each bit within 5 bits is also possible, such as non-detection = 00000, upper end portion detection = 00001, lower end portion detection = 00010, left end portion detection = 00100, right end portion detection = 01000, and adjacent to one of end portions = 10000. The former can transmit the determination result to the next processing with a small data amount. The latter has a merit of reducing the processing load since bit processing can be used in the next processing. It has been explained that the five pieces of information are transmitted to the subsequent step. However, as described in step S303 that "the pattern matching information can be diversely expressed", information more than control information necessary for the subsequent processing steps may be detected and transmitted.

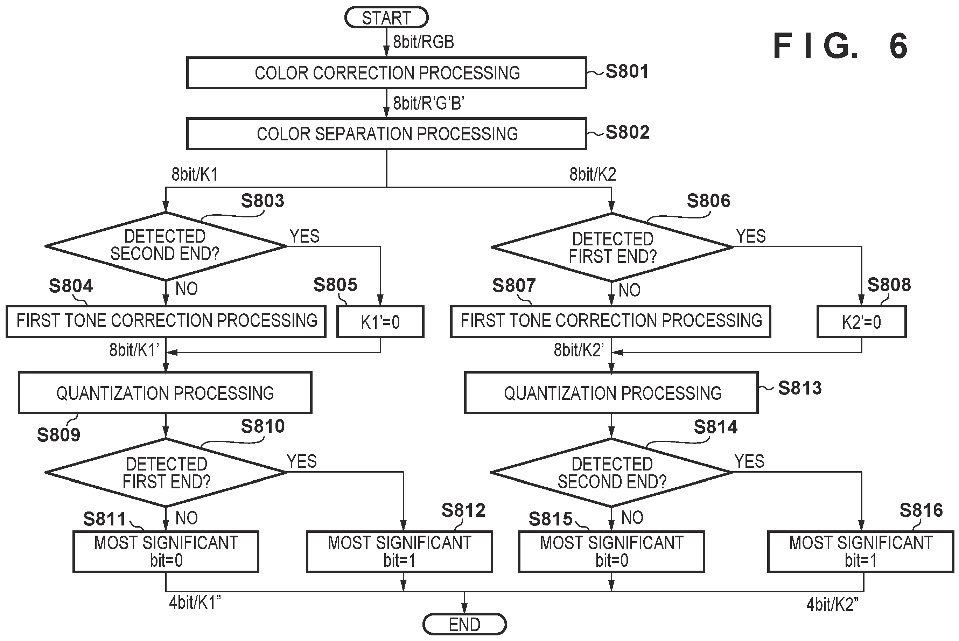

Figs. 6 and 7A show an example of the internal processing procedure of color separation/quantization processing executed in step S304 and nozzle separation processing executed in step S305. Note that the following description assumes that the bitmap image as the decoding result of step S302 includes pixels that are arrayed at 600 dpi and each of which has a 8-bit, 256-level luminance value for each of R (red), G (green), and B (blue). In the end portion information detected in step S303, the upper end portion (first end portion), the lower end portion (second end portion), the right end portion (fourth end portion), and the left end portion (third end portion) are defined as pixels that change from 1 to 0 in Bin in the -Y direction, the +Y direction, the +X direction, and the -X direction, respectively, and are on the side of Bin = 1. Since nozzles of each color of the printhead H are arranged at 1,200 dpi in the Y direction, each pixel is printed using a nozzle (to be referred to as an Ev nozzle hereinafter) of the Ev column and a nozzle (to be referred to as an Od nozzle hereinafter) of the Od column. At this time, the nozzle located on the upper end side of each pixel is defined as an upstream side nozzle, and the nozzle located on the lower end side of each pixel is defined as a downstream side nozzle. In this embodiment, assume that the upstream side nozzle corresponds to the Ev nozzle and the downstream side nozzle corresponds to the Od nozzle. That is, in this embodiment, the configuration has a print resolution that is twice, in the Y direction, the resolution of the image data to undergo edge pattern detection.

In color correction processing in step S801, the color separation/quantization unit 211 converts RGB data of each pixel into R'G'B' data expressed in a color space unique to the printing apparatus. As a detailed conversion method, for example, conversion can be performed by referring to a lookup table stored in advance in the memory.

In step S802, the color separation/quantization unit 211 performs color separation processing for the R'G'B' data. More specifically, with reference to a lookup table stored in advance in the memory, the luminance values R', G', and B' of each pixel are converted into 8-bit, 256-level density values C, M, Y, and K corresponding to ink colors used by the printing apparatus. Furthermore, the color separation/quantization unit 211 copies the density value data of one or more colors of C, M, Y, and K, thereby generating two coincident data in total. For the sake of simplicity, an example of generating black data K1 and K2 will be described. Note that K1 and K2 are adapted to the Ev nozzles and the Od nozzles of the black nozzle array 1101, respectively, by processing (to be described later).

In steps S803 to S805, the color separation/quantization unit 211 performs different tone correction processing based on whether the processed pixel is in the second end portion using the density value K1 and the result determined in step S303. In steps S806 to S808, the color separation/quantization unit 211 performs different tone correction processing based on whether the processed pixel is in the first end portion using the density value K2 and the result determined in step S303. The tone correction processing is such correction that the input density value and an optical density expressed by the print medium P have a linear relationship. This correction processing converts the 8-bit, 256-level density values K1 and K2 into 8-bit, 256-level density values K1' and K2'. If it is detected in step S303 that the pixel is in the second end portion, the density value K1 is converted into K1' = 0 in step S805; otherwise, the density value K1 is converted into K1' by the first tone correction processing in step S804. On the other hand, if it is detected in step S303 that the pixel is in the first end portion, the density value K2 is converted into K2' = 0 in step S808; otherwise, the density value K2 is converted into K2' by the first tone correction processing in step S807. Figs. 7B and 7C are a table and a graph showing an example of setting of the first tone correction processing, in which In corresponds to the density values K1 and K2 and Out corresponds to the density values K1' and K2'. In this description, for the sake of simplicity, an example in which In and Out have a linear relationship is shown.

In step S809, the color separation/quantization unit 211 performs predetermined quantization processing for the density value K1' to convert it into 4-bit 3-valued quantization data (quantization value) of "0000", "0001", and "0010". In this example, three values of a low density, an intermediate density, and a high density are expressed. Furthermore, in steps S810 to S812, the color separation/quantization unit 211 sets a value in the most significant bit based on whether the processed pixel is in the first end portion using the result determined in step S303, and outputs 4-bit quantization data K1". More specifically, if it is detected that the pixel is in the first end portion, the most significant bit = 1 is set in step S812; otherwise, the most significant bit = 0 is set in step S811. Similarly, in step S813, the color separation/quantization unit 211 performs predetermined quantization processing for the density value K2' to convert it into 4-bit 3-valued quantization data of "0000", "0001", and "0010". In this example, three values of a low density, an intermediate density, and a high density are expressed. Furthermore, in steps S814 to S816, the color separation/quantization unit 211 sets a value in the most significant bit based on whether the processed pixel is in the second end portion using the result determined in step S303, and outputs 4-bit quantization data K2". More specifically, if it is detected that the pixel is in the second end portion, the most significant bit = 1 is set in step S816; otherwise, the most significant bit = 0 is set in step S815.

In step S305, the nozzle separation processing unit 212 performs index expansion processing for the quantization data K1" and K2" output in step S304. In the index expansion processing of this embodiment, the quantization data K1" and K2" of 600 × 600 dpi are converted into binary nozzle data K1p and K2p of 600 × 600 dpi using an index pattern prepared in advance. The quantization data K1" is converted into the nozzle data K1p by the first index expansion processing in step S817 of Fig. 7A, and the quantization data K2" is converted into the nozzle data K2p by the second index expansion processing in step S818. In other words, the index pattern is a dot arrangement pattern for arranging dots in pixels.

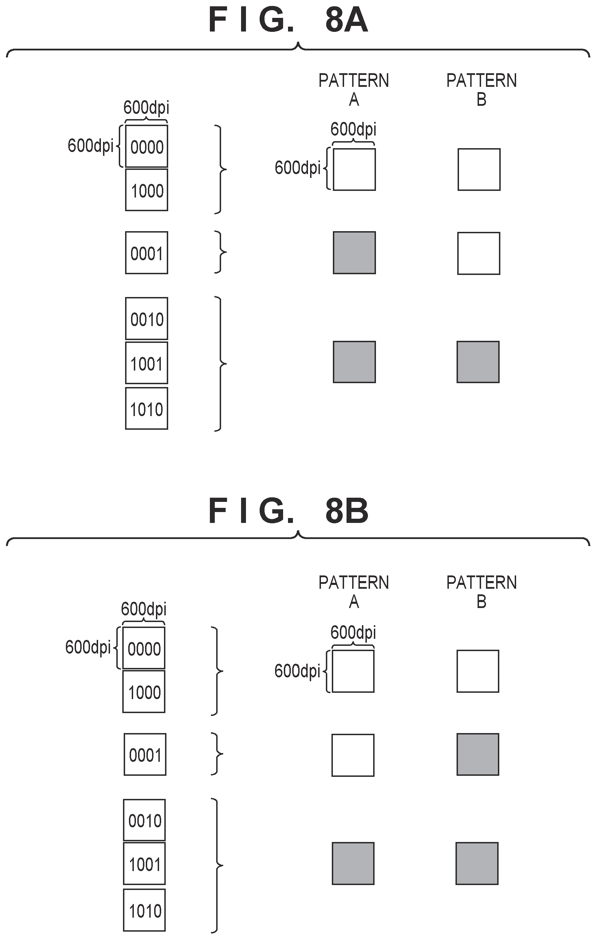

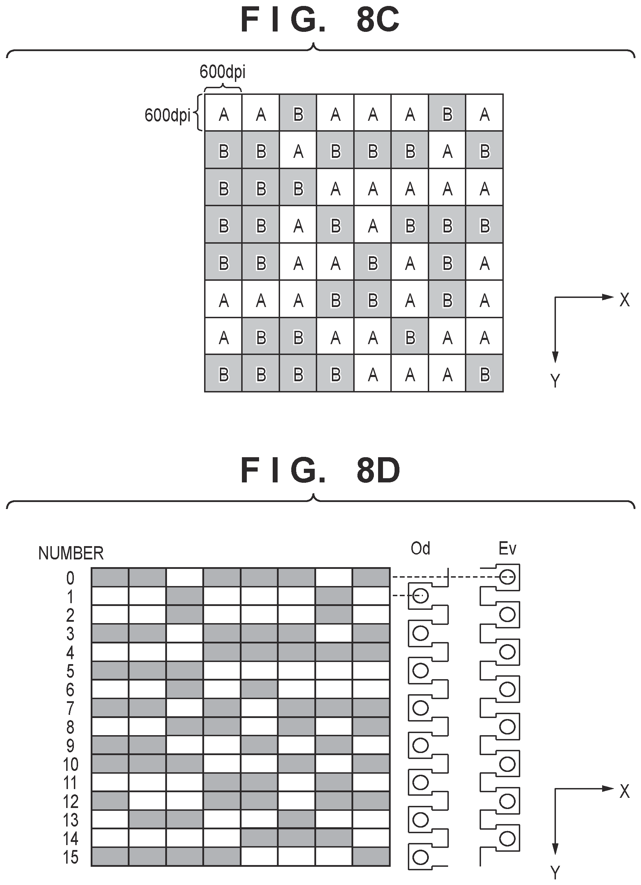

Figs. 8A to 8D are views showing examples of the dot arrangement pattern used in the index expansion processing and a reference index pattern. Fig. 8A is a view showing the dot arrangement pattern of the first index expansion processing. If the quantization data K1" of one pixel of 600 dpi × 600 dpi indicates "0000" or "1000", no dot is surely arranged in this pixel. If the quantization data K1" indicates "0001", pattern A in which a dot is arranged and pattern B in which no dot is arranged are prepared. If the quantization data K1" indicates "0010", "1001", or "1010", a dot is surely arranged in the pixel. Fig. 8B is a view showing the dot arrangement pattern of the second index expansion processing. If the quantization data K2" of one pixel of 600 dpi × 600 dpi indicates "0001", pattern A in which no dot is arranged and pattern B in which a dot is arranged are prepared. If the quantization data K2" indicates "0000", "1000", "0010", "1001", or "1010", the same processing as that in the first index expansion processing is performed. Fig. 8C is a view showing an example of the reference index pattern. In this embodiment, different index patterns are respectively used in the first index expansion processing in step S817 and the second index expansion processing in step S818 but each pattern is created with reference to the reference index pattern shown in Fig. 8C. In the reference index pattern, each rectangle corresponds to one pixel region of 600 dpi × 600 dpi, and it is determined, for each pixel, which of patterns A and B is used to arrange a dot. The nozzle separation processing unit 212 generates, as data for the Ev nozzle of the black nozzle array 1101 corresponding to each pixel, the nozzle data K1p of each pixel after the first index expansion processing, and stores the data in the RAM 207. Furthermore, the nozzle separation processing unit 212 generates, as data for the Od nozzle of the black nozzle array 1101 corresponding to each pixel, the nozzle data K2p of each pixel after the second index expansion processing, and stores the data in the RAM 207. Fig. 8D shows the binary data of 600 dpi in the X direction and 1,200 dpi in the Y direction after the index expansion processing, and the positional relationship between the data and the nozzles of the black nozzle array 1101 in a case where all the quantization data of the respective pixels uniformly indicate "0001" (intermediate density). As shown in Fig. 8D, dots are formed by the Ev nozzles for the 0th, second, fourth,... data of the data in the Y direction, and dots are formed by the Od nozzles for the first, third, fifth,... data. Thus, printing/non-printing of each nozzle of the black nozzle array 1101 is set for each pixel of the input image data of 600 dpi × 600 dpi, thereby setting printing/non-printing of 600 dpi × 1200 dpi. The contents of the procedure of the edge processing according to this embodiment have been described above.

### <Modification of Color Separation/Quantization Unit and Nozzle Separation Processing Unit>

To implement this embodiment, the processing of the color separation/quantization unit 211 and the nozzle separation processing unit 212 is not limited to the example shown in Figs. 6 to 8D.

For example, an example of the setting of the index expansion processing shown in each of Figs. 8A and 8B shows a dot arrangement pattern and a so-called 1-bit index pattern whose dot arrangement information is equivalent to that of nozzle data but the present invention is not limited to this example. For example, with respect to the dot arrangement pattern of one pixel, a pixel in which no dot is arranged is set with "00". A pixel in which a dot is arranged may be expressed by 2 bits, for example, "01" in a case where the most significant bit of the quantization data is "0", or "10" in a case where the most significant bit of the quantization data is "1". Furthermore, the nozzle separation processing unit 212 may generate nozzle data K1p' and K2p' equivalent to the dot arrangement condition by multiplying the nozzle data K1p and K2p, generated based on the above dot arrangement pattern, by a mask pattern. The mask pattern is obtained by expressing, by 2 bits, one pixel stored in the ROM 206 or the RAM 207. For example, in a case where the nozzle data K1p is "00", K1p' = 0 is set even for any mask pattern, the same dot arrangement condition as in this embodiment is obtained. Furthermore, K1p' = 1 is set using the mask pattern "01" or "11" in a case where the nozzle data K1p is "01" or the mask pattern "10" or "11" in a case where K1p is "10", and the predetermined mask pattern is applied, thereby obtaining the same dot arrangement condition as in this embodiment. The nozzle data K2p is the same as K1p.

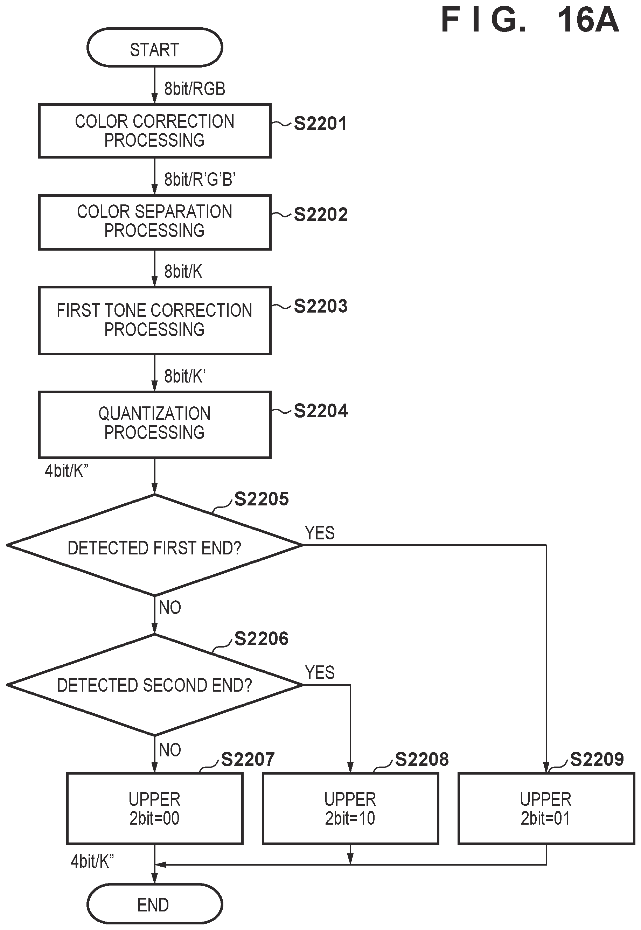

Fig. 6 shows an example in which each of the density value K1 referred to by the Ev nozzle and the density value K2 referred to by the Od nozzle is processed but processing shown in Figs. 16A to 16C may be performed.

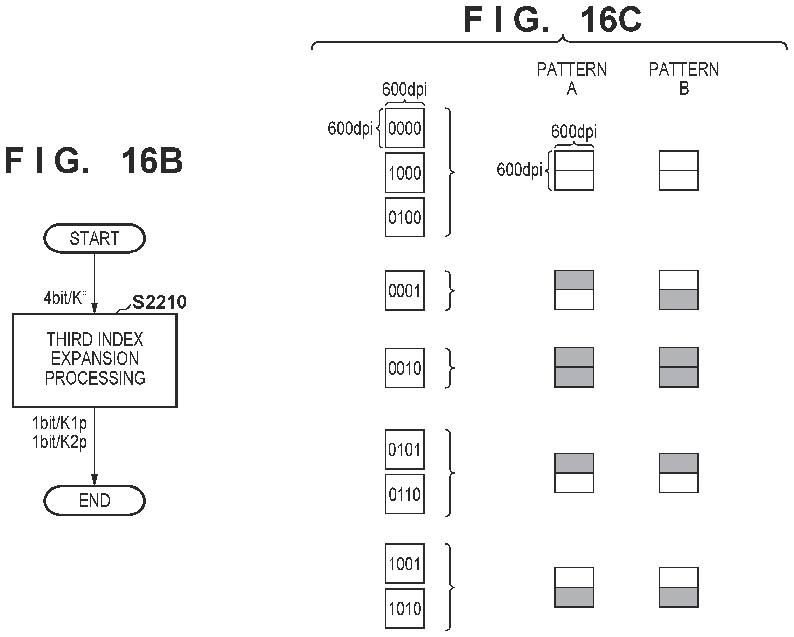

Figs. 16A and 16B are flowcharts illustrating a modification of Fig. 6. Step S2201 is the same as step S801 and a description thereof will be omitted. In step S2202, the color separation/quantization unit 211 performs color separation processing for the R'G'B' data to convert it into density values C, M, Y, and K. The conversion method is the same as in step S802. However, unlike step S802, processing of copying the density value data is not performed. For the sake of simplicity, an example of processing of the black data K will be described.

In step S2203, the color separation/quantization unit 211 performs tone correction processing for the density value K to convert it into the density value K'. The method of the tone correction processing is the same as in step S804 or S807 and a description thereof will be omitted.

In step S2204, the color separation/quantization unit 211 performs predetermined quantization processing for the density value K' to convert it into 4-bit 3-valued quantization data of "0000", "0001", and "0010". Furthermore, in step S2205 to S2209, the color separation/quantization unit 211 sets a value in upper 2 bits based on the end portion information of the processed pixel using the result determined in step S303, and outputs 4-bit quantization data K". If it is detected that the pixel is in the first end portion, upper 2 bits = 01 is set in step S2209. If it is determined that the pixel is not in the first end portion but in the second end portion, upper 2 bits = 10 is set in step S2208. If it is detected that the pixel is in neither the first end portion nor the second end portion, upper 2 bits = 00 is set in step S2207.

In step S2210, the nozzle separation processing unit 212 performs index expansion processing for the quantization data K" output in step S304. In the index expansion processing in this example, the quantization data K" of 600 × 600 dpi is converted into the binary nozzle data K1p and K2p of 600 dpi × 600 dpi using the index pattern prepared in advance.

Fig. 16C is a view showing an example of the dot arrangement pattern used in the index expansion processing. The dot arrangement pattern shown in Fig. 16C is obtained by vertically connecting pieces of arrangement information of 600 dpi × 1200 dpi. If the quantization data K" indicates "0000", "0100", or "1000", no dots are arranged on the upper and lower sides of this pixel. If the quantization data K" indicates "0001", pattern A in which a dot is arranged on the upper side and pattern B in which a dot is arranged on the lower side are prepared. If the quantization data K" indicates "0010", dots are surely arranged on both the upper and lower sides of the pixel. If the quantization data K" indicates "0101" or "0110", a dot is surely arranged on the upper side of the pixel and no dot is surely arranged on the lower side of the pixel. If the quantization data K" indicates "1001" or "1010", a dot is surely arranged on the lower side of the pixel and no dot is surely arranged on the upper side of the pixel. The reference index pattern is the same as in Fig. 8C. Then, the nozzle separation processing unit 212 generates data of the upper side among the pieces of arrangement information of the upper and lower sides of each pixel as data for the Ev nozzle of the black nozzle array 1101 corresponding to each pixel, which is the nozzle data K1p, and stores the data in the RAM 207. Furthermore, the nozzle separation processing unit 212 generates data of the lower side of the composite nozzle data Kp of each pixel as data for the Od nozzle of the black nozzle array 1101 corresponding to each pixel, which is the nozzle data K2p, and stores the data in the RAM 207.

With the above procedure, data printed by each nozzle is obtained as in the procedure shown in Figs. 6 to 8D, and the same effect can be obtained. More specifically, for example, in a case of "0110" indicating the upper end portion, no dot is surely arranged on the lower side of the pixel, and in a case of "1010" indicating the lower end portion, no dot is surely arranged on the upper side of the pixel. The contents concerning the modification of the color separation/quantization unit and the nozzle separation processing unit according to this embodiment have been described above.

### <Processing at Time of Shifting Nozzles to Be Used>

This embodiment has explained the example in which the upstream side nozzle of each pixel is the Ev nozzle and the downstream side nozzle is the Od nozzle but this is merely an example. For example, for the purpose of correcting a physical positional shift in the Y direction that can occur between the black nozzle array 1101 and each of the remaining color nozzle arrays 1102 to 1104, the black nozzle may be shifted in the Y direction by 1200 dpi × odd number with respect to the input image, thereby executing printing. In this case, the Ev nozzle and the Od nozzle to be used may be exchanged. In step S305, the nozzle separation processing unit 212 generates the nozzle data K1p as data for the Od nozzle of the black nozzle array 1101 and generates K2p as data for the Ev nozzle of the black nozzle array 1101, thereby making it possible to obtain the same effect. The contents of the processing at the time of shifting nozzles to be used according to this embodiment have been described above.

### <Processing of Nozzle Arrays Other Than Black Nozzle Array>

This embodiment has explained the processing of step S803 and the subsequent steps with respect to only the black data. However, in step S802, data other than the black data, that is, the density value data of cyan, magenta, and yellow are also output. The same processing as that for the black data is performed for these data. Alternatively, processing different from that for the black data may be used, as will be described below.

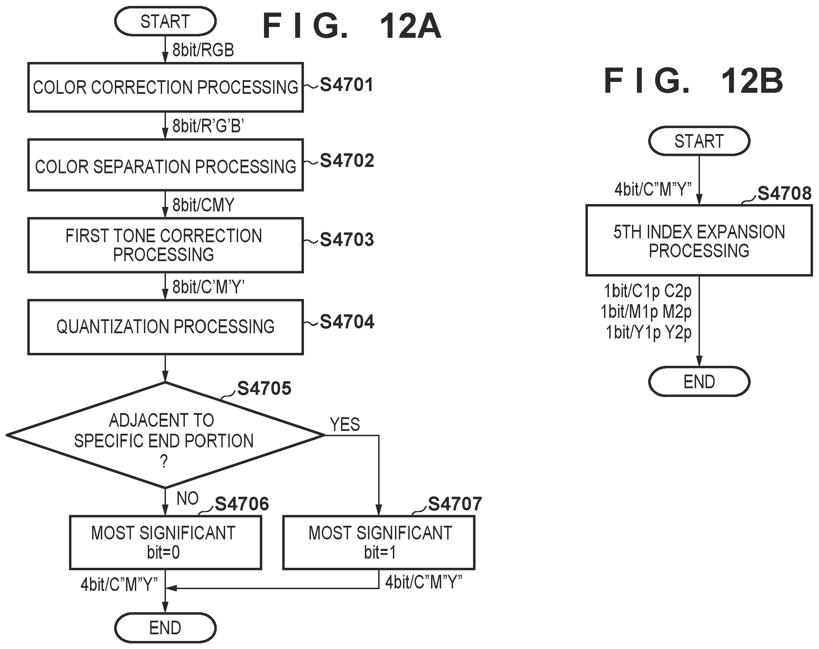

Figs. 12A and 12B show an example of the internal processing procedure of the color separation/quantization processing executed in step S304 and the nozzle separation processing executed in step S305. Steps S4701 and S4702 are the same as steps S801 and S802, respectively. In addition, steps S4703 and S4704 are the same as steps S804 and S809, respectively, and a description thereof will be omitted.

In step S4705, the color separation/quantization unit 211 outputs 4-bit quantization data C", M", and Y" based on whether the processed pixel is a pixel adjacent to a specific end portion using the result determined in step S303. The specific end portion is, for example, the first end portion or the second end portion. More specifically, if it is detected that the pixel is a pixel adjacent to the specific end portion, the most significant bit of the quantization data = 1 is set in step S4707; otherwise, the most significant bit of the quantization data = 0 is set in step S4706.

In step S4708, the nozzle separation processing unit 212 performs index expansion processing for each of the quantization data C", M", and Y" output in step S304. In the index expansion processing in this example, the quantization data C", M", and Y" of 600 dpi × 600 dpi are converted into binary nozzle data C1p, C2p, M1p, M2p, Y1p, and Y2p of 600 dpi × 600 dpi using the index pattern prepared in advance.

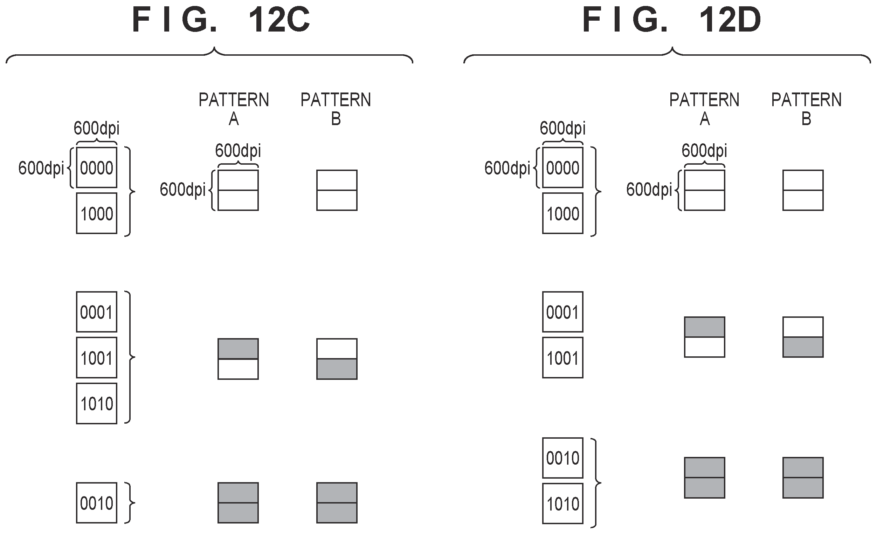

Figs. 12C and 12D are views each showing an example of a dot arrangement pattern used in the index expansion processing. Fig. 12C shows an arrangement pattern for Y", and Fig. 12D shows an arrangement pattern for C" and M". Each of the dot arrangement patterns shown in Figs. 12C and 12D are obtained by vertically connecting pieces of arrangement information of 600 dpi × 1200 dpi. In a case where "0000" or "1000" is indicated for each of the quantization data C", M", and Y", no dot of the corresponding color is arranged on either the upper side or the lower side of the pixel. In a case where "0001" is indicated for each of the quantization data C", M", and Y", pattern A in which a dot of the corresponding color is arranged on the upper side and pattern B in which a dot of the corresponding color is arranged on the lower side are prepared. In a case where "0010" is indicated for each of the quantization data C", M", and Y", a dot of the corresponding color is surely arranged on each of the upper side and the lower side of the pixel. With respect to each of the quantization data C" and M", even in a case where "1010" is indicated, a dot of the corresponding color is surely arranged on each of the upper side and the lower side of the pixel. On the other hand, if "1010" is indicated for the quantization data Y", pattern A in which a dot of the corresponding color is arranged on the upper side and pattern B in which a dot of the corresponding color is arranged on the lower side are prepared. A reference index pattern is the same as in Fig. 8C. Then, the nozzle separation processing unit 212 generates data of the upper side among the pieces of arrangement information of the upper and lower sides of a cyan dot of each pixel as data for the Ev nozzle of the cyan nozzle array 1102 corresponding to each pixel, which is the nozzle data C1p, and stores the data in the RAM 207. Furthermore, the nozzle separation processing unit 212 generates data of the lower side among the pieces of arrangement information of the upper and lower sides of a cyan dot of each pixel as data for the Od nozzle of the cyan nozzle array 1102 corresponding to each pixel, which is the nozzle data C2p, and stores the data in the RAM 207. The same applies to magenta and yellow. As described above, with respect to cyan and magenta, the same dot arrangement is obtained regardless of whether the pixel is adjacent to the specific end portion, and thus dots are not thinned. On the other hand, with respect to yellow, in a case where the pixel is adjacent to the specific end portion, dots are thinned. It has been described with respect to yellow that dots are thinned in a case where the pixel is adjacent to the specific end portion, but without limitation to yellow, with respect to cyan or magenta as well, dots may be thinned in a case where the pixel is adjacent to the specific end portion. The processing for nozzle arrays other than the black nozzle array has been explained above. Note that this description is common to all embodiments of the present invention.

### <Edge Processing of Horizontal Line>

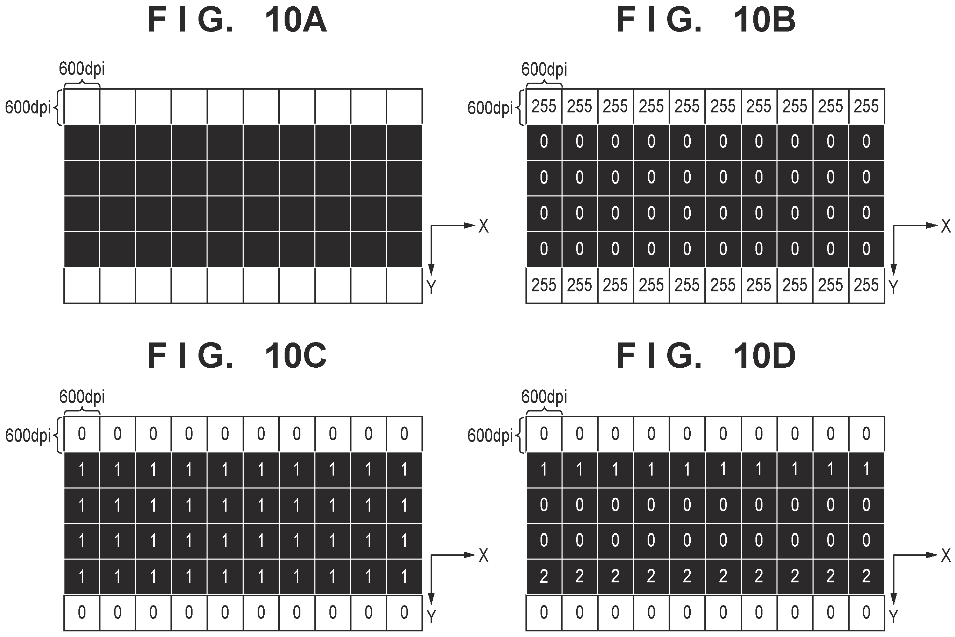

An example of performing edge processing using this embodiment will be described based on the procedure shown in Figs. 3 to 8D with reference to Figs. 10A to 11E. Fig. 10A is a view showing an input image used in this description, in which a horizontal line is arranged as an object of an image. The horizontal line is an image uniformly extending in a direction intersecting the array direction of the nozzles of the printhead H. In Fig. 10A, pixels are arrayed at 600 dpi, each pixel has a 8-bit, 256-level luminance value for each of R, G, and B, and so-called black pixels having luminance values of 0 for R, G, and B form a line having a pixel width of four pixels in the Y direction as the array direction of the nozzles.

After the input image is acquired by the image processing unit 208 in step S301, the decoder unit 209 performs decoding processing for the input image in step S302. For the sake of simplicity, assume that the image having undergone the decoding processing is the same as that shown in Fig. 10A. For the image having undergone the decoding processing, in step S303, the image analysis unit 210 detects a specific end portion to which each pixel corresponds. Fig. 10B is a view showing data of the luminance Y after luminance conversion in step S401. Fig. 10C is a view showing binary data obtained by binarizing the data of the luminance Y in step S402 by setting Th = 50. Fig. 10D is a view showing a result of determining edges for the above-described binary data. In Fig. 10D, "0" indicates non-detection, "1" indicates the upper end portion, and "2" indicates the lower end portion.

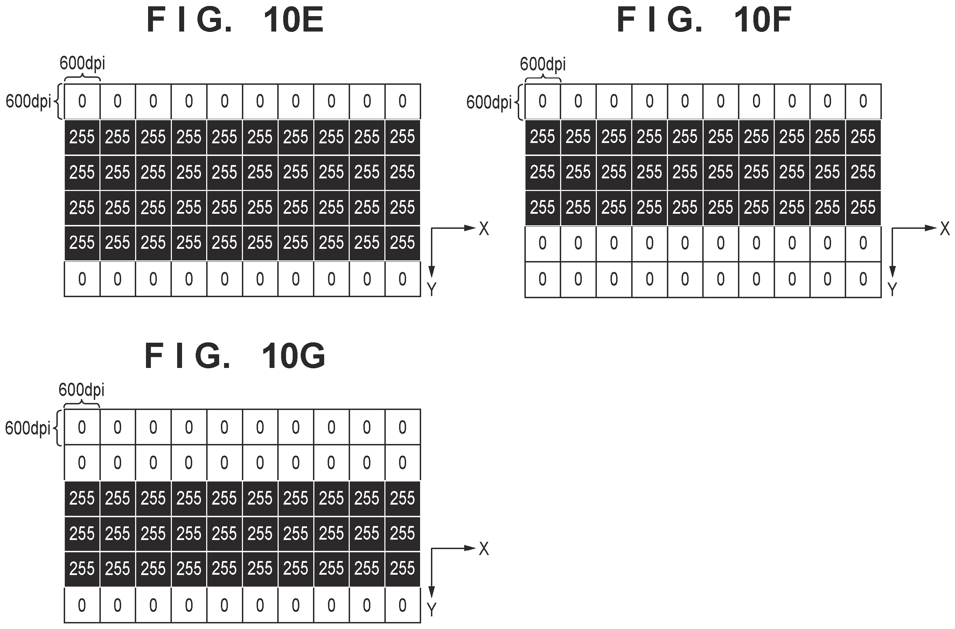

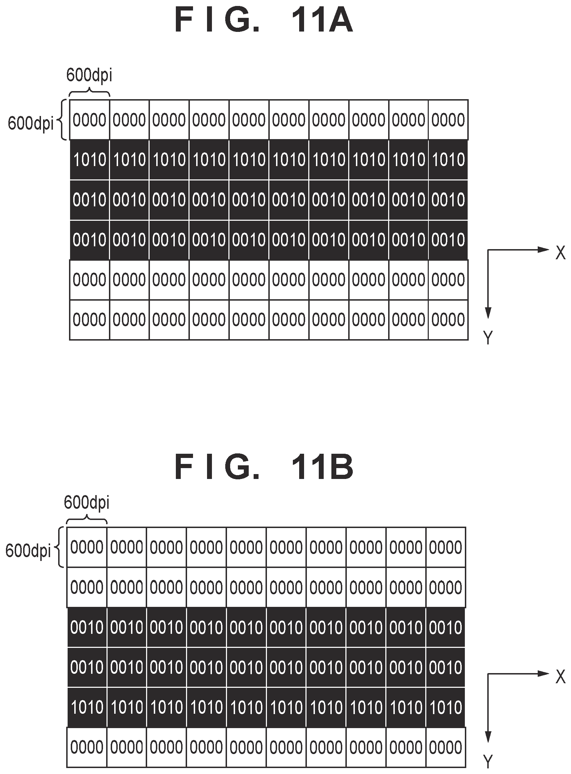

Next, in step S304, the color separation/quantization unit 211 performs color separation/quantization processing for the image having undergone the decoding processing in step S302 based on the edge end portion detection result of step S303. Fig. 10E is a view showing the density values K1 and K2 after performing the color separation processing in step S802. Fig. 10F is a view showing the density value K1' after the tone correction processing in steps S803 to S805 but shows an example in which the second end portion is determined as the lower end portion in step S803. Therefore, pixels indicated by "2" in Fig. 10D, that is, lower end pixels have a density value of 0. Fig. 10G is a view showing the density value K2' after the tone correction processing in steps S806 to S808 but shows an example in which the first end portion is determined as the upper end portion in step S806. Therefore, pixels indicated by "1" in Fig. 10D, that is, upper end pixels have a density value of 0. Fig. 11A is a view showing the quantization data K1" having undergone steps S809 to S812, and Fig. 11B is a view showing the quantization data K2" having undergone steps S813 to S816. An example in which a density value of 128 is quantized to "0001" and a density value of 255 is quantized to "0010" in both steps S809 and S813 is shown. The definitions of the first end portion and the second end portion in steps S810 and S814 are the same as in steps S803 and S806, respectively. Therefore, as shown in Fig. 11A, among pixels of K1' = 255 in Fig. 10F, pixels indicated by "1" in Fig. 10D, that is, upper end pixels have quantization data "1010" and the remaining pixels have "0010". On the other hand, as shown in Fig. 11B, among pixels of K2' = 255 in Fig. 10G, pixels indicated by "2" in Fig. 10D, that is, lower end pixels have quantization data "1010" and the remaining pixels have "0010".

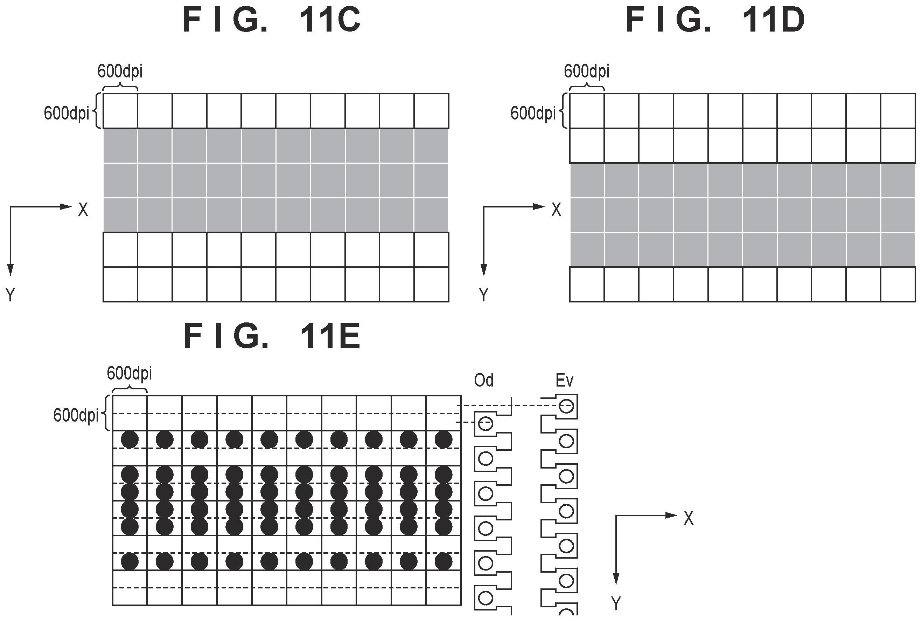

Next, in step S305, the image quantized in step S304 undergoes the index expansion processing by the nozzle separation processing unit 212. Figs. 11C and 11D are views respectively showing the nozzle data K1p and K2p after the index expansion processing in steps S817 and S818. Fig. 11E is a view showing a dot arrangement when the printhead H executes printing at 600 dpi × 1200 dpi based on the nozzle data K1p and K2p. By comparing Figs. 10A, 10D, and 11E, it is found that in each of pixels not in the upper end portion or the lower end portion in Fig. 10D among pixels having a luminance value of 0 in Fig. 10A, a dot is arranged in each region of 600 dpi × 1200 dpi in Fig. 11E. Then, it is found that in each of pixels determined to be in the upper end portion in Fig. 10D among the pixels having a luminance value of 0 in Fig. 10A, a dot is arranged only for the upstream side nozzle, that is, the Ev nozzle in Fig. 11E. Furthermore, it is found that in each of pixels determined to be in the lower end portion in Fig. 10D among the pixels having a luminance value of 0 in Fig. 10A, a dot is arranged only for the downstream side nozzle, that is, the Od nozzle in Fig. 11E.

As described above, in this embodiment, in the apparatus configuration that can print dots at a high resolution in the Y direction, as compared with image data to undergo edge detection, upper end pixels and lower end pixels are detected as edge pixels on the object side of two facing sides (one side and the other side) of the edge portions of an object in the image data. Then, by changing the dot arrangement by determining whether each edge pixel is an upper end pixel or a lower end pixel, dots in a region (to be referred to as a non-end portion side hereinafter) closer to the inner side of the object are thinned and dots in a region (to be referred to as an end portion side hereinafter) closer to the end portion side of the object are not thinned. That is, such dot arrangement that a ratio of forming dots on the non-end portion side is lower than a ratio of forming dots on the end portion side and the magnitude relationship between the ratios is equal between the upper end edge pixels and the lower end edge pixels is used. This dot arrangement can reduce a deterioration in image quality caused by bleeding of printed ink on the print medium. Furthermore, since edge detection can be performed using the apparatus configuration, that is, image data with a resolution lower than the resolution in the nozzle array direction of the printhead H, it is possible to reduce the load of image processing.

### [Second Embodiment]

### <Edge Processing of Width of Two Pixels or Less>

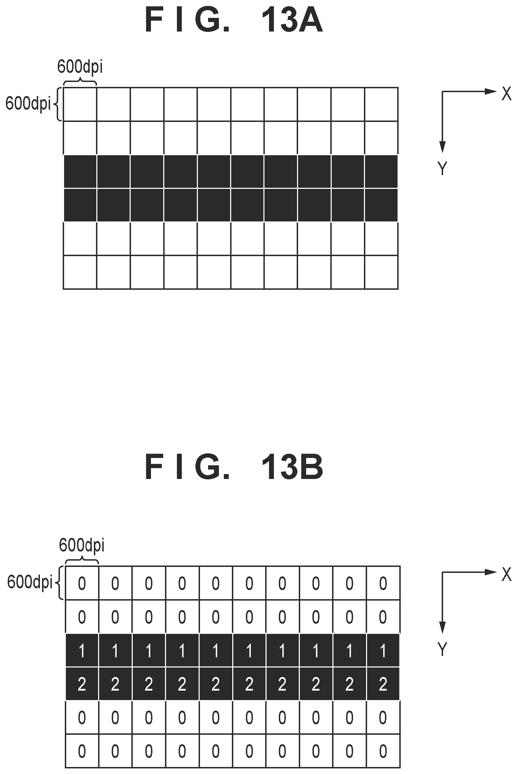

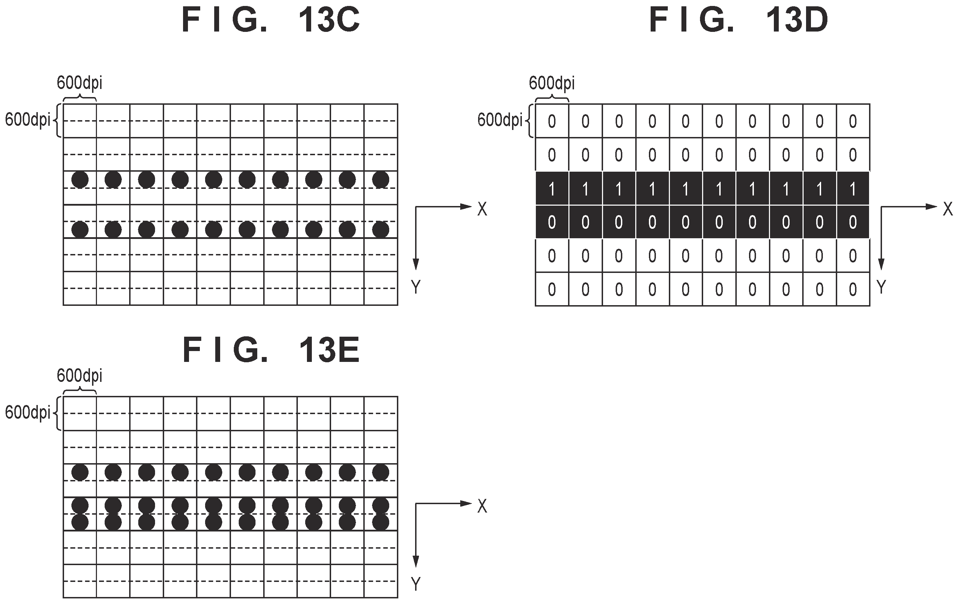

The second embodiment will be described below concerning points different from the first embodiment. The first embodiment has explained processing in a case where a horizontal line having a width of four pixels is an object of an input image. Fig. 13A is a view showing that pixels are arrayed at 600 dpi, each pixel has a 8-bit, 256-level luminance value for each of R, G, and B, and so-called black pixels having luminance values of 0 for R, G, and B indicate a horizontal line (to be referred to as a 2-dot horizontal line hereinafter) having a width of two pixels in the Y direction. Fig. 13B shows an edge detection result when applying the processing of the first embodiment to the 2-dot horizontal line. As shown in Fig. 13B, a pixel indicating an upper end portion "1" and a pixel indicating a lower end portion "2" are adjacent to each other in the Y direction. Fig. 13C is a view showing a dot arrangement after processing is performed based on the above-described edge detection result and index expansion processing is performed in step S305. As shown in Fig. 13C, thinned regions are adjacent to each other in the Y direction. In this case, the thinned regions are readily visually perceived, and a visual mismatch between the input image and a printed image may occur. This embodiment will describe the procedure of edge processing for the 2-dot horizontal line shown in Fig. 13A. Note that steps S301 and S302 are the same as in the first embodiment and a description thereof will be omitted.

In image analysis processing executed in step S303, an image analysis unit 210 detects a 2-dot horizontal line at the time of edge detection in step S403. Then, as a detection result, "1" is output with respect to an upper end pixel, similar to the first embodiment while "0" is output with respect to a lower end pixel as non-detection. Note that "0" is output with respect to a lower end pixel only in a case of a 2-dot width horizontal line. That is, in a case where a horizontal line having a width of three pixels or more is detected, "2" is output, similar to the first embodiment. Fig. 13D is a view showing the edge detection result in step S303 according to this embodiment. Steps S304 and S305 thereafter are the same as in the first embodiment and a description thereof will be omitted.

Fig. 13E is a view showing the dot arrangement of the 2-dot horizontal line when executing printing after the index expansion processing is performed in step S305 of this embodiment. As shown in Fig. 13E, since upper pixels have the same edge detection result as that of the upper end pixels in the first embodiment, dots are thinned, similar to the first embodiment. On the other hand, since lower pixels are not detected as edge pixels, the same processing as that for pixels that are not detected as edge pixels in the first embodiment is performed, and dots are not thinned. As described above, by changing the edge determination of the lower end pixels only for the 2-dot horizontal line, the thinned regions are not adjacent to each other in the Y direction, and thus it is possible to reduce the possibility of occurrence of a visual mismatch between the input image and the printed image.

Note that in this embodiment, the lower pixels are processed as non-detection in step S403 but this is merely an example. For example, "0" may be output as non-detection with respect to the upper end pixels of the detected 2-dot horizontal line and "2" may be output with respect to the lower end pixels, similar to the first embodiment. In this case as well, thinned regions are not adjacent to each other in the Y direction and it is thus possible to obtain the same effect.

Furthermore, with respect to a horizontal line (to be referred to as a 1-dot horizontal line hereinafter) having a width of one pixel, if the same processing as in the first embodiment is performed, the number of dots on a print medium is halved. In this case as well, a change in density caused by thinning is readily visually perceived, and a visual mismatch between the input image and the printed image may occur. To reduce the possibility of occurrence of such mismatch, a 1-dot horizontal line may be detected at the time of edge detection in step S403, non-detection "0" may be output with respect to the pixel, and thinning may not be performed in subsequent processing. Note that for the same reason, non-detection may be output in step S403 with respect to a vertical line (1-dot vertical line) having a width of one pixel or a pixel surrounded by pixels of Bin = 0 on the upper, lower, left, and right sides, and thinning may not be performed in subsequent processing.

### [Third Embodiment]

### <Edge Processing of Solid Image>

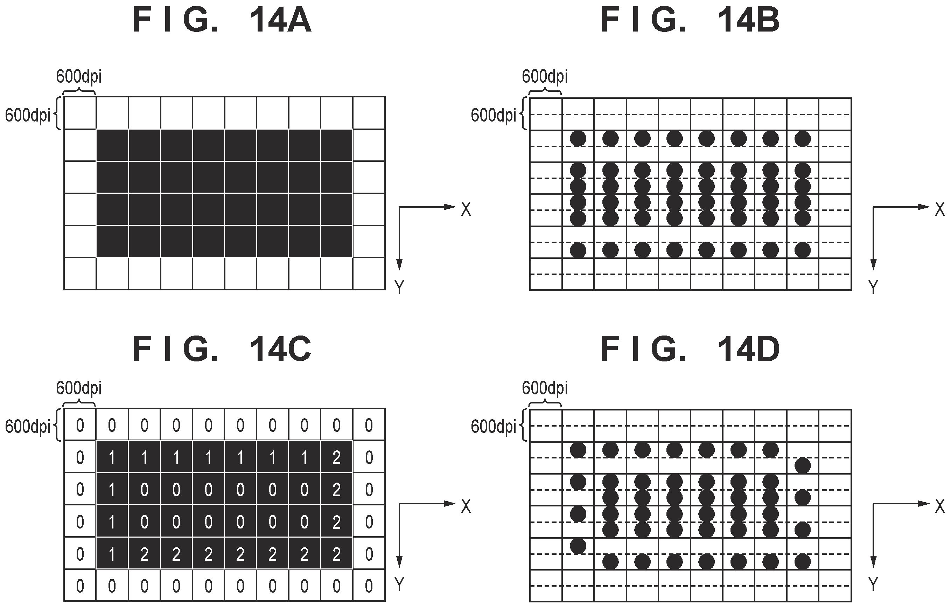

The third embodiment will be described below concerning points different from the first and second embodiments. The first embodiment has explained processing in a case where a horizontal line having a width of four pixels is an object of an input image. Fig. 14A is a view showing an input image in which pixels are arrayed at 600 dpi, each pixel has a 8-bit, 256-level luminance value for each of R, G, and B, so-called black pixels having luminance values of 0 for R, G, and B are arranged, and an object including left end pixels and right end pixels is included. The above image having a rectangular shape will be referred to as a solid image hereinafter. Fig. 14B is a view showing a dot arrangement after the same processing as in the first embodiment is applied to the solid image and index expansion processing is performed in step S305. As shown in Fig. 14B, in the left end pixels and the right end pixels, some of dots are not thinned. To reduce a deterioration in image quality caused by bleeding of printed ink on a print medium at the left and right ends of the printed image, it is preferable to thin the dots in the left end pixels and the right end pixels. This embodiment will describe the procedure of edge processing of the solid image shown in Fig. 14A. Note that steps S301 and S302 are the same as in the first embodiment and a description thereof will be omitted.

In image analysis processing executed in step S303, an image analysis unit 210 outputs "1" with respect to the left end pixels, similar to the case where "1" is output with respect to upper end pixels, as in the first embodiment, at the time of edge detection in step S403. Furthermore, similar to the case where "2" is output with respect to lower end pixels, as in the first embodiment, "2" is output with respect to the right end pixels. Fig. 14C is a view showing an edge detection result in step S303 of this embodiment. Note that in this embodiment, "1" is output for a lower left pixel that is in the left end portion and the lower end portion and "2" is output for an upper right pixel that is in the right end portion and the upper end portion. This is merely an example and other settings may be possible. Steps S304 and S305 thereafter are the same as in the first embodiment.

Fig. 14D is a view showing the dot arrangement of the solid image when executing printing after the nozzle separation processing unit 212 performs index expansion processing in step S305 of this embodiment. As shown in Fig. 14D, the left end pixels have the same dot arrangement as that of the upper end pixels, and the right end pixels have the same dot arrangement as that of the lower end pixels. That is, it is found that dots are thinned with respect to the left end pixels and the right end pixels.

As described above, in this embodiment, in addition to the upper end pixels and the lower end pixels as the edge pixels of two facing sides of the object, the left end pixels and the right end pixels are detected and determined. By changing the dot arrangement in accordance with the determination result, dots in the left end portion and the right end portion are thinned, thereby making it possible to reduce a deterioration in image quality in these portions.

Note that in this embodiment, "1" and "2" are output with respect to the left end pixels and the right end pixels in step S403, respectively. However, this is merely an example, and other combinations may be used. Even if "1" and "1", "2" and "1", or "2" and "2" are output, dots in the left end pixels and the right end pixels are thinned, and it is thus possible to obtain the same effect.

Note that in this embodiment, "1" and "2" are output with respect to the left end pixels and the right end pixels in step S403, respectively, but "3" and "4" may be output to identify these pixels. Then, the first end portion is determined in step S806 or S810 by determining whether "1" or "3" is detected, and the second end portion is determined in step S803 or S814 by determining whether "2" or "4" is detected. Thus, it is possible to obtain the same effect.

On the other hand, with respect to a vertical line (to be referred to as a 2-dot vertical line hereinafter) having a width of two pixels, if the same processing as in this embodiment is performed, the number of dots on the print medium is halved. Similar to the second embodiment, in this case as well, a change in density caused by thinning is readily visually perceived, and a visual mismatch between the input image and the printed image may occur. To reduce the possibility of occurrence of such mismatch, similar to the 2-dot horizontal line in the second embodiment, a 2-dot vertical line may be detected at the time of edge detection in step S403, non-detection "0" may be output with respect to the left end pixels or the right end pixels, and the dots may not be thinned in subsequent processing.

### [Fourth Embodiment]

### <Edge Processing of Intermediate-Density Solid Image>

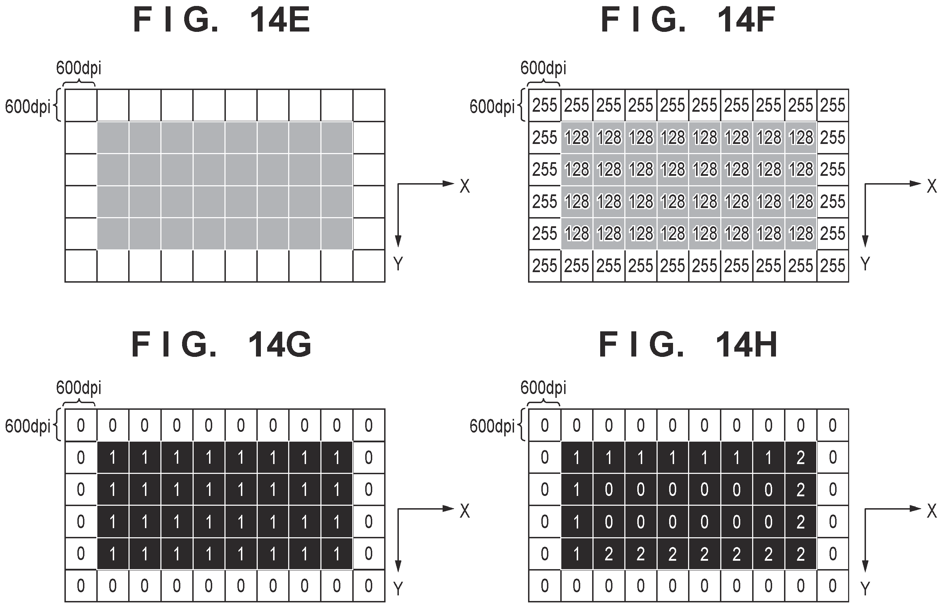

The fourth embodiment will be described below concerning points different from the first to third embodiments. Each of the first to third embodiments has explained processing in a case where an object in an input image has luminance values of 0 for R, G, and B, that is, so-called black pixels. The present invention is not limited to the black pixels, as a matter of course. An example of edge processing of an intermediate-density solid image will be described below by exemplifying a case where the luminance values of an object are 128 for R, G, and B, as shown in Fig. 14E. Note that all processes of steps S301 to S305 are the same as in the third embodiment and a description thereof will be omitted.

Fig. 14F is a view showing data of luminance Y after luminance conversion in step S401 by an image analysis unit 210. Fig. 14G is a view showing binary data obtained by binarizing the data of the luminance Y in step S402 by setting Th = 50. Fig. 14H is a view showing a result of detecting edges from the binary data. As shown in Fig. 14H, it is found that even if the input image has an intermediate density, edge end portions are detected by outputting "1" for upper end pixels and left end pixels and outputting "2" for lower end pixels and right end pixels. This is because the image having undergone luminance conversion is binarized by setting Th = 50, and is used to perform edge detection.

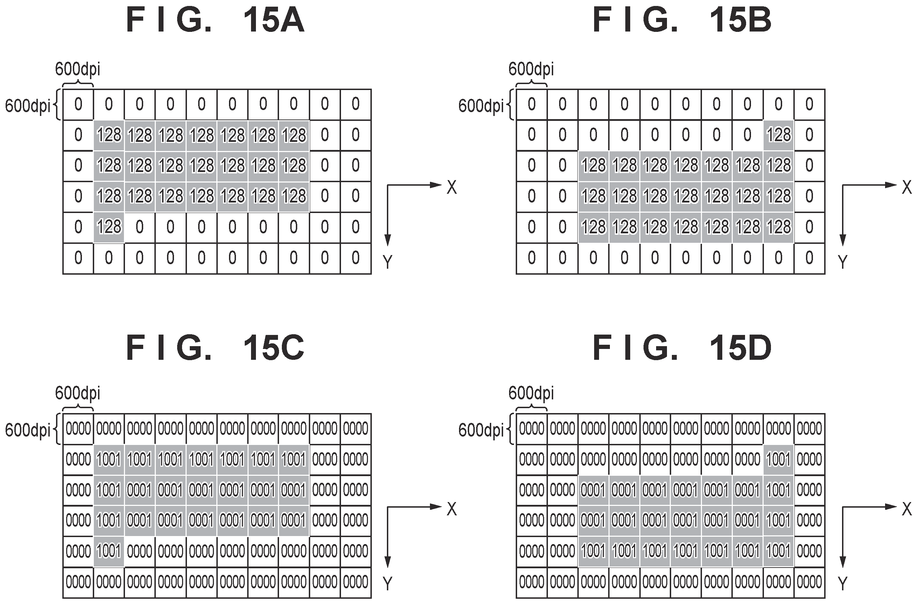

Fig. 15A shows a density value K1' after performing tone correction processing in steps S803 to S805 by a color separation/quantization unit 211. As shown in Fig. 15A, the pixels indicated by "2" in Fig. 14H, that is, the lower end pixels and the right end pixels have a density value of 0, and the remaining pixels of the object have a converted value of 128 corresponding to the tone correction processing shown in Figs. 7B and 7C. Fig. 15B shows a density value K2' after performing tone correction processing in steps S806 to S808. As shown in Fig. 15B, the pixels indicated by "1" in Fig. 14H, that is, the upper end pixels and the left end pixels have a density value of 0, and the remaining pixels of the object have a converted value of 128 corresponding to the tone correction processing shown in Figs. 7B and 7C. Fig. 15C is a view showing quantization data K1" obtained by performing quantization by the color separation/quantization unit 211 in step S809 under the condition described in the first embodiment, and performing steps S810 to S812. Fig. 15D is a view showing quantization data K2" obtained by performing quantization by the color separation/quantization unit 211 in step S813 under the condition described in the first embodiment, and performing steps S814 to S816. As shown in Fig. 15C, among the pixels having K1' = 128 in Fig. 15A, the pixels indicated by "1" in Fig. 14H, that is, the upper end pixels and the left end pixels have quantization data "1001", and the remaining pixels have "0001". On the other hand, as shown in Fig. 15D, among the pixels having K2' = 128 in Fig. 15B, the pixels indicated by "2" in Fig. 14H, that is, the lower end pixels and the right end pixels have quantization data "1001", and the remaining pixels have "0001".

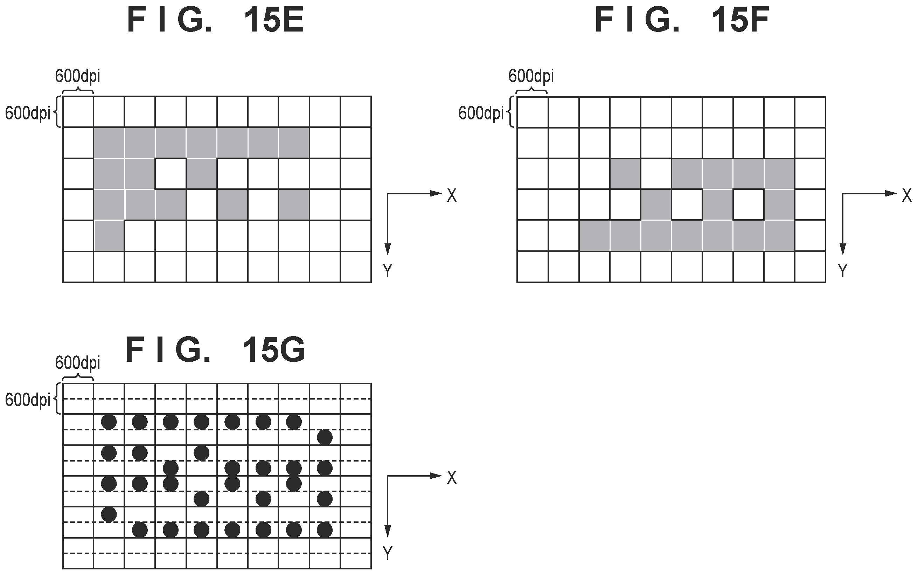

Figs. 15E and 15F are views showing nozzle data K1p and K2p obtained after performing index expansion processing by a nozzle separation processing unit 212 in steps S817 and S818, respectively. Fig. 15G is a view showing a dot arrangement when a printhead H executes printing at 600 dpi × 1200 dpi based on the nozzle data K1p and K2p. As shown in Fig. 15G, pixels having the quantization data K1" and K2" of "0001", that is, pixels that are not determined as end pixels have a different dot arrangement in 600 dpi × 600 dpi, similar to Fig. 8D. On the other hand, with respect to the upper end pixels and the left end pixels, dots are uniformly arranged only for the upstream side nozzles, that is, the Ev nozzles. Furthermore, with respect to the lower end pixels and the right end pixels, dots are uniformly arranged only for the downstream side nozzles, that is, the Od nozzles. That is, the dot arrangement of the end pixels is the same as that in the third embodiment shown in Fig. 14D. This is because the same arrangement is set for the quantization data "1001" and "1010", as shown in Figs. 8A and 8B.

As described above, in this embodiment, with respect to an intermediate-density object as well, it is detected and determined whether each edge pixel of the object is an upper end pixel, a lower end pixel, a left end pixel, or a right end pixel, and the dot arrangement is accordingly changed. This can make the dot arrangement of the edge pixels uniform and can improve the sharpness of the end portions. In addition, with respect to the upper end and the lower end, dots are arranged only on the end portion sides of the edge pixels, thereby making it possible to reduce a deterioration in image quality caused by bleeding of printed ink on a print medium.

### [Fifth Embodiment]

### <Modification of Dot Arrangement of Edge Pixels by Applying Tone Correction Processing>

The fifth embodiment will be described below concerning points different from the first to fourth embodiments. Each of the first to fourth embodiments has explained an example of an arrangement in which when thinning dots of edge pixels or changing an arrangement, dots are uniformly arranged on the end portion sides of the pixels and no dots are arranged on the non-end portion sides. However, this example is merely an example, and an optimum dot arrangement of edge pixels may be different depending on the configuration of a printing apparatus, the degree of bleeding of printed ink on a print medium, and the like. For example, an arrangement in which dots are applied on the non-end portion sides of the edge pixels or an arrangement in which dots on the end portion sides of the edge pixels are thinned may be preferable. This embodiment will describe an example of edge processing of implementing the above arrangement by applying tone correction processing executed by a color separation/quantization unit 211. Note that in an example to be described below, all of steps S301 to S303 are the same as in the first embodiment and a description thereof will be omitted.

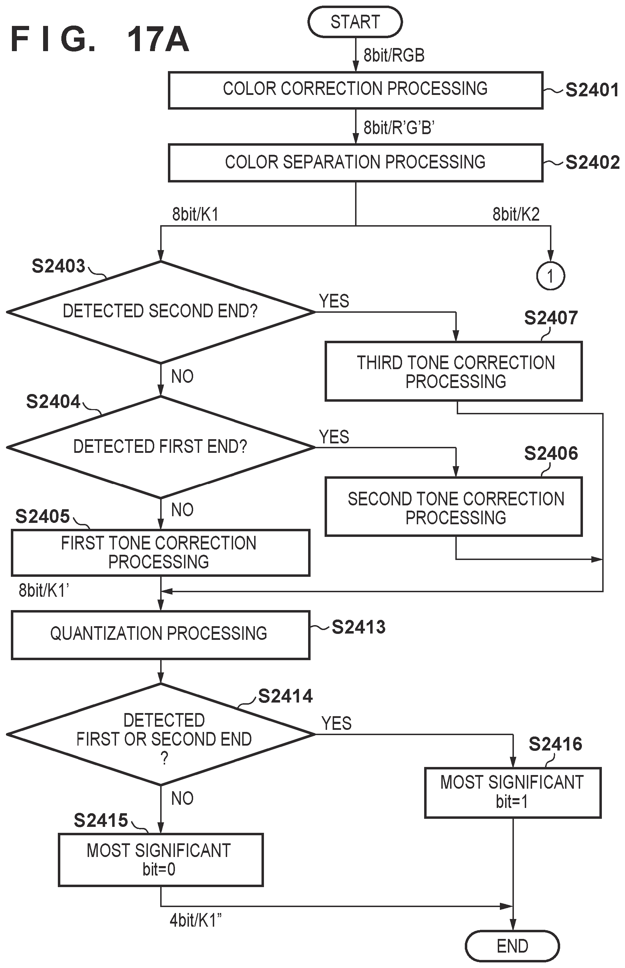

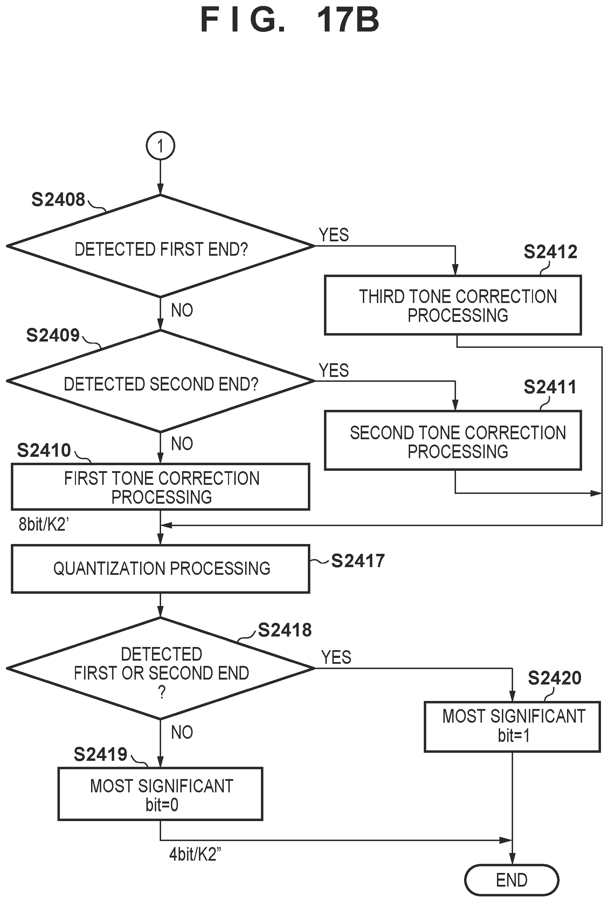

Figs. 17A and 17B show an example of the internal processing procedure of color separation/quantization processing executed by the color separation/quantization unit 211 in step S304 according to this embodiment. Steps S2401 and S2402 are the same as steps S801 and S802, respectively, and a description thereof will be omitted. In steps S2403 to S2407, the color separation/quantization unit 211 converts a density value K1 into a density value K1' by performing different tone correction processing using a result determined in step S303. More specifically, if the pixel is in the second end portion in step S303, the density value is converted into K1' by the third tone correction processing in step S2407. If the pixel is not in the second end portion but in the first end portion, the density value is converted into K1' by the second tone correction processing in step S2406. If the pixel is in neither the second end portion nor the first end portion, the density value is converted into K1' by the first tone correction processing in step S2405. On the other hand, in steps S2408 to S2412, the color separation/quantization unit 211 converts a density value K2 into a density value K2' by performing different tone correction processing using the result determined in step S303. More specifically, if the pixel is in the first end portion in step S303, the density value is converted into K2' by the third tone correction processing in step S2412. If the pixel is not in the first end portion but in the second end portion, the density value is converted into K2' by the second tone correction processing in step S2411. If the pixel is in neither the first end portion nor the second end portion, the density value is converted into K2' by the first tone correction processing in step S2410. The first tone correction processing in this embodiment is the same as that described in the first embodiment. The second tone correction processing is correction of a tone value for controlling the number of dots on the end portion sides of the edge pixels, and the third tone correction processing is correction of a tone value for controlling the number of dots on the non-end portion sides of the edge pixels. Details of these processes will be described later. In step S2413, the color separation/quantization unit 211 performs the same quantization processing as in step S809 for the density value K1' to convert it into 4-bit 3-valued quantization data. Furthermore, in steps S2414 to S2416, the color separation/quantization unit 211 sets a value in the most significant bit of the quantization data based on the end portion information of the processed pixel using the result determined in step S303, and outputs 4-bit quantization data K1". More specifically, if it is detected that the pixel is in the first end portion or the second end portion, the most significant bit = 1 is set in step S2416; otherwise, the most significant bit of the quantization data = 0 is set in step S2415. Similarly, in step S2417, the color separation/quantization unit 211 performs the same quantization processing as in step S812 for the density value K2' to convert it into 4-bit 3-valued quantization data. Furthermore, in steps S2418 to S2420, the color separation/quantization unit 211 sets a value in the most significant bit of the quantization data based on the end portion information of the processed pixel using the result determined in step S303, and outputs 4-bit quantization data K2". Detailed processing contents are the same as in steps S2414 to S2416. Next, in step S305, the image quantized in step S304 undergoes index expansion processing by a nozzle separation processing unit 212. Processing contents are the same as in the first embodiment and a description thereof will be omitted.

A practical processing example in a case where the first end portion is an upper end portion or a left end portion, the second end portion is a lower end portion or a right end portion, and an input image is as shown in Fig. 14A, similar to the third embodiment, will be described below.

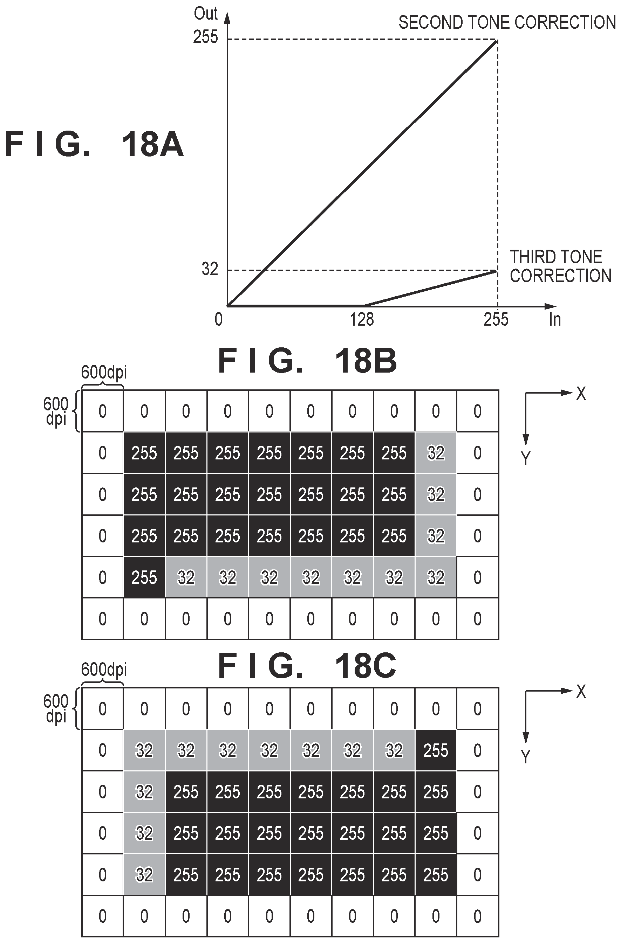

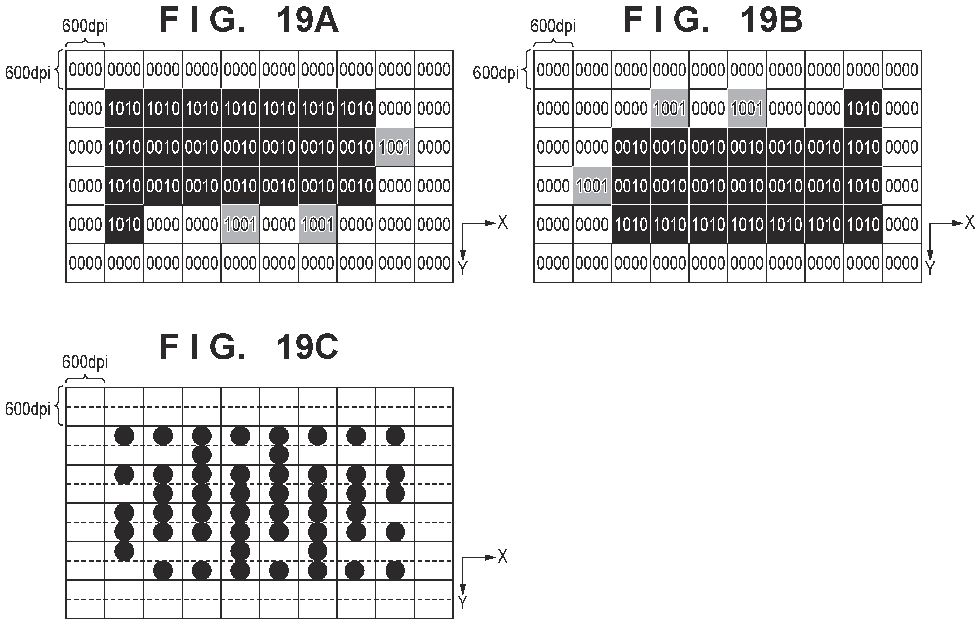

Fig. 18A shows an example of setting of the second tone correction processing and the third tone correction processing for implementing an arrangement in which dots are applied on the non-end portion sides of edge pixels. In this example, the dot arrangement on the end portion sides of the edge pixels is the same as in the first to fourth embodiments, and thus the second tone correction processing is equivalent to the first tone correction processing. On the other hand, in the third tone correction processing, Out = 0 is set for In ≤ 128, Out is gradually increased for In > 128, and Out = 32 is set for In = 255. Figs. 18B and 18C show the density values K1' and K2' obtained by applying these setting values, respectively. Figs. 19A and 19B are views showing the quantization data K1" obtained by executing steps S2413 to S2416 for the density value K1', and the quantization data K2" obtained by executing steps S2417 to S2420 for the density value K2', respectively. Fig. 19C is a view showing a dot arrangement when printing is executed after performing index expansion processing in step S305. As shown in these views, since the density values K1 of the right end pixels and the lower end pixels are "32", some of the quantization data of the pixels may probabilistically be "1001", and dots are accordingly arranged on the downstream sides of the pixels. On the other hand, since the density values K2 of the left end pixels and the upper end pixels are "32", some of the quantization data of the pixels may probabilistically be "1001", and dots are accordingly arranged on the upstream sides of the pixels. That is, an arrangement in which dots are applied on the non-end portion sides of the upper end pixels and the lower end pixels can be implemented. Note that the maximum value of the third tone correction processing is set to "32" in this description but the present invention is not limited to this numerical value. For example, if more dots are preferably applied on the non-end portion sides of the edge pixels, a numerical value larger than "32" may be set. On the other hand, if dots are preferably decreased, a numerical value smaller than "32" may be set.

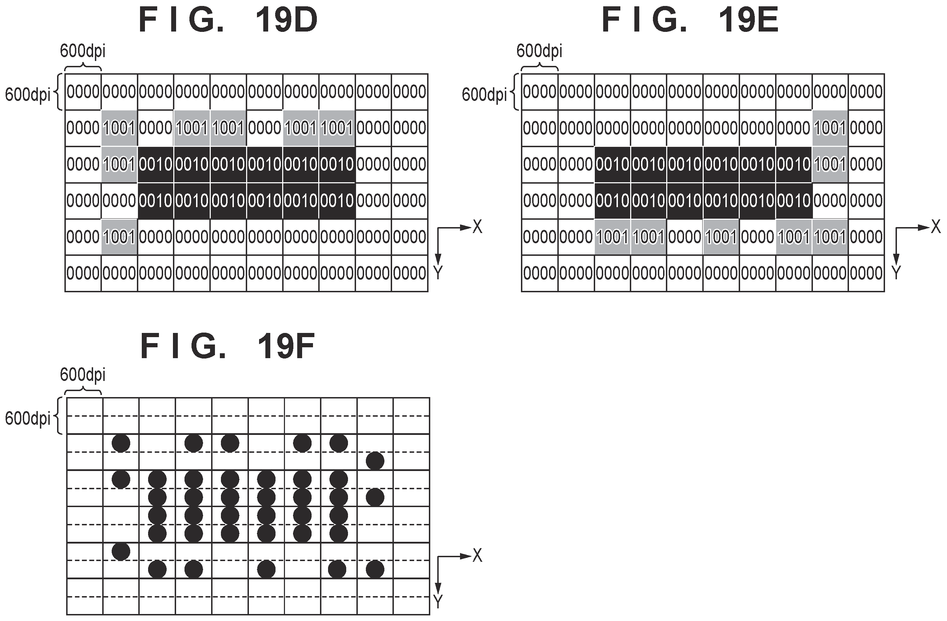

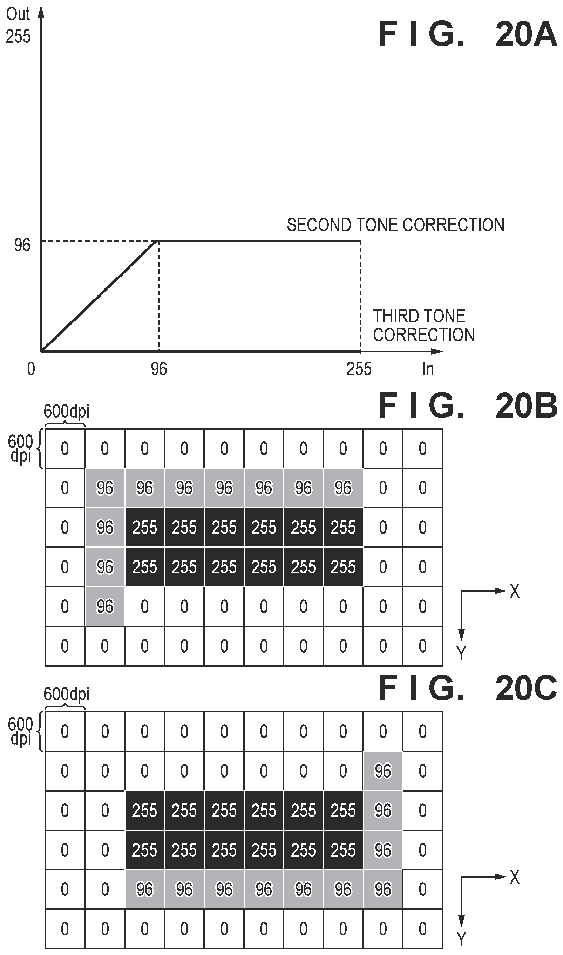

Fig. 20A shows an example of setting of the second tone correction processing and the third tone correction processing for implementing an arrangement in which dots on the end portion sides of the edge pixels are thinned. In this example, the dot arrangement on the non-end portion sides of the edge pixels is the same as in the first to fourth embodiments and thus Out = 0 is set in the third tone correction processing regardless of the value of In. On the other hand, in the second tone correction processing, the relationship between In and Out is the same as in the first tone correction processing in a region of Out ≤ 96, and Out = 96 is set in a region than the above region. Figs. 20B and 20C show the density values K1' and K2' obtained by applying these setting values, respectively. Figs. 19D and 19E are views showing the quantization data K1" obtained by executing steps S2413 to S2416 for the density value K1', and the quantization data K2" obtained by executing steps S2417 to S2420 for the density value K2', respectively. Fig. 19F is a view showing a dot arrangement when printing is executed after performing index expansion processing in step S305. As shown in these views, since the density values K1 of the left end pixels and the upper end pixels are "96", some of the quantization data of the pixels may probabilistically be "0000", and dots on the upstream sides of the pixels are accordingly thinned. On the other hand, since the density values K2 of the right end pixels and the lower end pixels are "96", some of the quantization data of the pixels may probabilistically be "0000", and dots on the downstream sides of the pixels are accordingly thinned. That is, an arrangement in which dots on the end portion sides of the upper end pixels and the lower end pixels are thinned can be implemented. Note that the maximum value of the second tone correction processing is set to "96" in this description but the present invention is not limited to this numerical value. For example, if more dots are preferably applied on the end portion sides of the edge pixels, a numerical value larger than "96" may be set. On the other hand, if dots are preferably decreased, a numerical value smaller than "96" may be set.

As described above, in this embodiment, it is detected and determined whether each edge pixel of the object is an upper end pixel, a lower end pixel, a left end pixel, or a right end pixel, and the tone correction processing is accordingly changed. This can control the ratio of forming dots in an outer region and the ratio of forming dots in an inner region while the ratio of forming dots on the non-end portion sides is lower than the ratio of forming dots on the end portion sides, similar to the first to fourth embodiments.

### [Sixth Embodiment]

### <Modification of Dot Arrangement of Edge Pixels by Applying Index Expansion Processing>

The sixth embodiment will be described below concerning points different from the first to fifth embodiments. The fifth embodiment has explained an example of tone correction processing executed by the color separation/quantization unit 211, as a configuration for implementing an arrangement in which dots are applied on the non-end portion sides of the edge pixels or an arrangement in which dots on the end portion sides of the edge pixels are thinned. The above arrangement can be implemented by index expansion processing executed by the nozzle separation processing unit 212. This embodiment will describe an example of edge processing. Note that in an example to be described below, all of steps S301 to S303 are the same as in the third embodiment and a description thereof will be omitted. Step S304 is the same as in Fig. 16A described as a modification of the first embodiment and a description thereof will be omitted. Assume that an input image is an image shown in Fig. 14A, similar to the third embodiment. Assume also that the first end portion is an upper end portion or a left end portion, and the second end portion is a lower end portion or a right end portion, similar to the third embodiment.

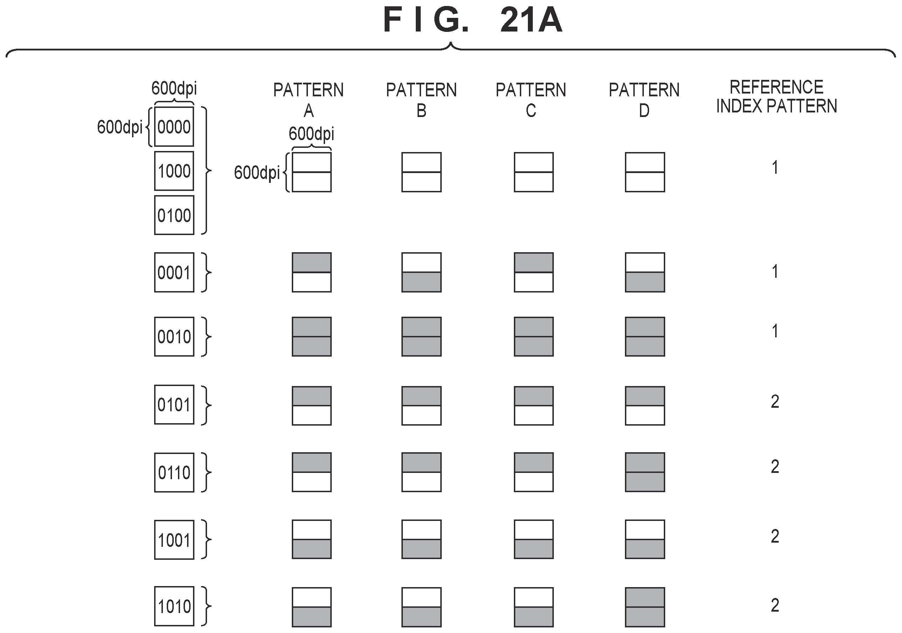

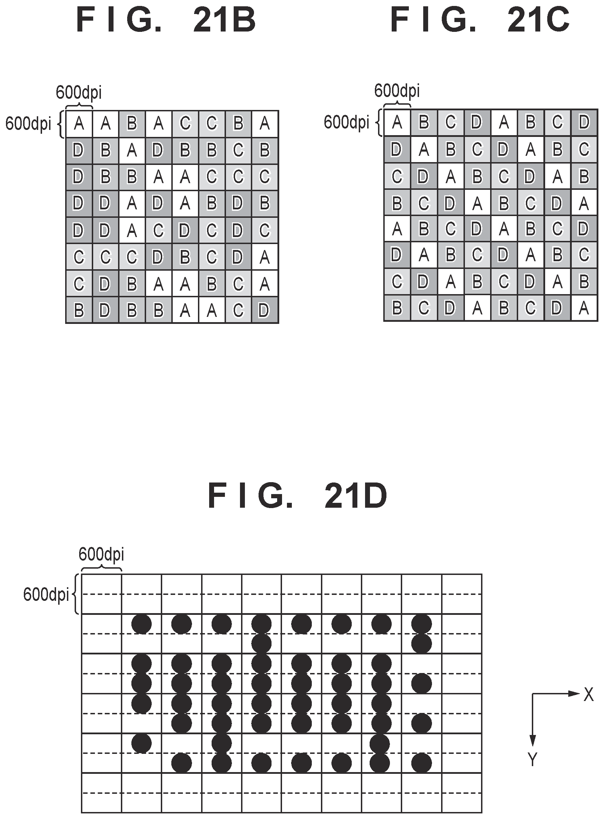

Figs. 21A to 21C are views showing an example of setting of the third index expansion processing executed by a nozzle separation processing unit 212 in step S305, and setting for implementing an arrangement in which dots are applied on the non-end portion sides of edge pixels. Fig. 21A is a view showing an example of a dot arrangement pattern. If quantization data K" indicates "0000", "0100", or "1000", no dot is arranged on either the upper side or the lower side of the pixel. If the quantization data K" indicates "0001", patterns A and C in which a dot is arranged on the upper side and pattern B and D in which a dot is arranged on the lower side are prepared. If the quantization data K" indicates "0010", a dot is surely arranged on each of the upper side and the lower side of the pixel. If the quantization data K" indicates "0101", a dot is surely arranged on the upper side of the pixel and no dot is surely arranged on the lower side of the pixel. If the quantization data K" indicates "0110", a dot is surely arranged on the upper side of the pixel. Then, a dot is also arranged on the lower side only for pattern D. If the quantization data K" indicates "1001", a dot is surely arranged on the lower side of the pixel and no dot is surely arranged on the upper side of the pixel. If the quantization data K" indicates "1010", a dot is surely arranged on the lower side of the pixel. Then, a dot is also arranged on the upper side only for pattern D. Furthermore, the nozzle separation processing unit 212 uses two kinds of reference index patterns in accordance with the quantization data. More specifically, if the quantization data K" indicates "0000", "0001", "0010", "0100", or "1000", the first reference index pattern is used; otherwise, the second reference index pattern is used. Fig. 21B is a view showing the first reference index pattern, and Fig. 21C is a view showing the second reference index pattern. Fig. 21D is a view of a dot arrangement when the setting values are applied. As shown in these views, among the left end pixels and the upper end pixels, in pixels indicating "D" in the second reference index pattern, dots are also arranged on the downstream sides. Similarly, in the right end pixels and the lower end pixels, dots are also arranged on the upstream sides. That is, an arrangement in which dots are applied on the non-end portion sides of the upper end pixels and the lower end pixels can be implemented.

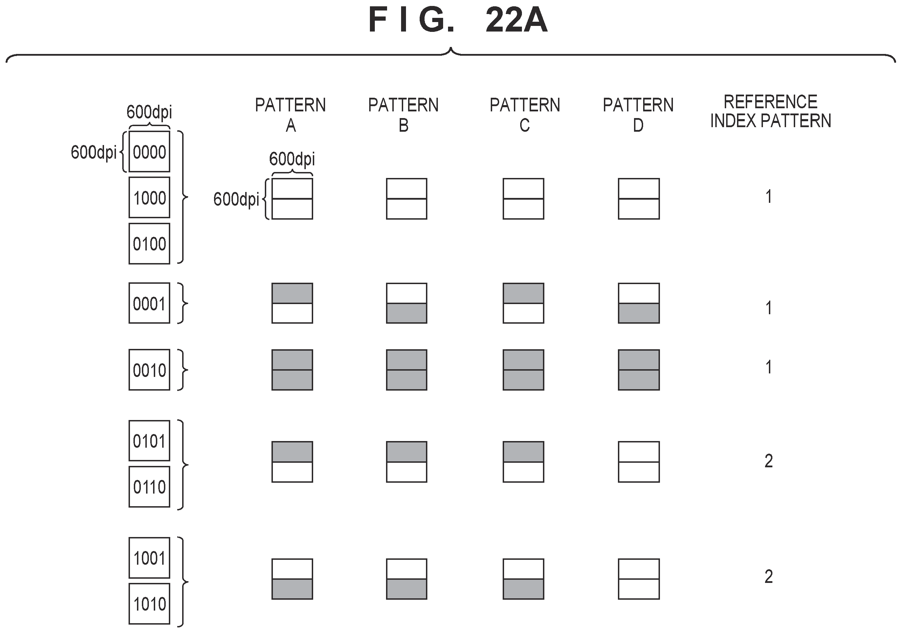

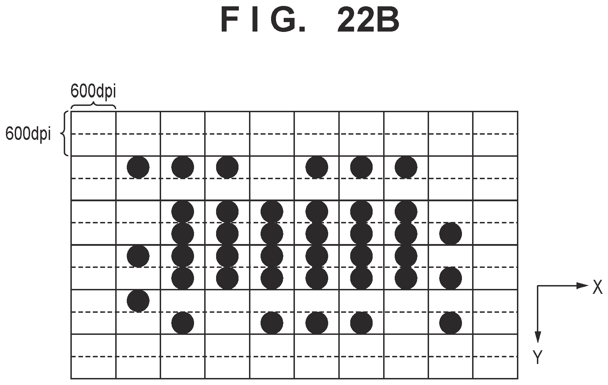

Fig. 22A is view showing an example of setting of the third index expansion processing executed by the nozzle separation processing unit 212 in step S305, and setting for implementing an arrangement in which dots on the end portion sides of the edge pixels are thinned. Fig. 22A is a view showing an example of a dot arrangement pattern. If the quantization data K" indicates "0000", "0100", "1000", "0001", or "0010", an arrangement is the same as in Fig. 21A. If the quantization data K" indicates "0101" or "0110", patterns A, B, and C in which a dot is arranged only on the upper side of the pixel, and pattern D in which no dot is arranged on either the upper side or the lower side are prepared. If the quantization data K" indicates "1001" or "1010", patterns A, B, and C in which a dot is arranged only on the lower side of the pixel and pattern D in which no dot is arranged on either the upper side or the lower side are prepared. Furthermore, the nozzle separation processing unit 212 uses two kinds of reference index patterns in accordance with the quantization data. The relationship between the quantization data K" and the reference index pattern to be used is the same as in Fig. 21A, and the first reference index pattern and the second reference index pattern are the same as those shown in Figs. 21B and 21C, respectively. Fig. 22B is a view of a dot arrangement when the setting values are applied. As shown in these views, with respect to the left end pixels and upper end pixels, dots on the upstream sides of pixels indicating "D" in the second reference index pattern are thinned. Similarly, with respect to the right end pixels and the lower end pixels, dots on the downstream sides are thinned. That is, an arrangement in which the dots on the end portion sides of the upper end pixels and the lower end pixels are thinned can be implemented.

As described above, in this embodiment, it is detected and determined whether each edge pixel of an object is an upper end pixel, a lower end pixel, a left end pixel, or a right end pixel, and the index expansion processing is accordingly changed. This can control the ratio of forming dots on the non-end portion sides and the ratio of forming dots on the end portion sides while the ratio of forming dots on the non-end portion sides is lower than the ratio of forming dots on the end portion sides, similar to the first to fourth embodiments. Note that this embodiment has explained an example of using four kinds of dot arrangement patterns of patterns A to D but the present invention is not limited to this setting. By defining more dot arrangement patterns and preparing reference index patterns corresponding to them, the application amount of dots on the non-end portion sides of the upper end pixels and the lower end pixels or the thinning amount of dots on the end portion sides may further be controlled. Although this embodiment has explained an example of changing the reference index pattern only for the edge pixels, the present invention is not limited to this setting. Even if a common reference index pattern is used for the edge pixels and other pixels, it is possible to apply dots on the non-end portion sides of the upper end pixels and the lower end pixels or to thin dots on the end portion sides.

### [Seventh Embodiment]

### <Edge Processing in Case Where Printing Is Executed at High Resolution in X Direction>

The seventh embodiment will be described below concerning points different from the first to sixth embodiments. Each of the first to sixth embodiments has explained edge processing in an apparatus configuration of printing dots at a high resolution in the Y direction, that is, the array direction of the nozzles of the respective colors, as compared with image data to undergo edge detection. This embodiment will describe the procedure of edge processing in an apparatus configuration of printing dots at a high resolution in the X direction, that is, the main scanning direction of a printhead H.

As the first procedure of this embodiment, an example in a case where up to two dots are arranged in a pixel of 600 dpi × 600 dpi regardless of whether the pixel is an edge pixel will be described. Steps S301 to S304 are the same as in the third embodiment and a description thereof will be omitted. In step S305, a nozzle separation processing unit 212 performs index expansion processing for quantization data K1" and K2" output in step S304. In the index expansion processing of this embodiment, using an index pattern prepared in advance, the quantization data K1" and K2" of 600 dpi × 600 dpi are converted into nozzle data K1p and K2p obtained by horizontally connecting data of 1200 dpi × 600 dpi. The quantization data K1" is converted into the nozzle data K1p by the first index expansion processing in step S817, and the quantization data K2" is converted into the nozzle data K2p by the second index expansion processing in step S818.

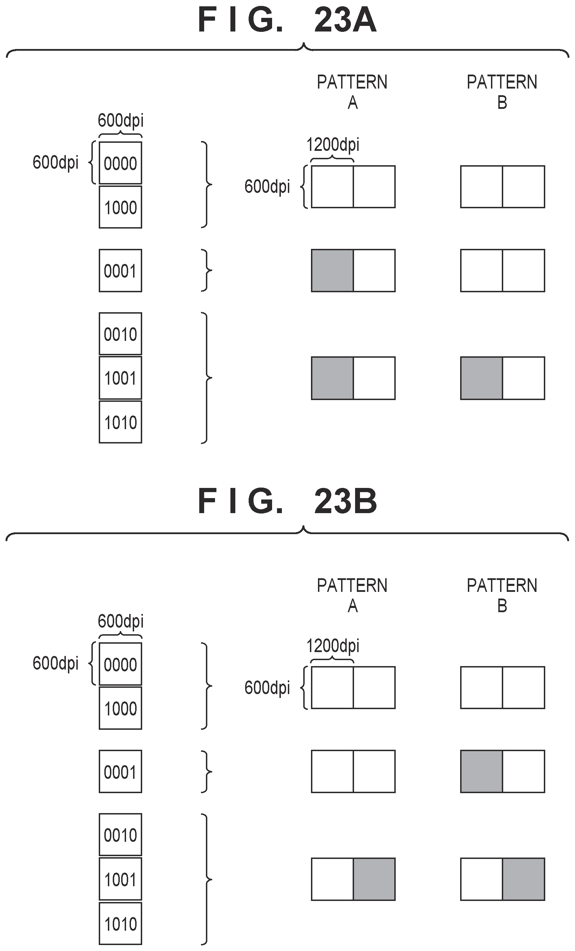

Figs. 23A and 23B are views showing examples of dot arrangement patterns of the first index expansion processing and the second index expansion processing, respectively. In the first index expansion processing, if the quantization data K1" indicates "0000" or "1000", no dot is surely arranged on either the left side or the right side of the pixel. If the quantization data K1" indicates "0001", pattern A in which a dot is arranged on the left side and pattern B in which no dot is arranged on either the left side or the right side are prepared. If the quantization data K1" indicates "0010", "1001", or "1010", a dot is surely arranged only on the left side. In the second index expansion processing, if the quantization data K2" indicates "0000" or "1000", no dot is surely arranged on either the left side or the right side of the pixel. If the quantization data K2" indicates "0001", pattern A in which no dot is arranged on either the left side or the right side and pattern B in which a dot is arranged on the left side are prepared. If the quantization data K2" indicates "0010", "1001", or "1010", a dot is surely arranged only on the right side. A reference index pattern is the same as in Fig. 8C. Then, the nozzle separation processing unit 212 generates the nozzle data K1p as data for an Ev nozzle of a black nozzle array 1101 corresponding to each pixel, and stores the data in a RAM 207. Furthermore, the nozzle separation processing unit 212 generates the nozzle data K2p as data for an Od nozzle of the black nozzle array 1101 corresponding to each pixel, and stores the data in the RAM 207. When controlling the printhead H by generating print data 214 from the nozzle data K1p and K2p, in a case where the main scanning direction of the printhead H is the +X direction, a printhead control unit 213 generates the nozzle data K1p and K2p in an order from the left side data to the right side data. On the other hand, in a case where the main scanning direction of the printhead H is the -X direction, the printhead control unit 213 generates the nozzle data K1p and K2p in an order from the right side data to the left side data.

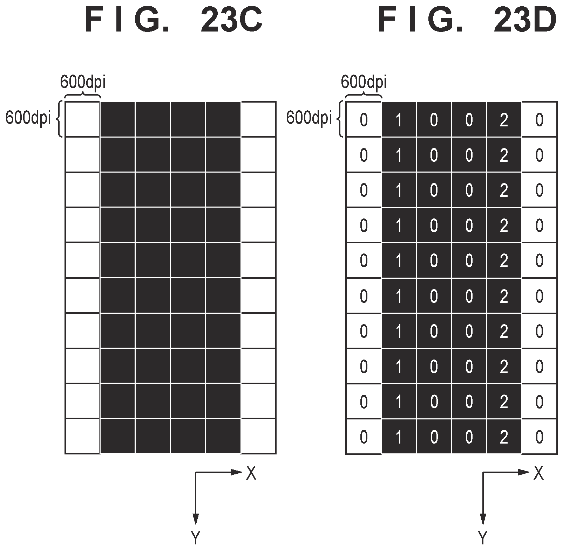

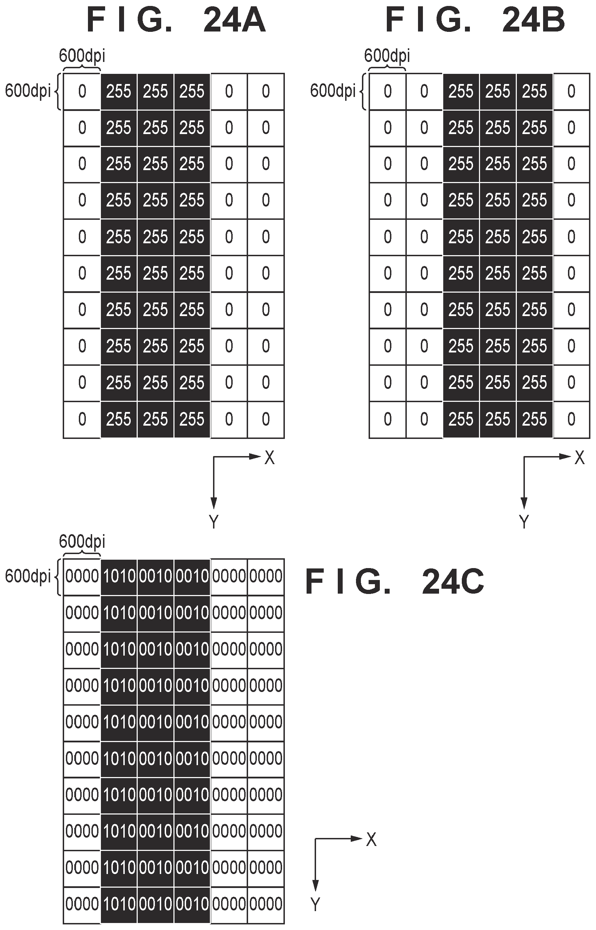

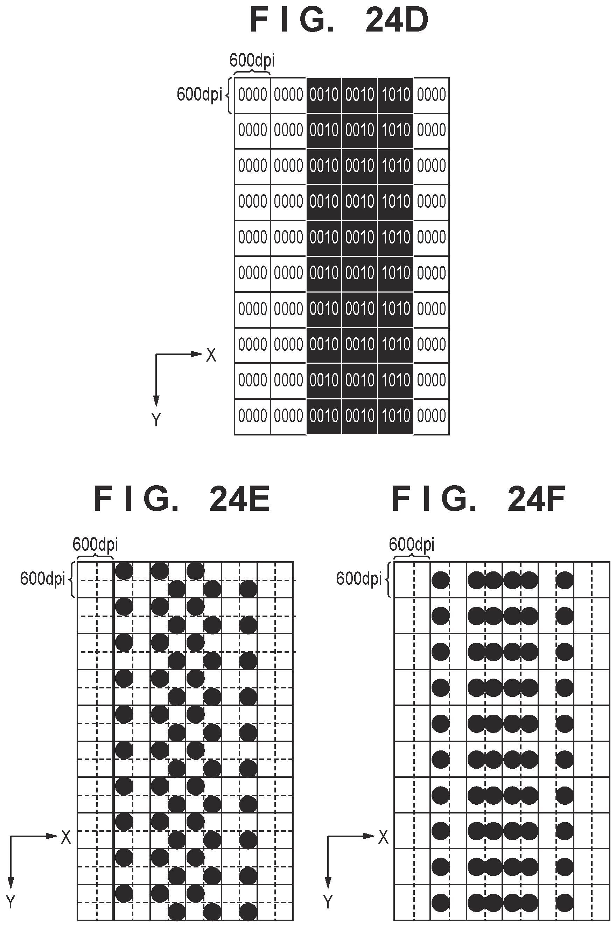

Figs. 23C to 24F are views showing a processing example of the first procedure. Note that in step S304, the first end portion is a left end portion and the second end portion is a right end portion. Fig. 23C is a view showing an input image having a vertical line as an object. The vertical line is an image uniformly extending in the array direction of the nozzles of the printhead H. In Fig. 23C, pixels are arrayed at 600 dpi, each pixel has a 8-bit, 256-level luminance value for each of R, G, and B, and so-called black pixels having luminance values of 0 for R, G, and B form a line having a width of four pixels in the X direction. Fig. 23D is a view showing a result of performing edge detection for the input image by an image analysis unit 210 in step S303. As shown in Fig. 23D, a left end pixel is indicated by "1" and a right end pixel is indicated by "2", similar to the third embodiment. Fig. 24A shows a density value K1' obtained after a color separation/quantization unit 211 performs tone correction processing in steps S803 to S805. As shown in Fig. 24A, pixels indicated by "2" in Fig. 23D, that is, right end pixels have a density value of 0. Fig. 24B shows a density value K2' obtained after tone correction processing is performed in steps S806 to S808. As shown in Fig. 24B, pixels indicated by "1" in Fig. 23D, that is, left end pixels have a density value of 0. Fig. 24C is a view showing quantization data K1" obtained by performing quantization by the color separation/quantization unit 211 in step S809 under the condition described in the first embodiment, and performing steps S810 to S812. Fig. 24D is a view showing quantization data K2" obtained by performing quantization by the color separation/quantization unit 211 in step S813 under the condition described in the first embodiment, and performing steps S814 to S816. As shown in Fig. 24C, among the pixels having K1' = 255 in Fig. 24A, the pixels indicated by "1" in Fig. 23D, that is, the left end pixels have quantization data "1010", and the remaining pixels have "0010". On the other hand, as shown in Fig. 24D, among the pixels having K2' = 255 in Fig. 24B, the pixels indicated by "2" in Fig. 23D, that is, the right end pixels have quantization data "1010", and the remaining pixels have "0010". The quantization data K1" and K2" are converted into nozzle data K1p and K2p based on the index patterns shown in Figs. 23A and 23B. Fig. 24E is a view showing a dot arrangement when the printhead H executes printing at 1200 dpi × 1200 dpi based on the nozzle data K1p and K2p. As shown in Fig. 24E, among the pixels having the luminance values of 0 in Fig. 23C, in a pixel that is not determined as either a left end pixel or a right end pixel in Fig. 23D, a dot is arranged on each of the left side and the right side of 1200 dpi × 1200 dpi. On the other hand, in a pixel that is determined as a left end pixel in Fig. 23D, a dot is arranged only on the left side in Fig. 24E, and in a pixel that is determined as a right end pixel in Fig. 23D, a dot is arranged only on the right side in Fig. 24E. That is, dots on the non-end portion sides of the left end pixels and right end pixels are thinned.

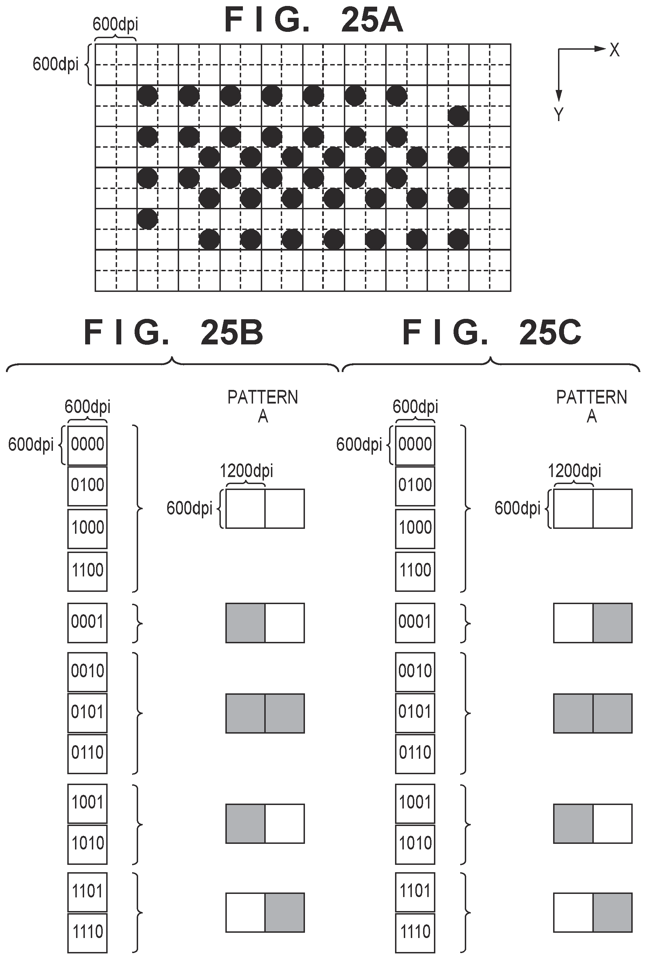

As described above, in the apparatus configuration of printing dots at a high resolution in the X direction, as compared with the input image data, it is determined whether each pixel is a left end pixel or a right end pixel, and the dot arrangement is accordingly changed, thereby making it possible to implement an arrangement in which dots on the non-end portion sides of the edge pixels are thinned. Fig. 25A shows a dot arrangement in a case where an input image is a solid image shown in Fig. 14A, the first end portion in step S304 is an upper end portion or a left end portion, and the second end portion is a lower end portion or a right end portion. As shown in Fig. 25A, similar to Figs. 24E and 24F, dots on the non-end portion sides in the left end portion and the right end portion are thinned, and dots on the non-end portion sides in the upper end portion and the lower end portion are also thinned. That is, this embodiment can implement an arrangement in which dots on the non-end portion sides of all the end pixels are thinned.

Note that this embodiment has explained a dot arrangement when executing printing at 1200 dpi × 1200 dpi in a case where an image resolution at which edge detection is performed is 600 dpi× 600 dpi. Note that with respect to the resolution in the Y direction, a resolution at which edge detection is performed may be equal to a resolution at which printing is executed. As a practical example, Fig. 24F shows a case where an Ev column and an Od column are not shifted by a half pitch (1,200 dpi) in the printhead H. Fig. 24F shows a dot arrangement when the vertical line shown in Fig. 23C is an input image in this case. As shown in Fig. 24F, dots on the non-end portion sides are thinned in the left end portion and the right end portion, similar to Fig. 24E, and it is thus possible to obtain the same effect.

### <Edge Processing in Case Where Four Dots are Arranged in Pixel of 600 dpi × 600 dpi>

Next, as the second procedure of this embodiment, an example in a case where up to four dots are arranged in a pixel of 600 dpi × 600 dpi will be described. Steps S301 and S302 are the same as in the third embodiment and a description thereof will be omitted.

In image analysis processing executed in step S303, when performing edge detection in step S403, the image analysis unit 210 outputs "1" for an upper end pixel, "2" for a lower end pixel, "3" for a left end pixel, and "4" for a right end pixel.

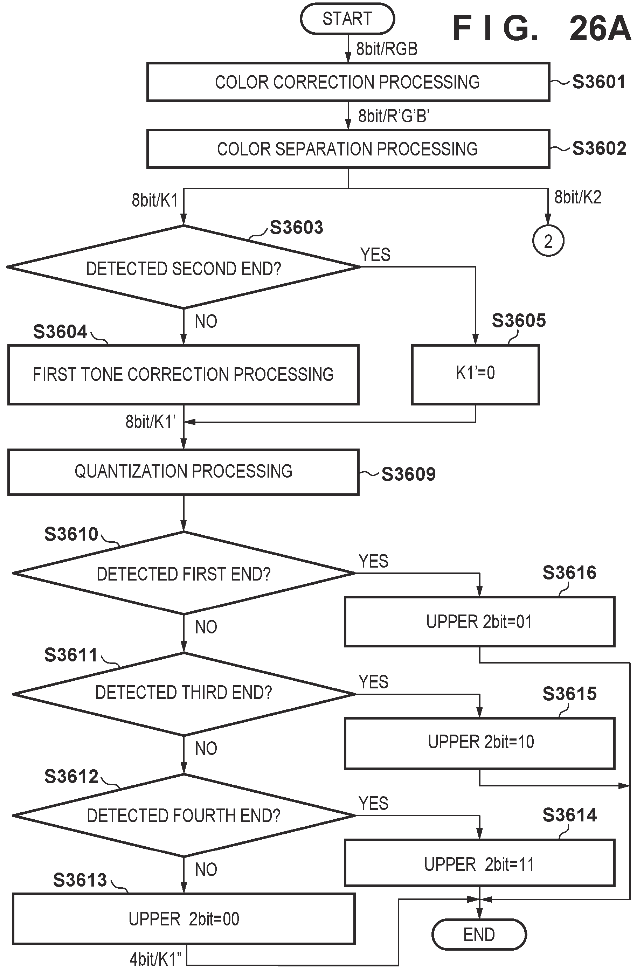

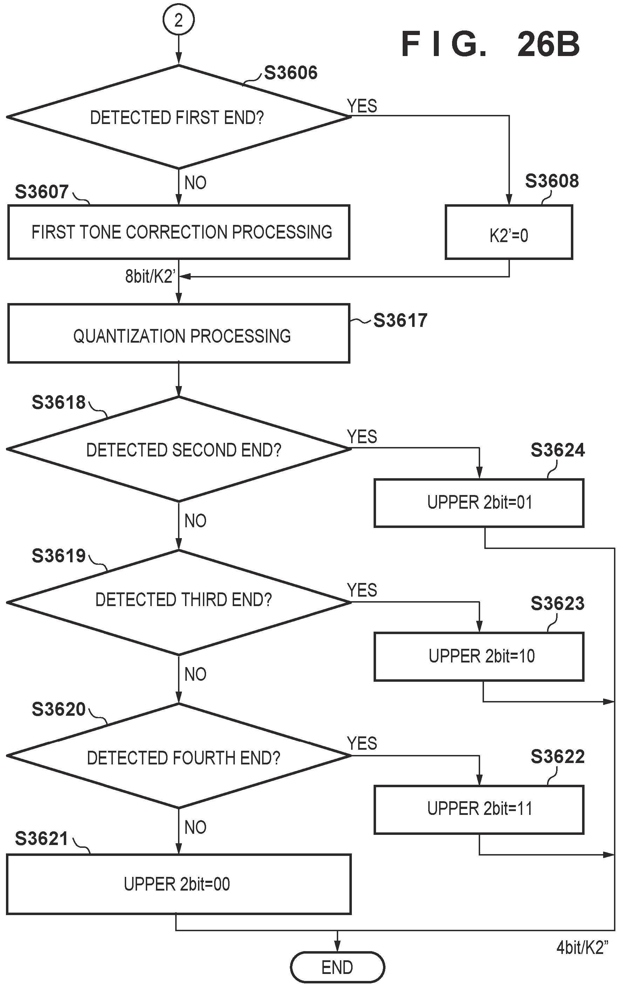

Figs. 26A and 26B show an example of the internal processing procedure of color separation/quantization processing executed by the color separation/quantization unit 211 in step S304 according to this embodiment. Steps S3601 to S3608 are the same as steps S801 to S808, respectively. In step S3609, the color separation/quantization unit 211 performs the same quantization processing as in step S809 for the density value K1' to convert it into 4-bit 3-valued quantization data. Furthermore, in steps S3610 to S3616, the color separation/quantization unit 211 sets a value in upper 2 bits based on the end portion information of the processed pixel using the result determined in step S303, and outputs the 4-bit quantization data K1". More specifically, if it is detected that the pixel is in the first end portion, upper 2 bits = 01 is set in step S3616. If it is detected that the pixel is in the third end portion, the upper 2 bits = 10 is set in step S3615. If it is detected that the pixel is in the fourth end portion, upper 2 bits = 11 is set in step S3614. If it is detected that the pixel is not in the first end portion, the third end portion, or the fourth end portion, upper 2 bits = 00 is set in step S3613. Similarly, in step S3617, the color separation/quantization unit 211 performs the same quantization processing as in step S813 for the density value K2' to convert it into 4-bit 3-valued quantization data. Furthermore, in steps S3618 to S3624, the color separation/quantization unit 211 sets a value in upper 2 bits based on the end portion information of the processed pixel using the result determined in step S303, and outputs the 4-bit quantization data K2". More specifically, if it is detected that the pixel is in the second end portion, upper 2 bits = 01 is set in step S3624. If it is detected that the pixel is in the third end portion, upper 2 bits = 10 is set in step S3623. If it is detected that the pixel is in the fourth end portion, upper 2 bits = 11 is set in step S3622. If it is detected that the pixel is not in the second end portion, the third end portion, or the fourth end portion, upper 2 bits = 00 is set in step S3621.

Next, in step S305, the image quantized in step S304 undergoes the index expansion processing by the nozzle separation processing unit 212. The processing procedure is the same as the first procedure. Figs. 25B and 25C are views respectively showing examples of dot arrangement patterns of the first index expansion processing and the second index expansion processing in this procedure. In the first index expansion processing, if the quantization data K1" indicates "0000", "0100", "1000", or "1100", no dot is arranged on either the left side or the right side of the pixel. If the quantization data K1" indicates "0001", "1001", or "1010", a dot is arranged on the left side of the pixel. If the quantization data K1" indicates "0010", "0101", or "0110", a dot is arranged on each of the left side and the right side of the pixel. If the quantization data K1" indicates "1101" or "1110", a dot is arranged on the right side of the pixel. In the second index expansion processing, if the quantization data K2" indicates "0001", a dot is arranged on the right side of the pixel. In other cases, arrangements are the same as in the first index expansion processing. Subsequent processing of the nozzle data K1p and K2p generated by the above setting is the same as in the first procedure and a description thereof will be omitted.

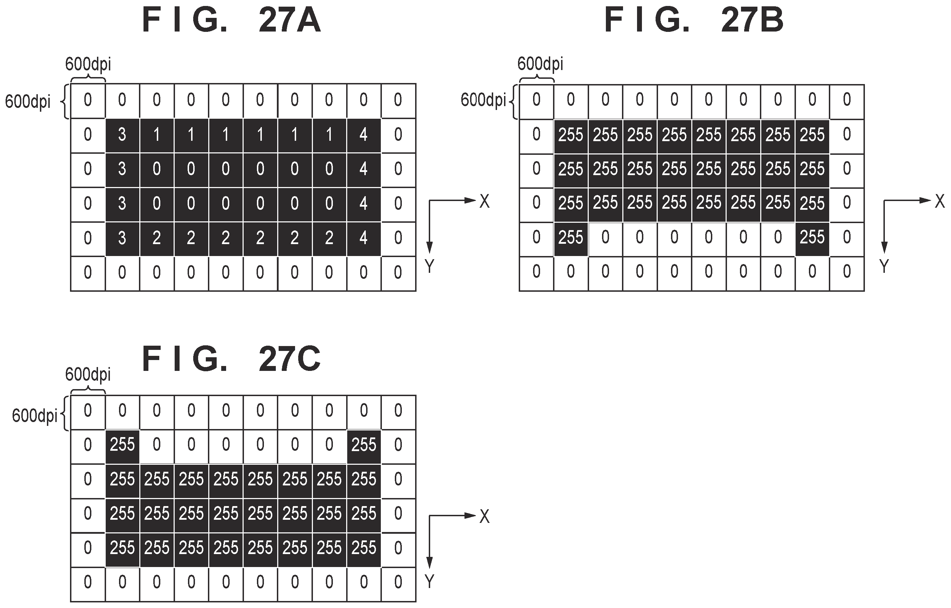

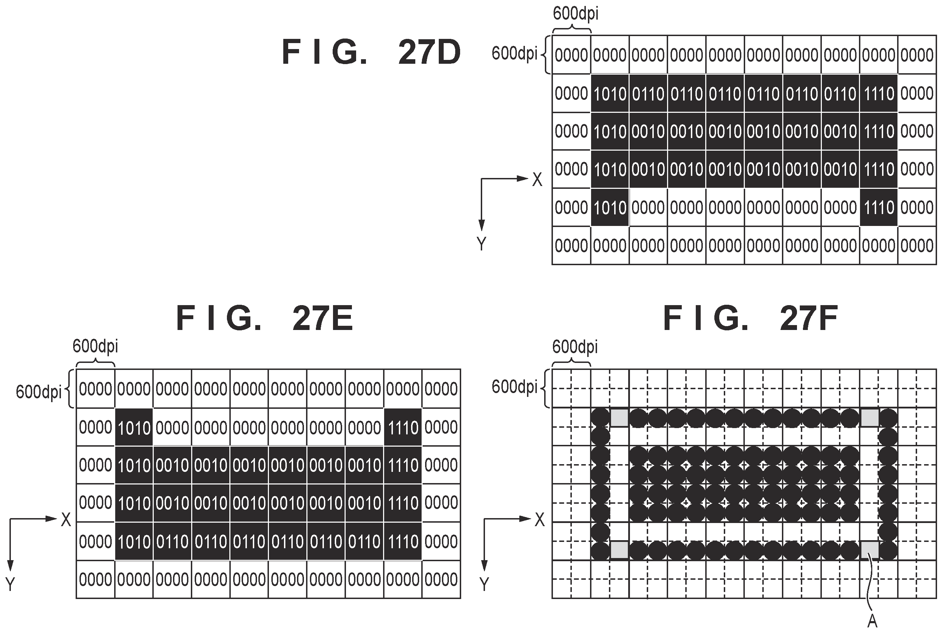

Figs. 27A to 27F are views showing a processing example of the second procedure in a case where an input image is the solid image shown in Fig. 14A. Note that in this processing example, the first end portion is an upper end portion, the second end portion is a lower end portion, the third end portion is a left end portion, and the fourth end portion is a right end portion. Fig. 27A is a view showing a result of performing edge detection for the input image by the image analysis unit 210 in step S303. As shown in Fig. 27A, an upper end pixel is indicated by "1", a lower end pixel is indicated by "2", a left end pixel is indicated by "3", and a right end pixel is indicated by "4". Fig. 27B shows the density value K1' obtained after the color separation/quantization unit 211 performs tone correction processing in steps S3603 to S3605. As shown in Fig. 27B, pixels indicated by "2" in Fig. 27A, that is, lower end pixels have a density value of 0. Fig. 27C shows the density value K2' obtained after tone correction processing is performed in steps S3606 to S3608. As shown in Fig. 27C, pixels indicated by "1" in Fig. 27A, that is, upper end pixels have a density value of 0. Fig. 27D is a view showing the quantization data K1" obtained by performing quantization by the color separation/quantization unit 211 in step S3609 under the condition described in the first embodiment, and performing steps S3610 to S3616. Fig. 27E is a view showing the quantization data K2" obtained by performing quantization by the color separation/quantization unit 211 in step S3617 under the condition described in the first embodiment, and performing steps S3618 to S3624. As shown in Fig. 27D, among the pixels having K1' = 255 in Fig. 27B, the pixels indicated by "1" in Fig. 27A, that is, the upper end pixels have quantization data "0110". Similarly, the pixels indicated by "3" in Fig. 27A, that is, the left end pixels have quantization data "1010", and the pixels indicated by "4" in Fig. 27A, that is, the right end pixels have quantization data "1110". The pixels indicated by "0" in Fig. 27A, that is, the pixels which are not any of the end pixels have quantization data "0010". On the other hand, as shown in Fig. 27E, among the pixels having K2' = 255 in Fig. 27C, the pixels indicated by "2" in Fig. 27A, that is, the lower end pixels have quantization data "0110". The pixels indicated by "3", "4", or "0" in Fig. 27A have the same quantization data as K1". The quantization data K1" and K2" are converted into the nozzle data K1p and K2p based on the index patterns shown in Figs. 25B and 25C. Fig. 27F is a view showing a dot arrangement when the printhead H executes printing at 1200 dpi × 1200 dpi based on the nozzle data K1p and K2p. As shown in Fig. 27F, among the pixels having the luminance values of 0 in Fig. 14A, in a pixel that is not determined as an upper end pixel, a lower end pixel, a left end pixel, or a right end pixel in Fig. 27A, dots are arranged in all regions of 1200 dpi × 1200 dpi. On the other hand, in a pixel that is determined as an upper end pixel in Fig. 27A, dots are arranged only on the upper side in Fig. 27F, and in a pixel that is determined as a lower end pixel in Fig. 27A, dots are arranged only on the lower side in Fig. 27F. Furthermore, in a pixel that is determined as a left end pixel in Fig. 27A, dots are arranged only on the left side in Fig. 27F, and in a pixel that is determined as a right end pixel in Fig. 27A, dots are arranged only on the right side in Fig. 27F. That is, this procedure can implement an arrangement in which dots on the non-end portion sides of all the end pixels are thinned.

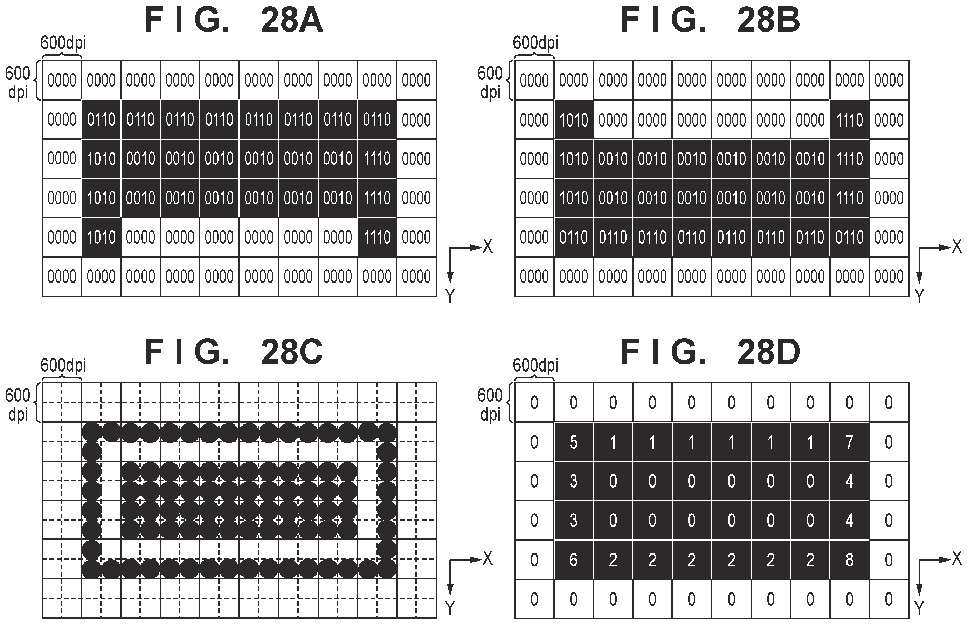

In Fig. 27F, blank region A is generated in units of 1200 dpi × 1200 dpi in each of an upper left pixel, an upper right pixel, a lower left pixel, and a lower right pixel. Blank region A can be avoided by changing an edge pattern output in step S403 and the processes of steps S3610, S3616, S3618, and S3624. More specifically, in step S403, the image analysis unit 210 outputs "5" for the upper left pixel in the left end portion and the upper end portion, "6" for the lower left pixel in the left end portion and the lower end portion, "7" for the upper right pixel in the right end portion and the upper end portion, and "8" for the lower right pixel in the right end portion and the lower end portion. Fig. 28D is a view showing an output result. Then, in step S3610, if "5" indicating the upper left pixel and "7" indicating the upper right pixel are detected in addition to "1" indicating the upper end pixel, the color separation/quantization unit 211 sets upper 2 bits = 01 of the quantization data K1" in step S3616. Furthermore, in step S3618, if "6" indicating the lower left pixel and "8" indicating the lower right pixel are detected in addition to "2" indicating the lower end pixel, the color separation/quantization unit 211 sets upper 2 bits = 01 of the quantization data K2" in step S3624. Figs. 28A and 28B respectively show the quantization data K1" and K2" at this time. This changes the quantization data of the upper left pixel, the lower left pixel, the upper right pixel, and the lower right pixel, and changes the dot arrangement to be selected in step S305. Fig. 28C is a view showing the dot arrangement by this processing, and it is found that generation of blank region A can be avoided.

As described above, in this embodiment, in an apparatus configuration capable of printing dots at a high resolution in the X direction, as compared with image data to undergo edge detection, it is detected and determined whether each edge pixel of the object is an upper end pixel, a lower end pixel, a left end pixel, or a right end pixel, and the dot arrangement is accordingly changed. This obtains a dot arrangement in which in the X direction, the ratio of forming dots on the non-end portion sides is lower than the ratio of forming dots on the end portion sides and the magnitude relationship between the ratios is equal between an edge pixel region formed from the left end pixels and that formed from the right end pixels. In an apparatus configuration capable of printing dots at a high resolution also in the Y direction, a dot arrangement having the same characteristic is obtained with respect to an edge pixel region formed from the upper end pixels and an edge pixel region formed from the lower end pixels. This dot arrangement can reduce a deterioration in image quality caused by bleeding of printed ink on a print medium. Furthermore, since edge detection can be performed using the apparatus configuration, that is, image data with a resolution lower than the resolution in the nozzle array direction of the printhead H and the resolution in the main scanning direction, it is possible to reduce the load of image processing.

Note that this embodiment has explained an example of processing in a case where an object in an input image has luminance values of 0 for R, G, and B, that is, so-called black pixels. The present invention is not limited to the black pixels, as a matter of course. Similar to the description of the fourth embodiment, even for an intermediate-density input image, if a density is converted into quantization data of "XX01" or "XX10" (XX is other than 00), the dot arrangement of the edge pixels is the same as in a case of the black pixels. That is, even for an intermediate density, it is possible to improve the sharpness of the end portions and to reduce a deterioration in image quality caused by bleeding of printed ink on a print medium.

This embodiment has explained an example of an arrangement in which dots are uniformly arranged on the end portion sides of the edge pixels and no dots are arranged on the non-end portion sides. However, this example is merely an example, and an optimum dot arrangement of the edge pixels may be different depending on the configuration of a printing apparatus, the degree of bleeding of printed ink on a print medium, and the like. Therefore, similar to the description of the fifth and sixth embodiments, the settings of the tone correction processing and the index expansion processing may be changed to obtain an arrangement in which dots are applied on the non-end portion sides of the edge pixels or an arrangement in which dots on the end portion sides of the edge pixels are thinned.

### [Eighth Embodiment]

### <Edge Processing of Implementing Dot Arrangement in Which Dots on End Portion Sides of Edge Pixels are Thinned>

The eighth embodiment will be described below concerning points different from the first to seventh embodiments. Each of the first to seventh embodiments has explained an example of edge processing of the arrangement in which dots on the non-end portion sides of the edge pixels are mainly thinned. However, depending on a feature required for an image printed on a print medium, an arrangement other than an arrangement in which dots on the non-end portion sides are thinned may be preferable. In a case where it is required to decrease the image width of a printed image, it may be more preferable to thin dots on the end portion sides of the edge pixels and uniformly arrange dots on the non-end portion sides. For example, in a case where a character or a symbol includes a portion where horizontal lines or vertical lines are densely arranged, it is possible to more effectively prevent line thickening by thinning dots on the end portion sides of the edge pixels and uniformly arranging dots on the non-end portion sides in such portion. This embodiment will describe an example of edge processing of implementing such arrangement.

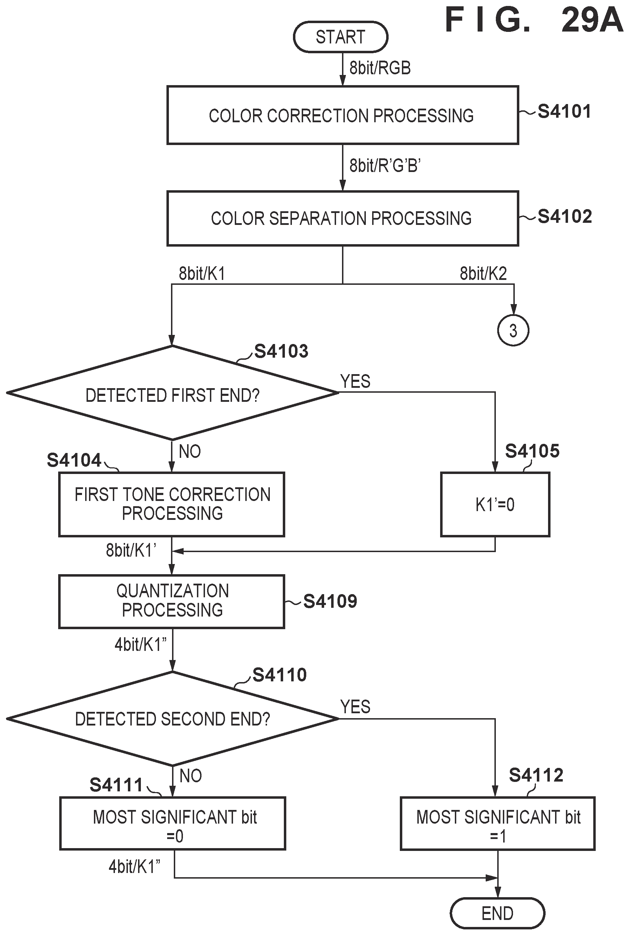

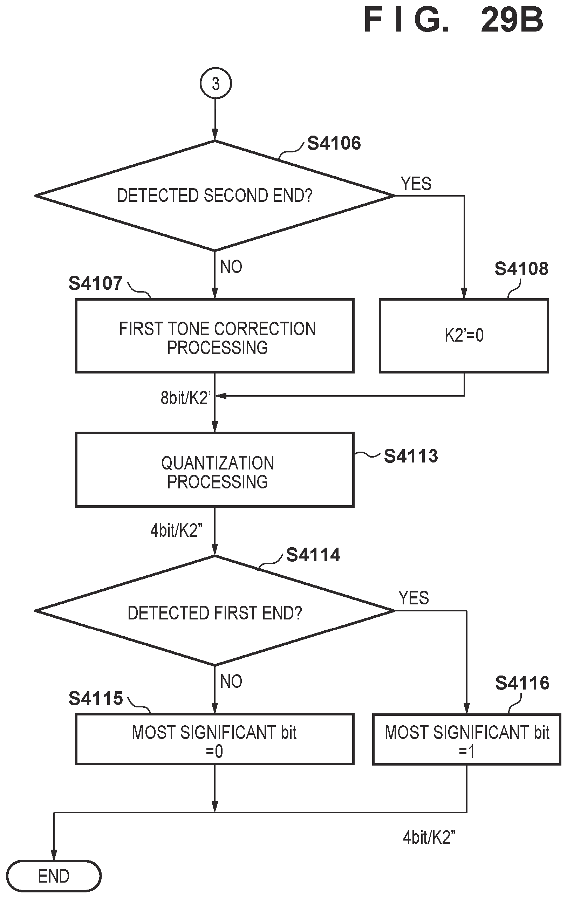

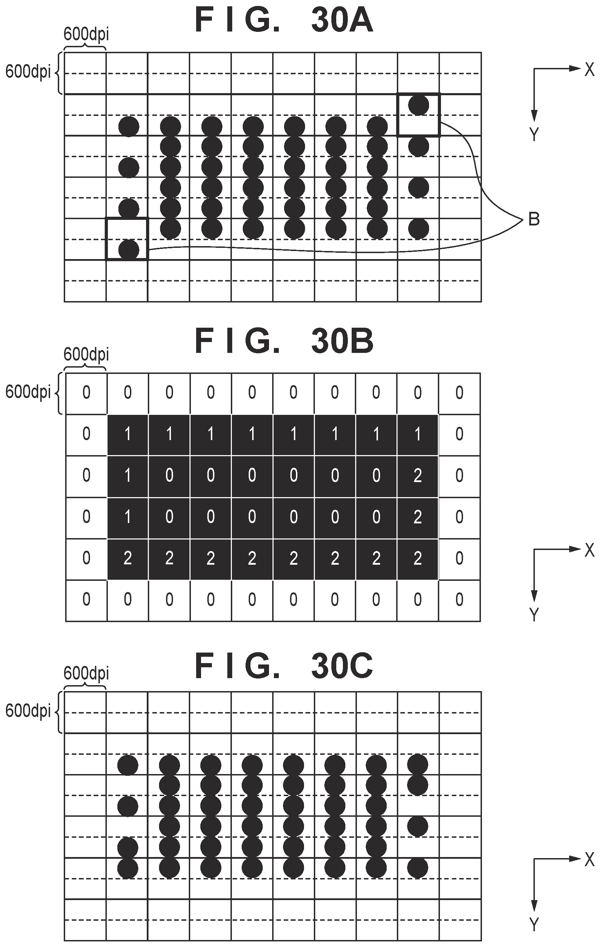

Similar to the first to sixth embodiments, an example in a case where printing is executed at a high resolution in the Y direction with respect to input image data is shown. With respect to the procedure of the edge processing, all of steps S301 to S303 and S305 are the same as in the third embodiment and a description thereof will be omitted. Figs. 29A and 29B show an example of the internal processing procedure of color separation/quantization processing executed in step S304. The difference between Figs. 29 A and 29B and 6 is that detected pieces of end portion information are changed between steps S4103, S4106, S4110 and S4114 and steps S803, S806, S810, and S814. That is, the dot arrangement of edge pixels of this embodiment is obtained by interchanging the arrangement positions of the upstream side nozzle and downstream side nozzle (Ev nozzle and Od nozzle) with respect to the arrangement positions shown in each of the first to fourth embodiments. As an example, Fig. 30A shows a dot arrangement of this embodiment in a case where input image data is a solid image shown in Fig. 14A. Note that the definitions of the first end portion and the second end portion in this example are the same as in the description of the third embodiment. As shown in Fig. 30A, except for pixels indicated by B, dots are arranged only on the downstream sides of the edge pixels at the upper end and dots are arranged only on the upstream sides of the edge pixels at the lower end. If it is preferable to arrange dots on the non-end portion sides of the pixels indicated by B, this can be implemented by changing an edge pattern output in step S403. More specifically, in step S403, an image analysis unit 210 outputs "2" for the lower left pixel, similar to the edge pixel at the lower end, and outputs "1" for the upper right pixel, similar to the edge pixel at the upper end. Fig. 30B is a view showing an output result. Thus, with respect to the lower left pixel and the upper right pixel, a nozzle for printing in Figs. 29A and 29B is changed between the Ev nozzle and the Od nozzle. Fig. 30C is a view showing the dot arrangement.

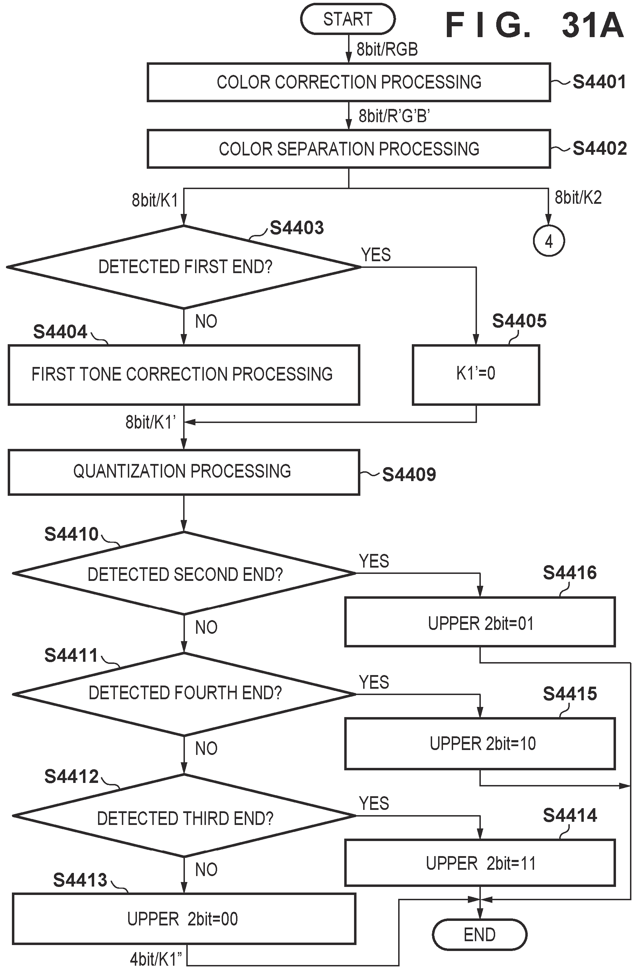

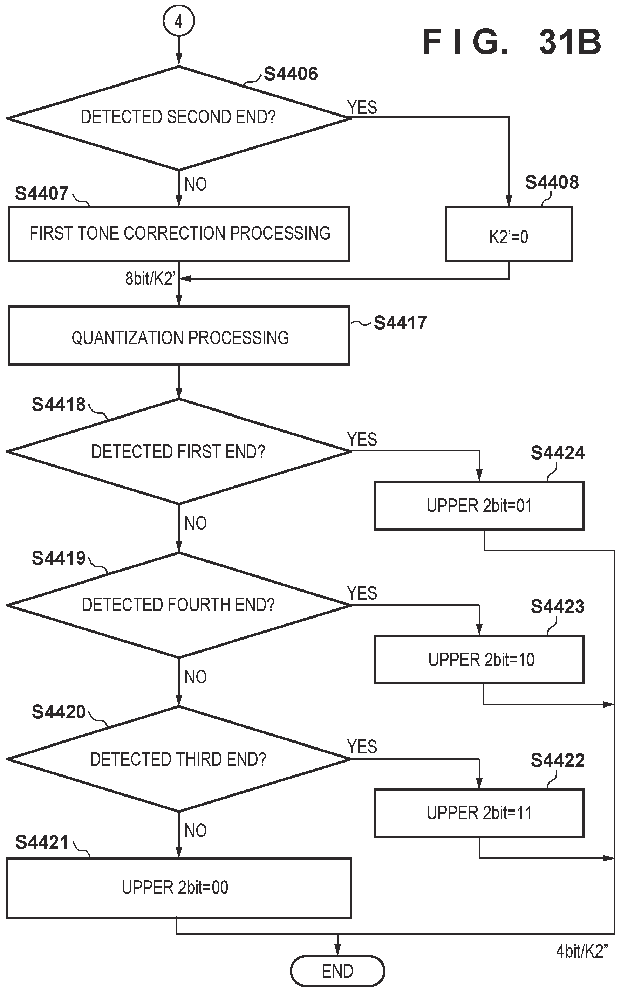

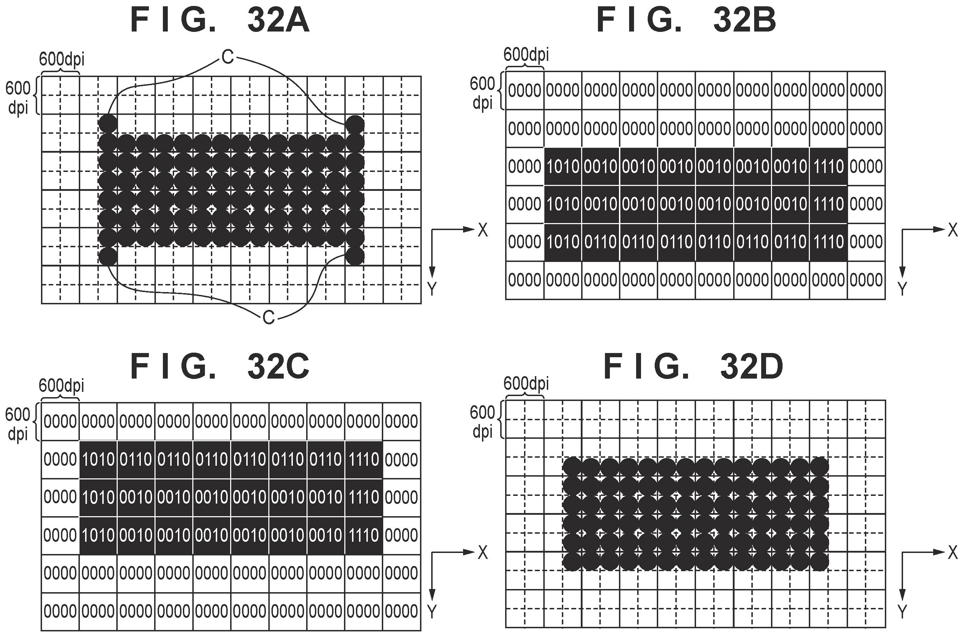

Next, a processing example when four dots are arranged in a pixel of 600 dpi × 600 dpi in a case where printing is executed at a high resolution also in the X direction with respect to the input image data, similar to the seventh embodiment, will be described. With respect to the procedure of the edge processing, all of steps S301 to S303 and S305 are all the same as in the second procedure of the seventh embodiment and a description thereof will be omitted. Figs. 31A and 31B show an example of the internal processing procedure of the color separation/quantization processing executed in step S304. The difference between Figs. 31A and 31B and 26A and 26B is that steps S4403, S4406, S4410 to S4412, and S4418 to S4420 are different from steps S3603, S3606, S3610 to S3612, and S3618 to S3620. More specifically, with respect to detected end portions, the first end portion and the second end portion are interchanged and the third end portion and the fourth end portion are interchanged. That is, the dot arrangement of the edge pixels of this embodiment is obtained by interchanging the upstream side nozzle and the downstream side nozzle (Ev nozzle and Od nozzle) and interchanging the left side and the right side with respect to Fig. 27F that shows the arrangement of the seventh embodiment. As an example, Fig. 32A shows a dot arrangement of this embodiment in a case where input image data is the solid image shown in Fig. 14A. Note that the definitions of the first to fourth end portions in this example are the same as in the description of the seventh embodiment. As shown in Fig. 32A, except for pixels indicated by C, dots are arranged only on the downstream sides of the edge pixels at the upper end, dots are arranged only on the upstream sides of the edge pixels at the lower end, dots are arranged only on the right sides of the edge pixels at the left end, and dots are arranged only on the left sides of the edge pixels at the right end. If it is preferable not to arrange dots on the end portion sides of the pixels indicated by C, this can be implemented by changing an edge pattern output in step S403 and processes of steps S4403 and S4406. First, in step S403, the image analysis unit 210 outputs edge information shown in Fig. 28D, similar to the description in avoiding blank region A in the seventh embodiment. Then, if, in step S4403, "5" indicating the upper left edge pixel and "7" indicating the upper right edge pixel are detected in addition to "1" indicating the edge pixel at the upper end, a color separation/quantization unit 211 sets a density value K1' = 0 in step S4405. If, in step S4406, "6" indicating the lower left edge pixel and "8" indicating the lower right edge pixel are detected in addition to "2" indicating the edge pixel at the lower end, the color separation/quantization unit 211 sets a density value K2' = 0 in step S4408. Figs. 32B and 32C are views respectively showing quantization data K1" and K2" thereafter. Fig. 32D is a view showing a dot arrangement by this processing. With this processing, the upper left edge pixel and the upper right edge pixel have quantization data K1" = "0000", in which no dot is arranged on the end portion side, and the lower left edge pixel and the lower right edge pixel have quantization data K2" = "0000", in which no dot is arranged on the end portion side. That is, in the pixels indicated by C, no dots are arranged on the end portion sides.

As described above, in this embodiment, in an apparatus configuration capable of printing dots at a high resolution, as compared with image data to undergo edge detection, it is detected and determined whether each edge pixel of the object is an upper end pixel, a lower end pixel, a left end pixel, or a right end pixel, and the dot arrangement is accordingly changed. This can implement a dot arrangement in which dots are formed only on the non-end portion sides with respect to all the end pixels. That is, an arrangement preferable for decreasing the image width of a printed image can be implemented.

Note that this embodiment has explained an example of a solid image as an input image but the present invention is not limited to this. The operation of this embodiment is applicable to a horizontal line or a vertical line, similar to other embodiments.

Note that this embodiment has explained an example in which dots are thinned with respect to the upper end pixels, the lower end pixels, the left end pixels, and the right end pixels but the present invention is not limited to this depending on a feature required for an image. For example, if it is required to output an image width of a printed image, that is larger than in this embodiment and is smaller than in the first to seventh embodiments, it is preferable to thin dots with respect to the upper end pixels or the lower end pixels and to thin dots with respect to the right end pixels or the left end pixels. In this case, this can be implemented by setting outputs to 0 for the upper end pixels or the lower end pixels and outputs to 0 for the right end pixels or the left end pixels in the edge pattern output in step S403.

Note that this embodiment has explained processing in a case where an object in an input image has luminance values of 0 for R, G, and B, that is, so-called black pixels. The present invention is not limited to the black pixels, as a matter of course. Similar to the description of the fourth and seventh embodiments, even for an intermediate-density input image, if a density is converted into quantization data of "XX01" or "XX10" (XX is other than 00), the dot arrangement of the edge pixels is the same as in a case of the black pixels. That is, even for an intermediate density, it is possible to implement an arrangement preferable for decreasing the image width of a printed image.

Note that this embodiment has explained an example in which the image analysis processing in step S303 is the same between this embodiment and the third to seventh embodiments and end portion information detected in color separation/quantization processing in step S304 is changed. The present invention, however, is not limited to this. For example, all of "1", "2", "3", and "4" as actual values of a parameter of end portion information detected in step S304 may be the same as in the third to seventh embodiments and the edge determination output of the image analysis processing of step S303 may be changed. As a practical setting example, when two dots are arranged in a pixel of 600 dpi × 600 dpi, in step S303, the image analysis unit 210 outputs "2" for the upper end pixels and the left end pixels, and outputs "1" for the lower end pixels and the right end pixels. Alternatively, when four dots are arranged in a pixel of 600 dpi × 600 dpi, in step S303, the image analysis unit 210 outputs "2" for the upper end pixels, "1" for the lower end pixels, "4" for the left end pixels, and "3" for the right end pixels. In this setting as well, it is possible to obtain the same dot arrangement as in this embodiment.

### [Ninth Embodiment]

### <Effective Use of Main Body Resources>

The ninth embodiment will be described below concerning points different from the first to eighth embodiments. In the first embodiment, image analysis using pattern matching information is executed. A configuration in which the image analysis unit 210 executes image analysis, and an analysis result is transmitted to the color separation/quantization unit 211 has been described.

Productivity (print speed) is an important index for an office document in an inkjet printer, and if analysis processing and correction processing according to this analysis processing are performed at a speed lower than a required speed, a printhead may stop to cause a deterioration in image quality. To prevent the analysis processing and the correction processing from being delayed with respect to the required speed, it is effective to implement the processing by a "dedicated circuit". If a circuit logic is specialized for limited use like an ASIC, it is possible to execute control to prevent an excess calculation cost or memory access from occurring, as compared with a CPU, and to perform design so that data processing can be performed on circuit wiring with a low delay. Therefore, it is general to improve a processing speed by a dedicated circuit, as compared with the CPU, and this is also used in a print step and a scan step of an inkjet printer. On the other hand, a design time until a dedicated circuit is decided is long, and a function cannot be changed after the circuit is implemented. There is also a semi-dedicated circuit form having functional flexibility like a Field Programmable Gate Array (FPGA), but it is necessary to provide many wiring switches in return for flexibility. By restricting a circuit scale that can be mounted in an image processing apparatus, the function may be restricted, similar to the ASIC. When a time taken to mount a new dedicated circuit is assumed, market responsiveness deteriorates.

To cope with this, this embodiment will describe a configuration of implementing dot thinning and arrangement control using a dedicated circuit mounted for a print step or scan step in an inkjet printer. This can obtain market responsiveness, and also reduce the circuit scale (production cost reduction) by not implementing special processing by a dedicated circuit.

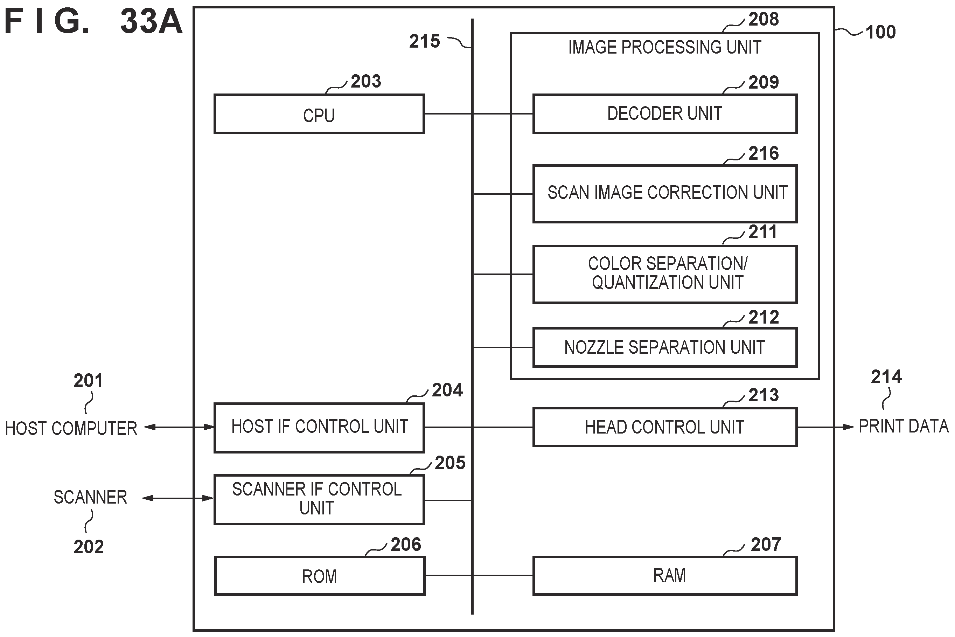

Fig. 33A shows an example of an assumed environment of an image processing apparatus according to this embodiment. The difference from Fig. 2B will mainly be described. Referring to Fig. 33A, there is no image analysis unit 210. The respective processing units of an image processing unit 208 are connected to a shared bus 215, and information is transmitted among the processing units only via the shared bus.

In print processing in a case where this embodiment is not executed, in the image processing unit 208, the dedicated circuit is used in an order of a decoder unit 209, a color separation/quantization unit 211, and a nozzle separation processing unit 212. In copy processing, in the image processing unit 208, the dedicated circuit is used in an order of a scan image correction unit 216, the color separation/quantization unit 211, and the nozzle separation processing unit 212. In a scan processing, in the image processing unit 208, the dedicated circuit of the scan image correction unit 216 is used. Note that an image may be compressed once for data transfer in copy/scan processing, and a decoder unit 209 can also be used in this case.

This embodiment will describe a method of executing image analysis using the same dedicated circuit as that in a correction step of a scan image actually executed by the scan image correction unit 216.

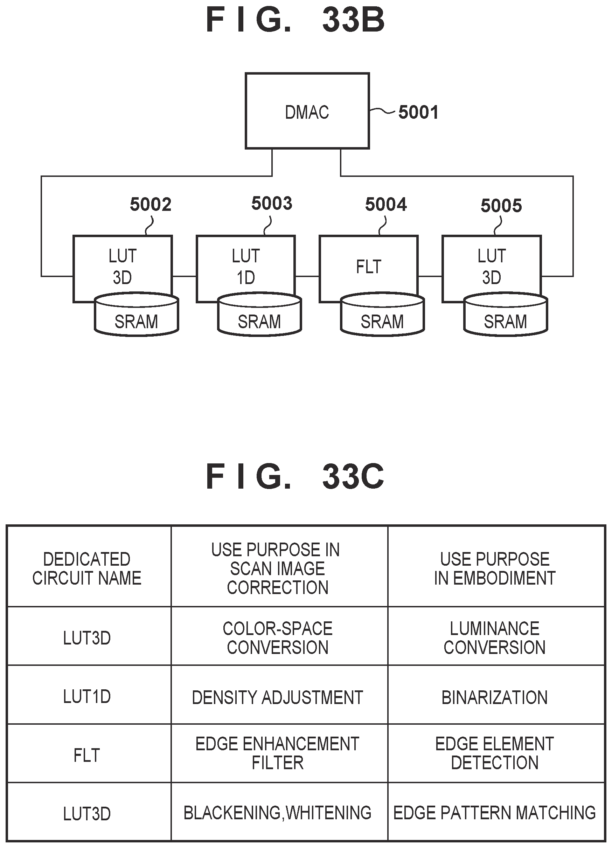

Fig. 33B is a schematic view of processing blocks of the dedicated circuit existing in the scan image correction unit 216. The scan image correction unit 216 acquires data from a RAM 207 via a DMAC 5001. DMAC is an abbreviation for Direct Memory Access Controller, and the scan image correction unit 216 can execute memory access without any instruction of the CPU. With the DMAC, it is possible to perform data transfer at a speed higher than the CPU without considering a CPU processing load. Data received by the scan image correction unit 216 includes image data acquired from a scanner 202 and processing data (for example, LookUpTable data and the like) to be stored in SRAMs in processing units of the DMAC 5001 to an LUT 3D 5005. The scan image correction unit 216 includes the four processing units. The LUT 3D 5002 is a lookup table for outputting an RGB three-dimensional output feature with respect to an RGB three-dimensional input feature. A scan image is scanner device-dependent color space information at the time of acquisition from the scanner 202, and is thus converted into standard color space information by the LUT 3D 5002. The LUT 1D 5003 is a lookup table for outputting one-dimensional output features of R, G, and B with respect to one-dimensional input features of R, G, and B, respectively. Based on a UI instruction from a user, the density of the acquired scan image is adjusted. Next, the FLT 5004 is a 5 × 5 filter for the RGB three-dimensional input feature. Although the data resolution of the scan image acquired from the scanner 202 is decided based on the scan resolution of the scanner and the arrangement resolution of a sensor, the reading accuracy of the sensor is not accurate, and thus the scan image is blurred. The FLT 5004 improves blurring by applying filter coefficients for sharpening the blurred image. The LUT 3D 5005 is a lookup table for outputting an RGB three-dimensional output feature with respect to an RGB three-dimensional input feature. Blackening/whitening processing of filling a darkest spot of a pixel value acquired from the scan image with black of (0, 0, 0) and making a brightest spot white of (255, 255, 255) is performed.

This processing shown in Fig. 33B is obtained by extracting a minimum necessary function in the scan image correction unit 216, and may include processing other than this. For example, an individual circuit for color misregistration correction or shading correction of the scanner may be mounted.

As shown in Fig. 33C, the individual dedicated circuit of the scan image correction unit 216 described with reference to Fig. 33B is used for the use purpose in this embodiment. Each process will be described in detail.

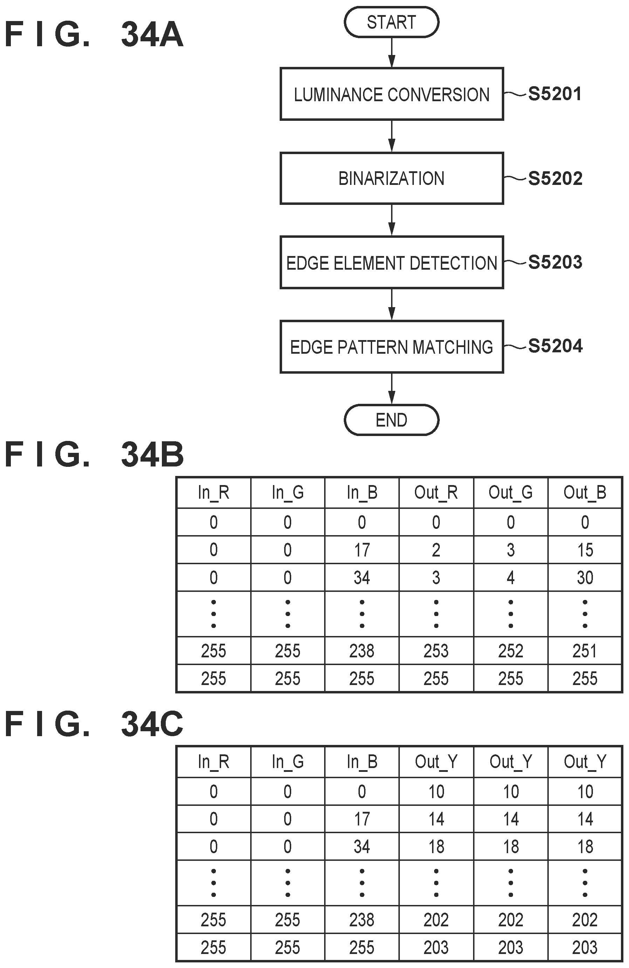

Fig. 34A is a flowchart of analysis processing according to this embodiment. This flowchart is an example of a method of implementing, by another configuration, the processing shown in Fig. 3B with which details of the image analysis processing of the first embodiment have been described.

In step S5201, a bitmap image as a decoding result is converted into luminance values using the LUT 3D 5002 in the scan image correction unit 216. Figs. 34B and 34C each show an example of information of the lookup table in the SRAM of the LUT 3D. Fig. 34B shows table information when used for scan image correction. Fig. 34B shows an example of a conversion table from a device color space at the time of acquisition from the scanner 202 into an sRGB color space as a standard color space. On the other hand, Fig. 34C shows table information in a case where luminance conversion is executed according to this embodiment. Fig. 34C shows an example of a conversion table from input information RGB of the bitmap image as the decoding result into luminance Y. For the sake of a description of this embodiment, the same luminance value information is designed for the three dimensions of the output but design can freely be performed within the design constraints (for example, the number of grids, an internal interpolation method, and the like) of the lookup table.

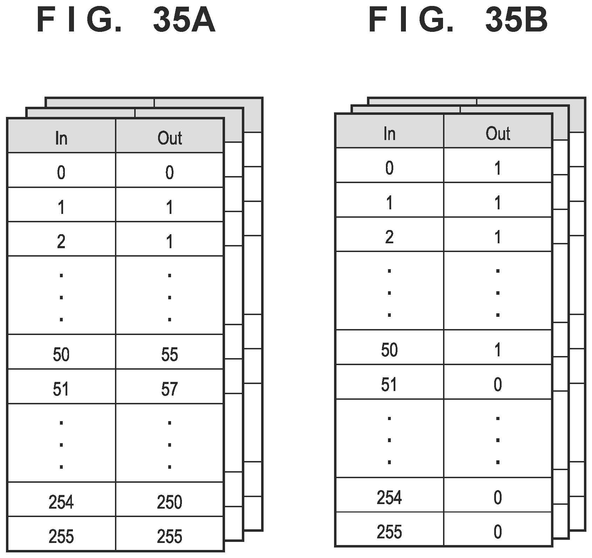

In step S5202, the information converted into the luminance is binarized using the LUT 1D 5003 in the scan image correction unit 216. In the first embodiment, binarization is executed by expression (1) using the threshold Th acquired in advance. In this embodiment, binarization is executed using the lookup table. Figs. 35A and 35B each show an example of information of the lookup table in the SRAM of the LUT 1D. Fig. 35A shows table information when used for scan image correction. Fig. 35A shows table information for leading desired density correction from each of pieces of RGB information of the standard color space. On the other hand, Fig. 35B shows an example of a conversion table in a case where binarization is executed according to this embodiment. In a case of a circuit specification in which interpolation is performed between grids in the lookup table, it is necessary to perform design so binary information in a design value does not become 3- or more-valued information by interpolation.

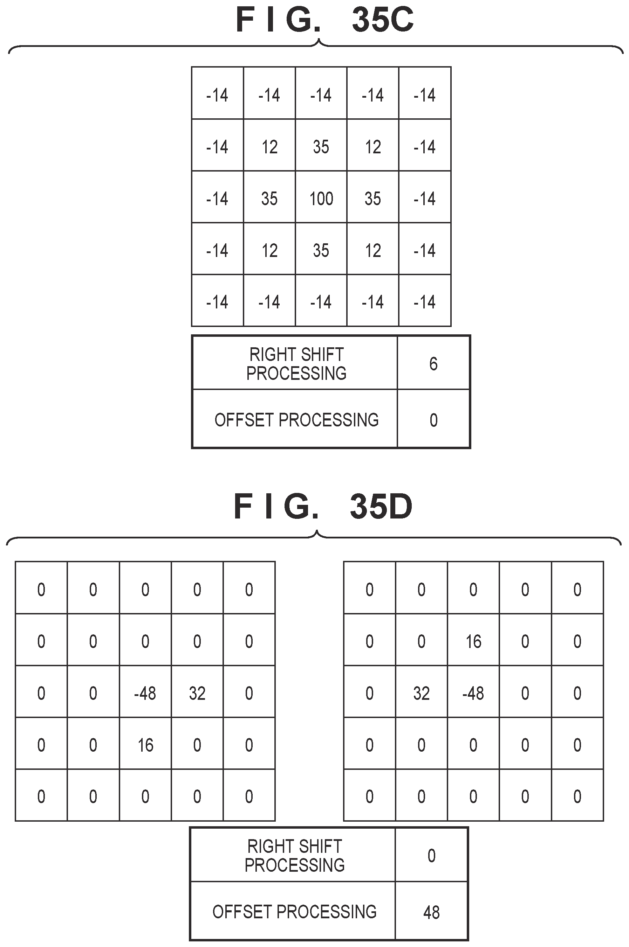

In step S5203, edge element detection is executed for the binary information using the FLT 5004 in the scan image correction unit 216. Figs. 35C and 35D each show an example of information of filter coefficients in the SRAM of the FLT. Fig. 35C shows filter coefficient information when used for scan image correction. A coefficient value is larger at a position closer to the center and the filter end portion can be designed to minus strength. In addition, shift processing or offset processing can be executed for a filter design result, thereby obtaining a desired filter result. Processing of clipping, among processing results, a result less than 0 to 0 is also included. The same filter coefficients are applied to each of RGB channels in scan image correction. Since if filter processing is applied to an isolated point or the like, the point may disappear or spread, isolated point detection processing may be executed in advance. On the other hand, in Fig. 35D, filter coefficients are designed in a case where edge element detection is executed according to this embodiment. As an example, this embodiment assumes a case where filter coefficients on the left side of Fig. 35D are applied to a given channel and filter coefficients on the right side of Fig. 35D are applied to another channel. A result obtained after filter processing is offset by +48. Each of filter application results shown in Fig. 35D corresponds to extraction of "edge elements".

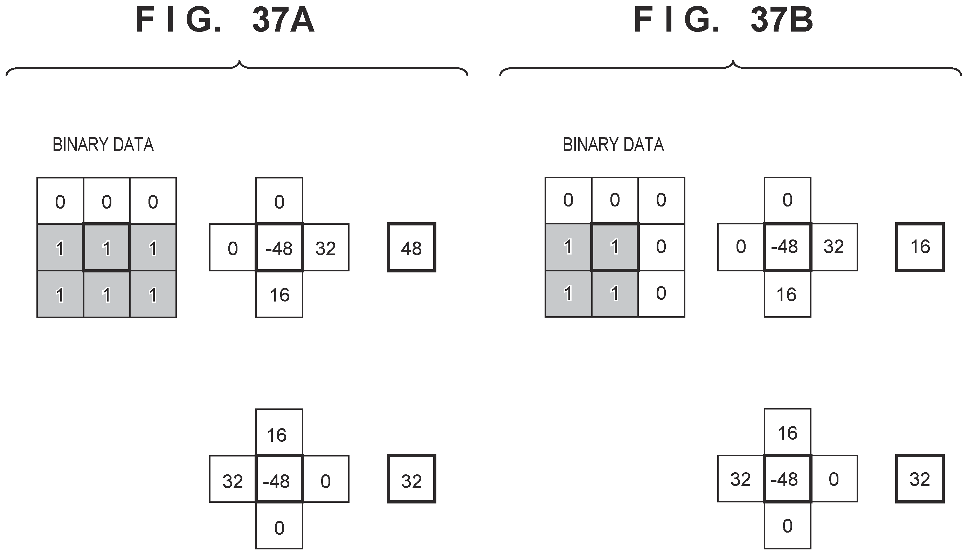

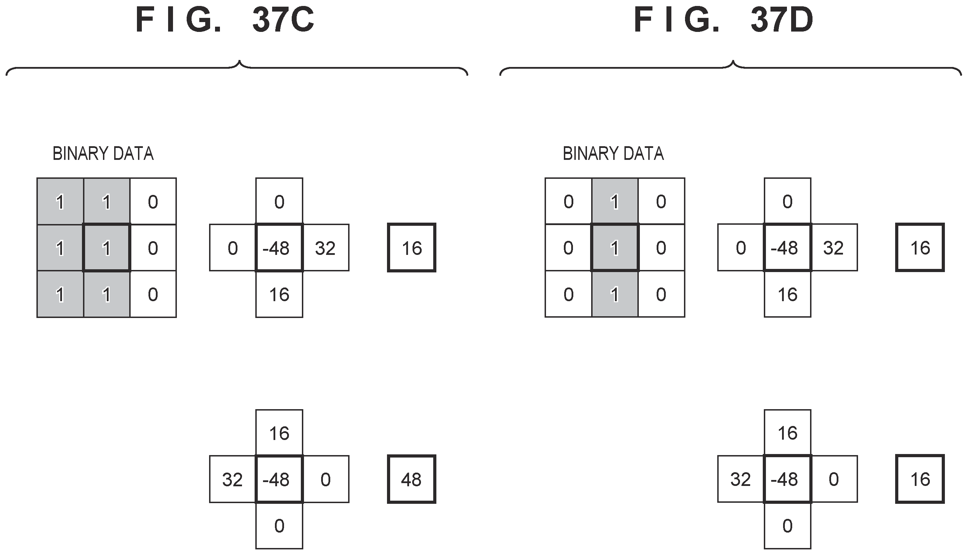

Figs. 37A to 37D show application examples of the filter. Since Fig. 35D shows an example in which a 3 × 3 region among the filter coefficients is effective, application examples will be described by focusing on a 3 × 3 region of binary data with reference to Figs. 37A to 37D. Figs. 37A to 37D each show a filter application result in a case where the feature of the 3 × 3 region of the binary data is different with respect to two kinds of fixed filters. Fig. 37A shows an example in a case where the target pixel is an edge pixel at the upper end. If the two filters shown in Fig. 35D are applied, application results are "48" and "32". Fig. 37B shows an example in a case where the target pixel is the upper right edge pixel. If the two filters shown in Fig. 35D are applied, application results are "16" and "32". In this way, it is found that the edge pixel at the upper end and the upper right edge pixel can be determined based on a difference between the filter results in Fig. 35D. Fig. 37C shows an example in a case where the target pixel is an edge pixel at the right end. If the two filters shown in Fig. 35D are applied, application results are "16" and "48". It is found that the edge pixel at the right end and the upper right edge pixel can be determined based on a difference between the filter results in Fig. 35D. Fig. 37D shows an example in a case where the target pixel is an edge pixel of a 1-dot line. If the two filters shown in Fig. 35D are applied, application results are "16" and "16". In this way, it is found that the edge pixel at the right end and the edge pixel of the 1-dot line can be determined based on a difference between the filter results in Fig. 35D. It is difficult to determine the edge shape of the target pixel only by the application results of the two filters but the application results can be pieces of element information that can be used in combination to determine the edge shape of the target pixel. Instead of verifying, by an individual pattern, pattern matching information to be acquired as in the first embodiment, it is possible to extract elements without departing from the functional specification of the FLT 5004 in scan image correction. Note that since it is assumed that the scan image correction unit 216 handles RGB information, edge element detection can be performed for luminance information using three filter coefficients. The two filters are used in this example, but three filter coefficients may be used to the extent that the existing circuit configuration is not changed. In this case, a filter can be designed to be able to estimate a more detailed edge shape. It is assumed here that the filter coefficients of the FLT 5004 have a 5 × 5 form. The amount of coefficients can be adjusted to the extent that the existing circuit configuration is not changed. In this embodiment as well, design is performed to use only a 3 × 3 region of the 5 × 5 form, but it is possible to perform more detailed determination using the 5 × 5 form. If design of a 7 × 7 form is possible for the FLT 5004, filter processing may be executed in a wider region than that of edge element detection.

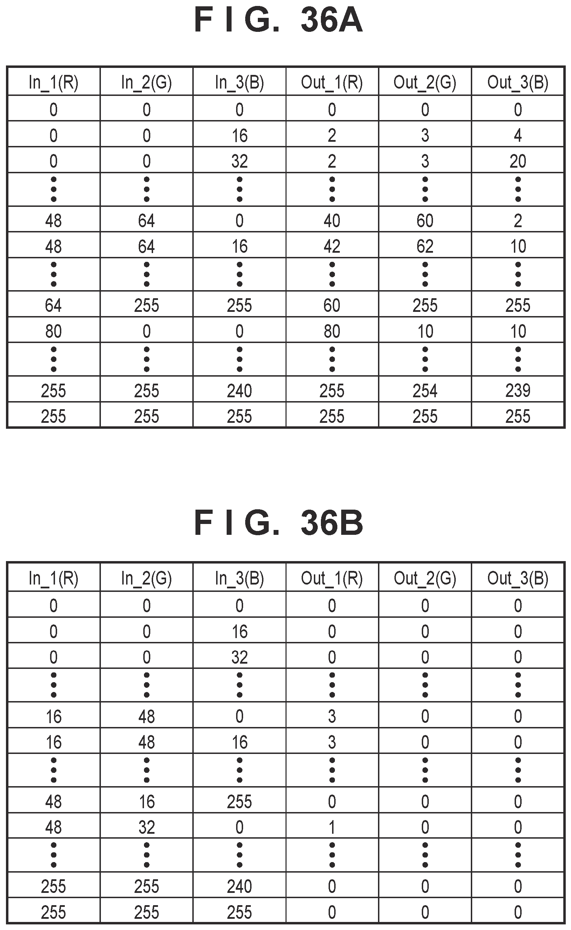

In step S5204, edge pattern matching is executed, using the LUT 3D 5005 in the scan image correction unit 216, for the information obtained after applying the filter. Figs. 36A to 36C each show an example of information of the lookup table in the SRAM of the LUT 3D. Fig. 36A shows table information when used for scan image correction. For blackening/whitening, design is performed so that a tone value close to an input value of 0 becomes closer to 0 and a tone value close to an input value of 255 becomes closer to 255. Fig. 36B shows an example of a table in a case where edge pattern matching is executed according to this embodiment. As an example, this table is designed to set nondetection = 0, upper detection = 1, lower detection = 2, right detection = 3, left detection = 4, and adjacent to edge = 5.

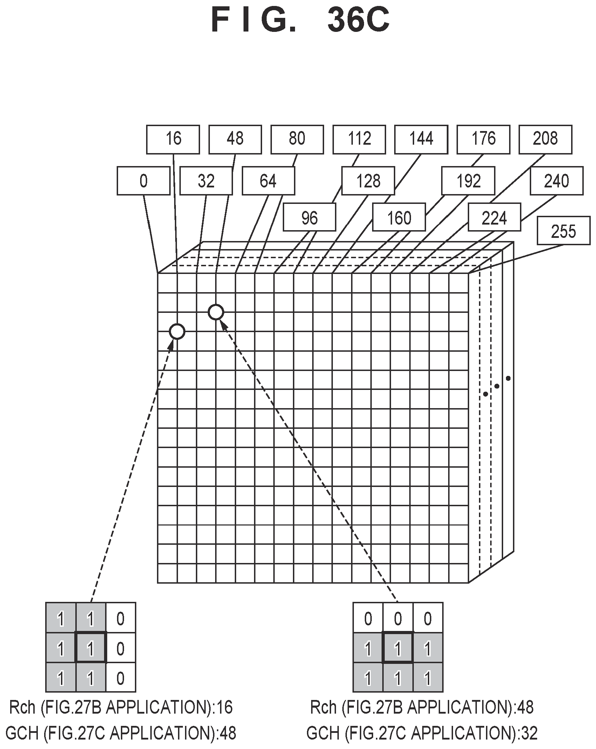

A viewpoint considered in design of the lookup table will be described with reference to Fig. 36C. Binary data is converted into edge elements by the FLT 5004. If the filter coefficients on the left side of Fig. 35D are applied to the information of the edge pixel at the right end, a result of "16" is obtained, and if the filter coefficients on the right side of Fig. 35D are applied to the information, a result of "48" is obtained. In the LUT 3D 5005, an output signal of a spot corresponding to a grid of Rch = 16 and Gch = 48 is set to "3", and then a pixel value after lookup table processing is output as 3. If the result of the FLT 5004 does not match the grid interval of the LUT 3D 5005, it is possible to cope with this by performing design to output the same value for all the adjacent grids to sandwich the result of the FLT 5004. In this embodiment, all the results of edge pattern matching are collected to the R channel. However, any channel may be set as an output destination, and the results may be distributed to the RGB channels.

In this embodiment, as an example, three filters and a lookup table having three input dimensions are used. However, the number of filters and the number of dimensions of the lookup table are not limited to them. Even if the number of filters is one and the setting values on the left side of Fig. 35D are applied, it is possible to discriminate, based on the application results of Figs. 37A, 37B, and 37C, whether the target pixel is an edge pixel at the upper end, the upper right edge pixel, or an edge pixel at the right end. As long as the dimensions the number of which is equal to or larger than the number of filters can be input to the lookup table, it is possible to perform pattern matching, as described above.

If it is possible to determine X types of edges using one filter and a one-dimensional lookup table, it is possible to determine X × X types of edges using two filters and a two-dimensional lookup table. Using M filters and an N-dimensional lookup table, it is possible to determine X^{Min(M, N)} types of edges. If edge types, the number of which is equal to that determined by two filters and two lookup tables, are to be determined using only filters, four filters are necessary. If edge types, the number of which is equal to that determined by three filters and three lookup tables, are to be determined using only filters, eight filters are necessary.

By combining multiple filters and a multi-dimensional lookup table as in this embodiment, it is possible to efficiently determine many types of edges with a smaller circuit scale. As compared with a case where only filters are used, as X (the number of edge types to be determined) in the above example is larger, the effect is larger.

When the number of filters or the number of dimensions of a lookup table increases, more kinds of patterns can be detected. In general, one to three filters are held as circuit resources to be used for scan image correction.

As described above, by using the dedicated circuit provided in the scan image correction unit 216, the same detection result as in the first embodiment can be generated. To transfer multi-valued data as a generated edge pattern matching result to the color separation/quantization unit 211 via the RAM 207, only the R channel can be transferred. As a result, a bandwidth is saved, as compared with transfer of all the RGB channels via the shared bus 215. Since three RGB channels are transferred to be input/output to/from the scan image correction unit 216 when executing copy processing in an image processing apparatus 100, it is possible to decrease a necessary transfer bandwidth in this embodiment, as compared with the copy processing. Therefore, from a viewpoint of a bandwidth, it may be possible to satisfy required performance without improving the circuit performance of the printer. Furthermore, when executing print processing via a host computer 201, if there is an existing mechanism of transferring one channel of attribute information in addition to the RGB channels, it is possible to reduce a new design operation on a data flow by the configuration of transferring only the R channel.

Since an analysis-dedicated circuit is required to implement the configuration of image analysis by satisfying a required speed according to the first embodiment, a cost and time are necessary to develop/produce a new circuit. In this embodiment, it is possible to implement dot thinning and arrangement control by using the configuration of the existing image processing apparatus. Therefore, it is possible to reduce the production cost of a new circuit. Since it is possible to immediately improve image quality in the market, user satisfactory is improved, feedback from the user can be received quickly, and thus the requirements of element development can be found early.

Scan image correction according to this embodiment is used not only in a use case of copy processing but also in a use case of scan processing. An image acquired by the scanner 202 is corrected by the scan image correction unit 216, and then transferred to a memory card or the like connected to the host computer 201 or the image processing apparatus 100. This embodiment describes a configuration in which the existing circuit used in scan processing and copy processing is used for image analysis. On the other hand, since the existing circuit is assumed to be used for scan image correction, when simultaneously executing scan processing or copy processing and print processing, the same circuit may be used at the same timing, that is, "circuit contention" may occur. Therefore, a product specification is set to obtain an exclusive relation between use cases, or the circuit is time-divisionally used. In the latter case, an exclusive relation between use cases is not obtained but the circuit resources are shared in a fine time unit, and thus a long processing time tends to be required.

This embodiment has explained a processing overview of scan image correction but this is merely an example. If there exists another function already implemented by a dedicated circuit as scan image correction, this can be used for image analysis processing. Another existing circuit present in the image processing apparatus 100 can also be used. As described above, if an existing circuit used within a use case is used, special control is also executed to time-divisionally use the existing circuit for image analysis and another processing. Note that the implemented circuit and setting values described in this embodiment are merely examples, and the present invention is not limited to them.

### (Other Embodiments)

Each of the above-described embodiments has explained a serial-type image processing apparatus but the present invention is not limited to this as long as the characteristic and configuration are the same. A line-type printhead may be used or a serial-type apparatuses may be arranged vertically. Furthermore, each of the above-described embodiments has explained an inkjet printer but the present invention is not limited to this as long as the characteristic and configuration are the same. For example, a laser printer using toner or a copying machine may be adopted.

Each of the above-described embodiments has explained a bitmap data area or the like as an area in a RAM but the present invention is not limited to this and any rewritable storage device may be used. For example, an HDD or an Embedded Multi Media Card (eMMC) separated from the RAM may be provided, and an entire data area or part of it may be arranged in a memory area of the HDD or eMMC.

Furthermore, each of the above-described embodiments has explained an example of performing conversion into 3-valued data in quantization of density value data but the present invention is not limited to this as long as the characteristic and configuration are the same. The density value data may be converted into binary data or 4- or more-valued data. Each of the above-described embodiments assumes that the printhead includes the Ev nozzles and the Od nozzles but the present invention is not limited to this as long as the characteristic and configuration are the same. In the above-described embodiments, when executing printing at a high resolution in the Y direction, as compared with image data to undergo edge detection, if nozzles are arrayed at a high resolution, as compared with the image data to undergo edge detection, each embodiment is applicable.

Each of the above-described embodiments has explained that image processing including edge processing is executed in the image forming apparatus 10 but the present invention is not limited to this as long as the characteristic and configuration are the same. More specifically, part or all of the image processing including the edge processing may be performed by an apparatus outside the image forming apparatus 10, and then subsequent processing may be performed in the image forming apparatus 10 based on the processing result.

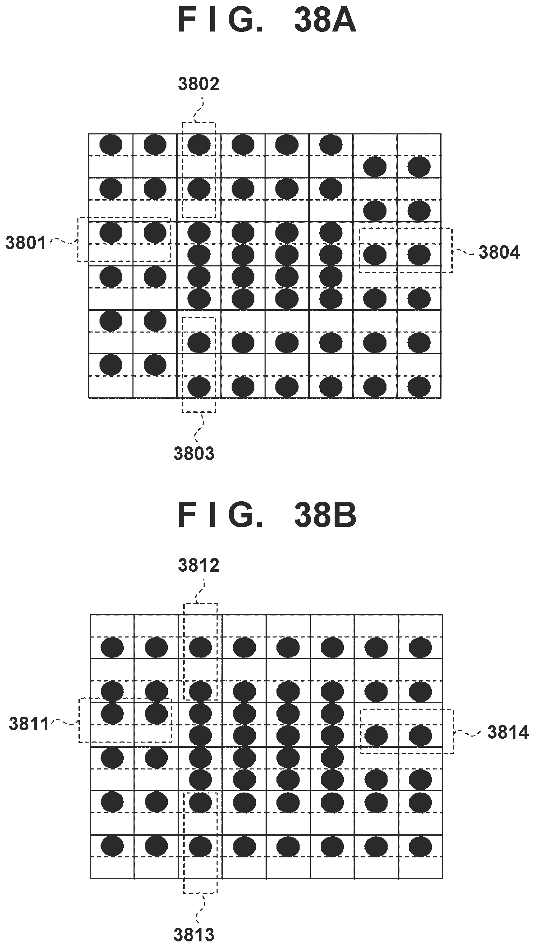

Each of the above-described embodiments assumes that the width of edge pixels is one pixel but the present invention is not limited to this as long as the characteristic and configuration are the same. End pixels and its one or more adjacent pixels on the non-end portion sides (inner sides) may collectively be defined as an end pixel group, and the image analysis unit 210 may detect, in step S303, each of an upper end pixel group, a lower end pixel group, a left end pixel group, and a right end pixel group, and then perform dot thinning in subsequent processing. Figs. 38A and 38B are views each showing examples of the end pixel groups. An end pixel group 3801 or 3811 represents a left end pixel group, an end pixel group 3802 or 3812 represents an upper end pixel group, an end pixel group 3803 or 3813 represents a lower end pixel group, and an end pixel group 3804 or 3814 represents a right end pixel group. By applying the operation of each embodiment to an end pixel group, it is possible to effectively reduce line thickening.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
This application is a divisional application of European patent application no. 24 193 542.8 (the "parent application"), also published as EP 4 507 288. Based on the original claims of the parent application, the following aspects form part of the content of this divisional application as filed.
1. An image processing apparatus comprising:
   print means configured to be able to print dots at a resolution higher than a resolution of image data;
   quantization means configured to perform quantization processing based on image data including an object; and
   dot arrangement means configured to perform processing of arranging a dot in a pixel using a dot arrangement pattern corresponding to a quantization value having undergone the quantization processing,
   wherein the print means includes first print means configured to be able to print a dot in a first region of each pixel of the object, and second print means configured to be able to print a dot in a second region of each pixel of the object, and
   as a result of the processing by the dot arrangement means, in first edge pixels in a first edge portion of the object, a ratio of arranging dots in the second regions is lower than a ratio of arranging dots in the first regions, and in second edge pixels in a second edge portion different from the first edge portion of the object, a ratio of arranging dots in the first regions is lower than a ratio of arranging dots in the second regions.
2. The apparatus according to aspect 1, wherein the quantization means performs the quantization processing so that the quantization value is made different between the first edge pixel in the first edge portion of the object and the second edge pixel in the second edge portion different from the first edge portion with respect to each of image data corresponding to the first print means and image data corresponding to the second print means.
3. The apparatus according to aspect 2, wherein
   the quantization means makes the quantization value applied to the first edge pixel with respect to the image data corresponding to the first print means different from the quantization value applied to the first edge pixel with respect to the image data corresponding to the second print means, and
   the quantization means makes the quantization value applied to the second edge pixel with respect to the image data corresponding to the first print means different from the quantization value applied to the second edge pixel with respect to the image data corresponding to the second print means.
4. The apparatus according to aspect 3, wherein
   the quantization means applies a first quantization value to the first edge pixel and a second quantization value to the second edge pixel with respect to the image data corresponding to the first print means, and
   the quantization means applies the second quantization value to the first edge pixel and the first quantization value to the second edge pixel with respect to the image data corresponding to the second print means.
5. The apparatus according to any one of aspects 1 to 3, wherein in the first edge portion, dots are uniformly arranged in the first regions.
6. The apparatus according to aspect 5, wherein in the first edge portion, no dots are arranged in the second regions.
7. The apparatus according to aspect 5 or 6, wherein in the second edge portion, dots are uniformly arranged in the second regions.
8. The apparatus according to aspect 7, wherein in the second edge portion, no dots are arranged in the first regions.
9. The apparatus according to aspect 1, further comprising change means configured to change a tone value of each of the first edge pixel and the second edge pixel.
10. The apparatus according to aspect 9, wherein in a case where the change means changes the tone value, dots are not arranged in some of the first regions in the first edge portion.
11. The apparatus according to aspect 9, wherein in a case where the change means changes the tone value, dots are arranged in some of the second regions in the first edge portion.
12. The apparatus according to aspect 9, wherein in a case where the change means changes the tone value, dots are not arranged in some of the second regions in the second edge portion.
13. The apparatus according to aspect 9, wherein in a case where the change means changes the tone value, dots are arranged in some of the first regions in the second edge portion.
14. The apparatus according to aspect 1, wherein the dot arrangement pattern is determined so dots are not arranged in some of the first regions in the first edge portion.
15. The apparatus according to aspect 1, wherein the dot arrangement pattern is determined so that dots are arranged in some of the second regions in the first edge portion.
16. The apparatus according to aspect 1, wherein the dot arrangement pattern is determined so dots are not arranged in some of the second regions in the second edge portion.
17. The apparatus according to aspect 1, wherein the dot arrangement pattern is determined so that dots are arranged in some of the first regions in the second edge portion.
18. The apparatus according to any one of aspects 1 to 17, wherein the first edge portion and the second edge portion are one side of the object and another side different from the one side.
19. The apparatus according to any one of aspects 1 to 18, wherein the object is an object having a predetermined pixel width.
20. The apparatus according to aspect 19, wherein the object is a line.
21. The apparatus according to aspect 19, wherein the object is a solid.
22. The apparatus according to any one of aspects 19 to 21, wherein in a case where the object is an object having no predetermined pixel width, the quantization means sets the quantization value of at least one of the first edge pixel and the second edge pixel as a quantization value of a pixel in a portion other than an edge portion of the object.
23. The apparatus according to any one of aspects 1 to 22, further comprising detection means configured to detect the first edge pixels and the second edge pixels from the image data.
24. The apparatus according to aspect 23, wherein the detection means detects the first edge pixels and the second edge pixels using pattern matching.
25. The apparatus according to aspect 24, wherein the detection means performs detection by an arrangement for correcting a scan image.
26. The apparatus according to any one of aspects 1 to 25, further comprising color separation means configured to perform color separation processing based on the image data,
   wherein the quantization processing by the quantization means and the processing by the dot arrangement means are performed for a predetermined color having undergone the color separation processing.
27. The apparatus according to aspect 26, wherein the predetermined color is black.
28. The apparatus according to any one of aspects 1 to 27, wherein the object is an intermediate-density object.
29. The apparatus according to any one of aspects 1 to 28, wherein a first nozzle array provided in the first print means is arranged by being shifted by a half pitch in a nozzle array direction with respect to a second nozzle array provided in the second print means, the first region corresponds to the first nozzle array, and the second region corresponds to the second nozzle array.
30. The apparatus according to aspect 29, wherein the first region and the second region are arranged in an array direction of the first nozzle array provided in the first print means and the second nozzle array provided in the second print means.
31. The apparatus according to aspect 29, wherein the first region and the second region are arranged in a direction orthogonal to an array direction of the first nozzle array provided in the first print means and the second nozzle array provided in the second print means.
32. The apparatus according to aspect 29, wherein
   the print means can print dots in a third region and a fourth region of each pixel of the object,
   the third region and the fourth region are arranged in the array direction, the third region is arranged beside the first region in a direction orthogonal to the array direction, and the fourth region is arranged beside the second region in the direction orthogonal to the array direction,
   as a result of the processing by the dot arrangement means, in the first edge pixels in the first edge portion, a ratio of arranging dots in the second regions and the fourth regions is lower than a ratio of arranging dots in the first regions and the third regions, and in the second edge pixels in the second edge portion, a ratio of arranging dots in the first regions and the third regions is lower than a ratio of arranging dots in the second regions and the fourth regions, and
   as a result of the processing by the dot arrangement means, in third edge pixels in a third edge portion different from the first edge portion and the second edge portion, a ratio of arranging dots in the third regions and the fourth regions is lower than a ratio of arranging dots in the first regions and the second regions, and in fourth edge pixels in a fourth edge portion different from the first edge portion, the second edge portion, and the third edge portion, a ratio of arranging dots in the first regions and the second regions is lower than a ratio of arranging dots in the third regions and the fourth regions.
33. The apparatus according to any one of aspects 1 to 32, wherein as a result of the processing by the dot arrangement means, in each of the first edge portion and the second edge portion, a ratio of arranging dots on an inner side of the object is lower than a ratio of arranging dots on an end portion side of the object.
34. The apparatus according to any one of aspects 1 to 32, wherein as a result of the processing by the dot arrangement means, in each of the first edge portion and the second edge portion, a ratio of arranging dots on an end portion side of the object is lower than a ratio of arranging dots on an inner side of the object.
35. A method executed by an image processing apparatus, comprising:
   performing quantization processing based on image data including an object; and
   performing processing of arranging a dot in a pixel using a dot arrangement pattern corresponding to a quantization value having undergone the quantization processing,
   wherein a print unit provided in the image processing apparatus and configured to be able to print dots at a resolution higher than a resolution of image data includes a first print unit configured to be able to print a dot in a first region of each pixel of the object, and a second print unit configured to be able to print a dot in a second region of each pixel of the object, and
   as a result of the processing in the dot arrangement, in first edge pixels in a first edge portion of the object, a ratio of arranging dots in the second regions is lower than a ratio of arranging dots in the first regions, and in second edge pixels in a second edge portion different from the first edge portion of the object, a ratio of arranging dots in the first regions is lower than a ratio of arranging dots in the second regions.
36. A program causing a computer to function to:
   perform quantization processing based on image data including an object; and
   perform processing of arranging a dot in a pixel using a dot arrangement pattern corresponding to a quantization value having undergone the quantization processing
   wherein a print unit configured to be able to print dots at a resolution higher than a resolution of image data includes a first print unit configured to be able to print a dot in a first region of each pixel of the object, and a second print unit configured to be able to print a dot in a second region of each pixel of the object, and
   as a result of the processing in the dot arrangement, in first edge pixels in a first edge portion of the object, a ratio of arranging dots in the second regions is lower than a ratio of arranging dots in the first regions, and in second edge pixels in a second edge portion different from the first edge portion of the object, a ratio of arranging dots in the first regions is lower than a ratio of arranging dots in the second regions.
37. A non-transitory computer-readable storage medium storing a program causing a computer to function to:
   perform quantization processing based on image data including an object; and
   perform processing of arranging a dot in a pixel using a dot arrangement pattern corresponding to a quantization value having undergone the quantization processing
   wherein a print unit configured to be able to print dots at a resolution higher than a resolution of image data includes a first print unit configured to be able to print a dot in a first region of each pixel of the object, and a second print unit configured to be able to print a dot in a second region of each pixel of the object, and
   as a result of the processing in the dot arrangement, in first edge pixels in a first edge portion of the object, a ratio of arranging dots in the second regions is lower than a ratio of arranging dots in the first regions, and in second edge pixels in a second edge portion different from the first edge portion of the object, a ratio of arranging dots in the first regions is lower than a ratio of arranging dots in the second regions.
38. An image processing apparatus comprising:
   acquisition means configured to acquire image data including an object;
   detection means configured to detect, from the image data acquired by the acquisition means, first edge pixels in a first edge portion of the object and second edge pixels in a second edge portion different from the first edge portion; and
   print means configured to be able to print dots at a resolution higher than a resolution of the image data acquired by the acquisition means,
   wherein the print means includes a first print means configured to be able to print a dot in a first region of each pixel of the object, and a second print means configured to be able to print a dot in a second region of each pixel of the object,
   the detection means detects the first edge pixels and the second edge pixels by pattern matching by using a filter and a lookup table, and
   each of the first edge pixel and the second edge pixel is detected in at least one of a nozzle array direction of the print means and a scanning direction of the print means different from the nozzle array direction.

## Claims

1. An image processing apparatus comprising:
print means configured to print dots on a printing medium;
detection means configured to detect, in an object included in image data, a first edge portion and a second edge portion facing the first edge portion with an inner region interposed therebetween in a predetermined direction; and
control means configured to control the print means based on a detection result of the detection means and the image data,
wherein each pixel of the image data is divided, in the predetermined direction, into a first region and a second region,
wherein the control means is configured to control the print means such that:
for pixels constituting the first edge portion, a number of pixels in which dots are printed in the second region which is closer to the inner region, is smaller than a number of pixels in which dots are printed in the first region which is farther from the inner region than the second region; and
for pixels constituting the second edge portion, a number of pixels in which dots are printed in the first region which is closer to the inner region, is smaller than a number of pixels in which dots are printed in the second region which is farther from the inner region than the first region.

2. The image processing apparatus according to claim 1, wherein the first edge portion is constituted by upper-edge pixels, and the second edge portion is constituted by lower-edge pixels.

3. The image processing apparatus according to claim 1, wherein, for each pixel, the first region is an upper-half region, and the second region is a lower-half region.

4. The image processing apparatus according to claim 3, wherein dots are printed in the first region of each pixel constituting the first edge portion, no dots are printed in the second region of each pixel constituting the first edge portion, dots are printed in the second region of each pixel constituting the second edge portion, and no dots are printed in the first region of each pixel constituting the second edge portion.

5. The image processing apparatus according to claim 1, wherein the print means comprises a first print means configured to print dots in the first region of each pixel of the object, and a second print means configured to print dots in the second region of each pixel of the object.

6. The image processing apparatus according to claim 5, wherein the first print means is a first nozzle row, and the second print means is a second nozzle row arranged shifted by half a pitch relative to the first nozzle row.

7. The image processing apparatus according to claim 6, wherein ink of the same color is discharged from the first nozzle row and the second nozzle row.

8. The image processing apparatus according to claim 6, wherein ink is supplied to the first nozzle row and the second nozzle row from a common liquid chamber.

9. The image processing apparatus according to claim 6, wherein each nozzle of the first nozzle row and each nozzle of the second nozzle row includes a heater configured to generate heat when a voltage is applied thereto.

10. The image processing apparatus according to claim 1, wherein the first edge portion includes an upper-right pixel located at an upper end and a right end of the object, and the second edge portion includes a lower-left pixel located at a left end and a lower end of the object.

11. The image processing apparatus according to claim 1, wherein the first edge portion is constituted by left-edge pixels, and the second edge portion is constituted by right-edge pixels.

12. The image processing apparatus according to claim 11, wherein, for each pixel, the first region is an upper-half region, and the second region is a lower-half region.

13. The image processing apparatus according to claim 12, wherein dots are printed in the first region of each pixel constituting the first edge portion, no dots are printed in the second region of each pixel constituting the first edge portion, dots are printed in the second region of each pixel constituting the second edge portion, and no dots are printed in the first region of each pixel constituting the second edge portion.

14. The image processing apparatus according to claim 1, wherein the print means is capable of printing at a resolution higher than a resolution of the image data.

15. The image processing apparatus according to claim 1, further comprising quantization means configured to quantize a pixel value of each pixel based on the detection result of the detection means and the image data.

16. The image processing apparatus according to claim 1, wherein the dots printed by the print means are black dots.

17. The image processing apparatus according to claim 1, wherein the detection means is configured to detect the first edge portion and the second edge portion by using pattern matching.

18. The image processing apparatus according to claim 1, wherein a direction of printing scanning by the print means intersects a direction in which the printing medium is conveyed.

19. An image processing method comprising:
detecting, in an object included in image data, a first edge portion and a second edge portion facing the first edge portion with an inner region interposed therebetween in a predetermined direction; and
controlling, based on a detection result and the image data, print means configured to print dots on a printing medium,
wherein each pixel of the image data is divided, in the predetermined direction, into a first region and a second region, and
wherein the controlling includes controlling the print means such that:
for pixels constituting the first edge portion, a number of pixels in which dots are printed in the second region which is closer to the inner region, is smaller than a number of pixels in which dots are printed in the first region which is farther from the inner region than the second region; and
for pixels constituting the second edge portion, a number of pixels in which dots are printed in the first region which is closer to the inner region, is smaller than a number of pixels in which dots are printed in the second region which is farther from the inner region than the first region.
